# EUROPEAN PATENT SPECIFICATION

(11) **EP 1 579 412 B1**
(45) Date of publication and mention of the grant of the patent: **12.09.2007**
(21) Application number: 03814216.2
(22) Date of filing: 19.12.2003
(51) Int. Cl.: B60R 1/12

(54) **ACCESSORY SYSTEM FOR VEHICLE**
HILFSEINRICHTUNGSSYSTEM FÜR FAHRZEUGE
SYSTEME D'ACCESSOIRE POUR VEHICULE

(30) Priority: 20.12.2002 US 435554 P; 13.01.2003 US 439626 P; 24.07.2003 US 489812 P; 01.08.2003 US 492225 P
(43) Date of publication of application: 28.09.2005
(73) Proprietor: DONNELLY CORPORATION, Holland, Michigan 49423 (US)
(72) Inventor: HUTZEL, Barry, W., Holland, MI 49424 (US); TAYLOR, David, W., Fenton, MI 48430 (US); SCHOFIELD, Kenneth, Holland, MI 49423 (US); WHITEHEAD, Peter, J., Holland, MI 49424 (US); DEWIND, Darryl, P., Holland, MI 49424 (US); WEBER, Richard, J., Grand Haven, MI 49417 (US); LYNAM, Niall, R., Holland, MI 49424 (US)
(74) Representative: O'Neill, Brian
(86) International application number: PCT/US2003/040611
(87) International publication number: WO 2004/058540

(56) References cited:
- FR-A- 2 759 045
- US-A- 5 432 496
- US-A- 6 082 881
- US-A1- 2001 003 439
- US-A1- 2002 154 007
- US-B1- 6 420 975
- US-B1- 6 428 172

## Description

### FIELD OF THE INVENTION

The present invention relates generally to the field of interior rearview mirror systems for vehicles and, more particularly, to interior rearview mirror systems which incorporate a video display screen.

### BACKGROUND OF THE INVENTION

It is known to provide a video display screen at an interior rearview mirror assembly of a vehicle, such as, for example, a video display screen of the type disclosed in U.S. Pat. No. 6,428,172 for REARVIEW MIRROR ASSEMBLY WITH UTILITY FUNCTIONS, and U.S. Pat. No. 6,175,300 for BLIND SPOT VIEWING SYSTEM. It has also been suggested to provide a mirror or a display which may be indexed in and out of a mirror case, such as from the bottom of the mirror case, such as also disclosed in U.S. Pat. No. 6,428,172.

It is also known to provide overhead consoles at a roof region of a vehicle. The consoles may include some accessories at the forward region of the vehicle. Such consoles are typically connected to a vehicle wiring system to provide control or power to other accessories, such as lights or the like.

Drivers of vehicles, particularly larger vehicles, such as sport utility vehicles (SUVs) and the like, may be faced with a reduced or obstructed field of vision toward the rear and rearward of the vehicle as more objects, such as headrests and entertainment video screens, may block or obstruct a driver's rearward view, whether the driver uses the rearview mirror or even if the driver turns around to generally face the rear window of the vehicle. Larger SUVs may have even less visibility to the immediate rear of the vehicle. Various backup aids have been proposed to provide a display of an image of the exterior scene rearward of the vehicle for viewing by the driver. An interior rear view mirror system showing all features of the preamble of claim 1 is known from US 2002/0154007176.

### SUMMARY OF THE INVENTION

The object of the present invention is to provide an interior rearview mirror system that increases the safety of the vehicle operation.

The present invention also provides an interior rearview mirror system according to claim 1.

According to the present invention, an interior rearview mirror system for a vehicle comprises a casing, a reflective,element, such as positioned at a bezel portion of the casing, and a video display screen slidably mounted at the casing. The video display screen is slidable in a direction generally parallel to a length axis of the reflective element between a retracted, non-use position, wherein the video display screen is positioned substantially within the casing, and an extended, use position, wherein the video display screen is substantially extended from a side of the casing for viewing by an occupant of the vehicle.

The video display screen may be mounted to at least one sliding member which is slidable relative to the casing. The sliding member or members may be slidable along or within a sliding block mounted within the casing. Optionally, the video display screen may be slidable along at least one rail or track or guide positioned within the casing. Optionally the video display screen may be pivotable about a pivot joint or knuckle joint when extended to the use position.

The video display screen is automatically extended or retracted (by a motorized action). The display screen is automatically extended in response to a signal indicative of an activating event, such as an engagement of the reverse gear of the vehicle, actuation of a backup aid device or system or other reverse viewing or imaging device or system, actuation of a cabin viewing device or system, such as a baby viewing or rear seat viewing device or system or the like, actuation of a video communication device or system, actuation of a navigation system of the vehicle and/or approach of a waypoint of a programmed route of the navigation system and/or the like. The video display screen may also be manually pushed or retracted to the non-use position or may be automatically retracted in response to a signal indicative of a deactivating event, such as an actuation of a manual or user input, a curing or completion of the activating event or condition, a disengagement of the reverse gear of the vehicle, deactivation of a backup aid device or system or other reverse viewing or imaging device or system, deactivation of a cabin viewing device or system, such as a baby viewing or rear seat viewing device or system or the like, deactivation of a video communication device or system, deactivation of a navigation system of the vehicle and/or passing of the waypoint of the programmed route and/or the like.

The mirror assembly may be mounted at a windshield of the vehicle or at an overhead accessory console or accessory module of the vehicle.

The present invention also provides a video display screen which is extendable from a side of a mirror casing for viewing by an occupant of a vehicle. The video display screen may be positioned substantially within the casing when not in use, and may be extended substantially outward from the casing toward the driver or passenger side of the vehicle when viewing of the video display screen is desired. By slidably positioning the video display screen within the mirror casing, the present invention provides for a large video display screen to enhance viewing of the images displayed thereon by the driver or other occupant of the vehicle, while having a minimal affect on the size of the casing. The casing is formed to be wide enough to receive the video display screen therein, with the casing being at least as wide as the height dimension of the video display screen.

These and other objects, advantages, purposes and features of the present invention will become apparent upon review of the following specification in conjunction with the drawings.

### BRIEF DESCRIPTION OF THE DRAWINGS

FIG. 1 is a front perspective view of an interior rearview mirror assembly in accordance with the present invention, with a video display screen in its retracted position;
FIG. 2 is another front perspective view of the interior rearview mirror assembly of FIG. 1, with the video display screen in its extended position;
FIG. 3 is another front perspective view of the interior rearview mirror assembly of FIGS. 1 and 2, with the video display screen in its extended position;
FIG. 4 is a rear perspective view of the interior rearview mirror assembly, with the video display screen in its retracted position;
FIG. 5 is another rear perspective view similar to FIG. 4, with the video display screen in its extended position;
FIG. 6 is a front elevation of an interior rearview mirror assembly in accordance with the present invention, with the video display screen in its retracted position;
FIG. 7 is a front elevation of the interior rearview mirror assembly of FIG. 6, with the video display screen in its extended position;
FIG. 8 is rear elevation of the interior rearview mirror assembly of FIGS. 6 and 7, with the video display screen partially extended;
FIG. 9 is a plan view of the interior rearview mirror assembly of FIGS. 6-8, with the video display screen partially extended;
FIG. 10 is a front elevation of the interior rearview mirror assembly of FIGS. 6-9, with the video display screen in its retracted position and with the reflective element and bezel portion partially removed to show additional details;
FIG. 11 is a front elevation of the interior rearview mirror assembly of FIGS. 6-10, with the video display screen partially extended and with the reflective element and bezel portion partially removed to show additional details;
FIG. 12 is a rear perspective view of a video display screen actuator in accordance with the present invention;
FIG. 13 is an end elevation of the video display screen actuator of FIG. 12;
FIGS. 14A and 14B are perspective views of another interior rearview mirror assembly incorporating a video display screen not being in accordance with the present invention;
FIGS. 15A and 15B are perspective views of another interior rearview mirror assembly incorporating a video display screen not being in accordance with the present invention;
FIGS. 16A-C are perspective views of another interior rearview mirror assembly incorporating a video display screen not being in accordance with the present invention;
FIG. 17 is a perspective view of another interior rearview mirror assembly in accordance with the present invention, with the mirror assembly mounted to an overhead accessory system or module;
FIG. 18 is another perspective view of the interior rearview mirror assembly and overhead accessory system of FIG. 17;
FIG. 19 is a perspective view of an overhead accessory system having multiple integrated cross car console modules ;
FIG. 20 is a perspective view of another interior rearview mirror assembly and overhead accessory system, with the video display screen in its extended position;
FIG. 21 is a side elevation of the interior rearview mirror assembly and overhead accessory system of FIG. 20;
FIG. 22 is a rear perspective view of the interior rearview mirror assembly and overhead accessory system of FIGS. 20 and 21;
FIG. 23 is a front perspective view of another interior rearview mirror assembly and overhead accessory system;
FIG. 24 is a perspective view of another interior rearview mirror assembly and overhead console or accessory system;
FIG. 25 is a side elevation and partial sectional view of the interior rearview mirror assembly and overhead console of FIG. 24;
FIG. 26 is a side elevation and partial sectional view similar to FIG. 25, showing a large ball and socket connection of the mirror assembly to the overhead console;
FIG. 27 is a front perspective view of another overhead accessory system;
FIG. 28 is a plan view of a vehicle incorporating the overhead accessory system of FIG. 27, with an enlarged schematic of the sub-modules associated with the overhead accessory system;
FIG. 29 is a sectional view of the overhead accessory system taken along the line XXIX-XXIX in FIG. 27;
FIG. 30 is a perspective view of a sub-module for the overhead accessory system of FIGS. 27-29;
FIG. 31 is a schematic of the wiring of the overhead accessory system of FIGS. 27-30;
FIG. 32 is a side elevation and partial sectional view of a modular overhead accessory system;
FIG. 33 is a plan view of the modular overhead accessory system of FIG. 32;
FIG. 34 is a side elevation and partial sectional view of another modular overhead accessory system ;
FIG. 35 is an enlarged sectional view of the trim strip around the modular overhead accessory system of FIG. 34;
FIG. 36 is a side elevation and partial sectional view of another modular overhead accessory system ;
FIG. 37 is a plan view of the modular overhead accessory system of FIG. 36;
FIG. 38 is a perspective view of an accessory module for receiving a cellular phone;
FIG. 39 is a forward facing view of the accessory module of FIG. 38, with a phone received in the module;
FIG. 40 is a perspective view of the accessory module of FIGS. 38 and 39, with an interior rearview mirror assembly installed adjacent to the accessory module;
FIG. 41 is another perspective view of the accessory module and interior rearview mirror assembly of FIG. 40;
FIG. 42 is a plan view of a vehicle incorporating a rear imaging system;
FIG. 43 is a perspective view of a flip down video screen module suitable for use with the overhead accessory system;
FIG. 44A is a top plan view of a dual screen video screen module suitable for use with the overhead accessory system;
FIG. 44B is a front elevation of the dual screen video screen module of FIG. 44A, showing a forward facing video screen for viewing by the driver of the vehicle;
FIG. 44C is a side elevation of the dual screen video screen module of FIGS. 44A and 44B; and
FIG. 44D is a rear elevation of the dual screen video screen module of FIGS. 44A-C, showing a rearward facing video screen for viewing by the rear passengers of the vehicle.

### DESCRIPTION OF THE PREFERRED EMBODIMENTS

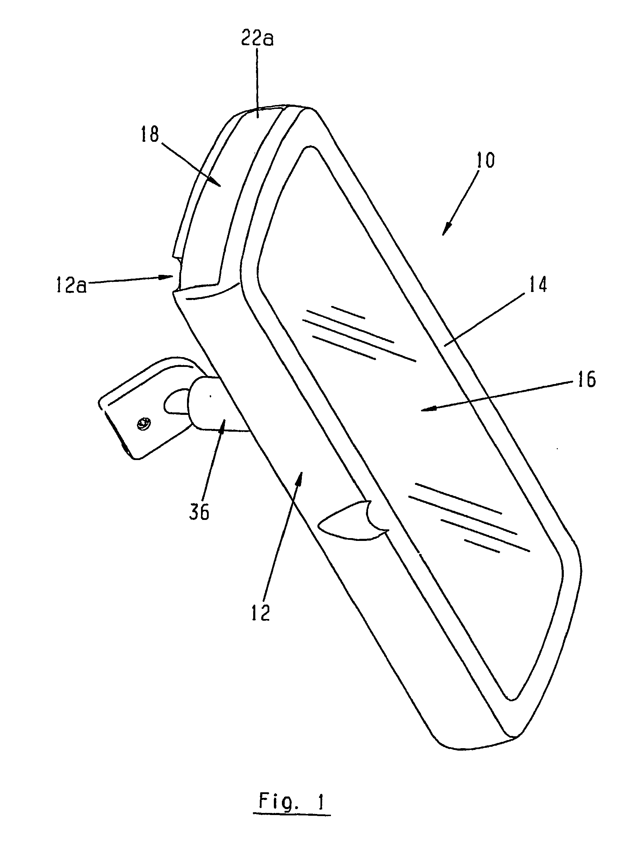

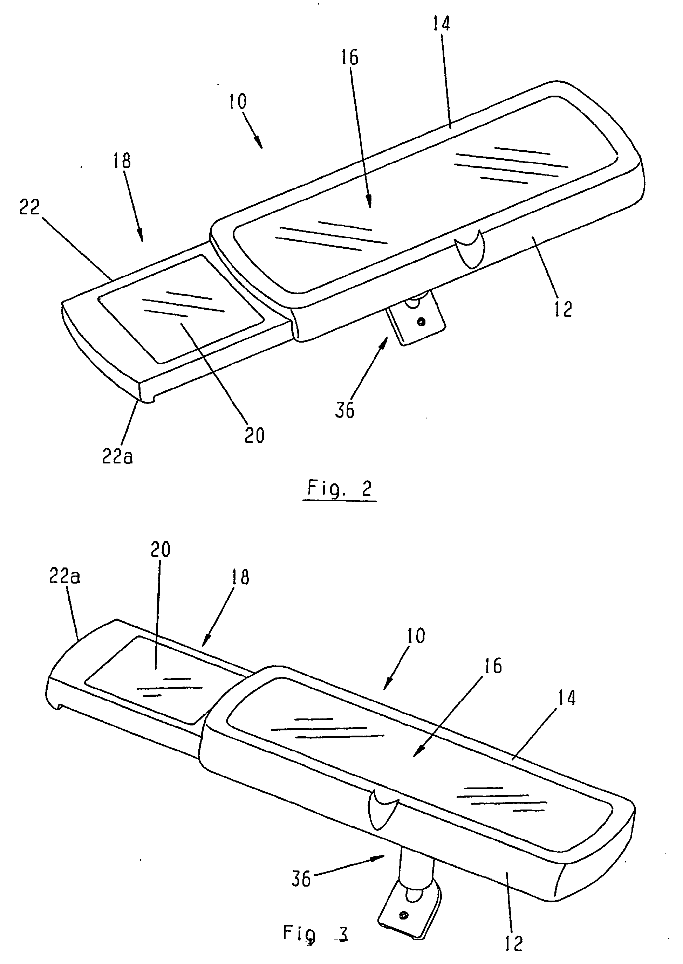

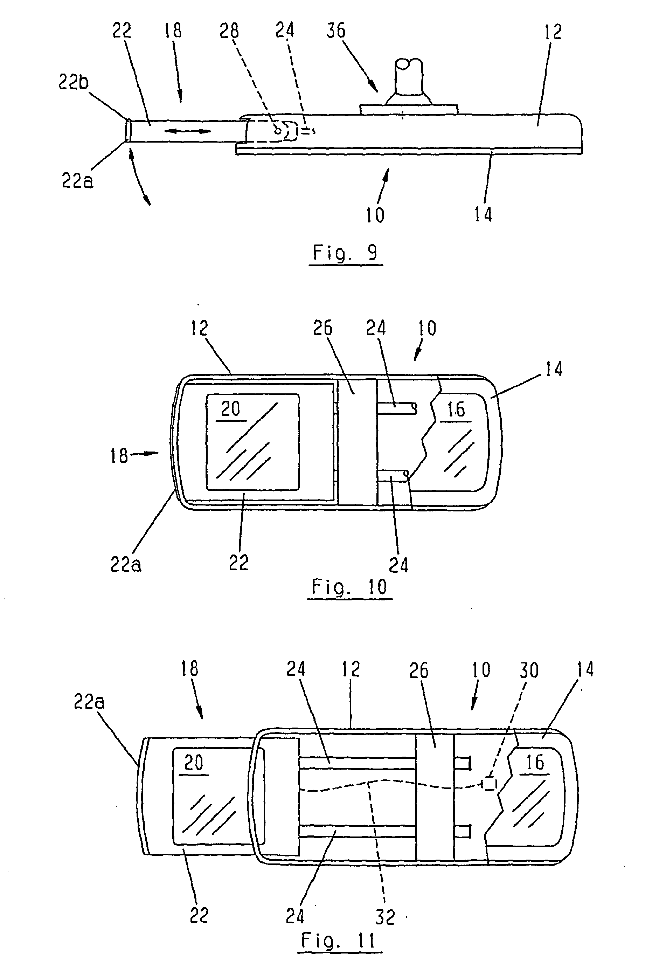

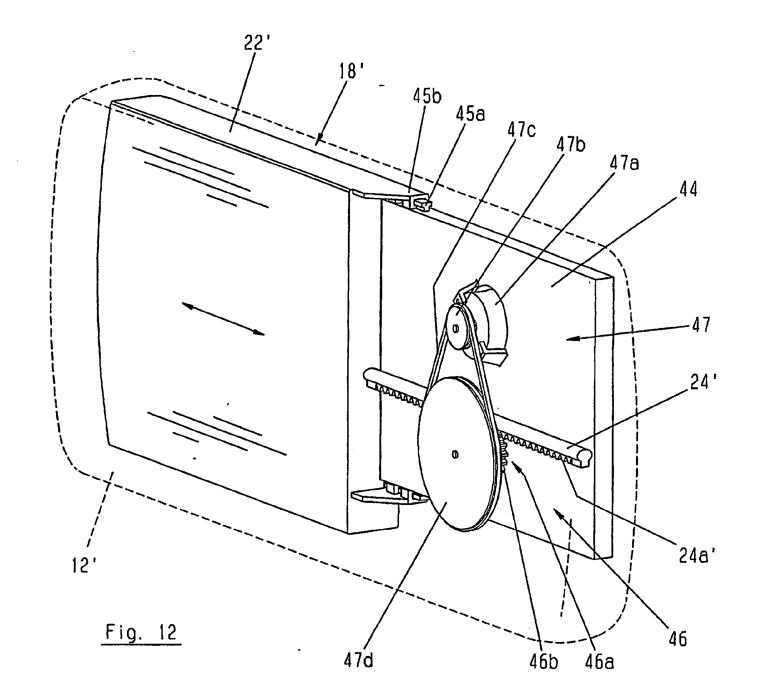

Referring now to the drawings and the illustrative embodiments depicted therein, an interior rearview mirror assembly 10 for a vehicle includes a casing 12, a bezel portion 14 and a reflective element 16 positioned at and at least partially within the casing and/or bezel portion (FIGS. 1-3). Mirror assembly 10 includes a video display screen device 18, which is movably or slidably mounted at least partially within casing 12 and movable or slidable between a retracted or stored or non-use position (as shown in FIGS. 1, 4, 6 and 10) and an extended or use position (as shown in FIGS. 2, 3, 5 and 7). Video display screen device 18 includes a video display screen 20 mounted on a frame or support 22, which in turn is mounted at or positioned at one or more slide members 24 (FIGS. 10 and 11) at or within casing 12. Video display screen 20 is operable to display information or images for viewing by the driver or other occupant or occupants of the vehicle when video display screen device 18 is in its extended position, as discussed below. The term video display screen is used herein to describe the video display screen and any components and circuitry associated with the video display screen which are generally contained at or within the frame or support 22.

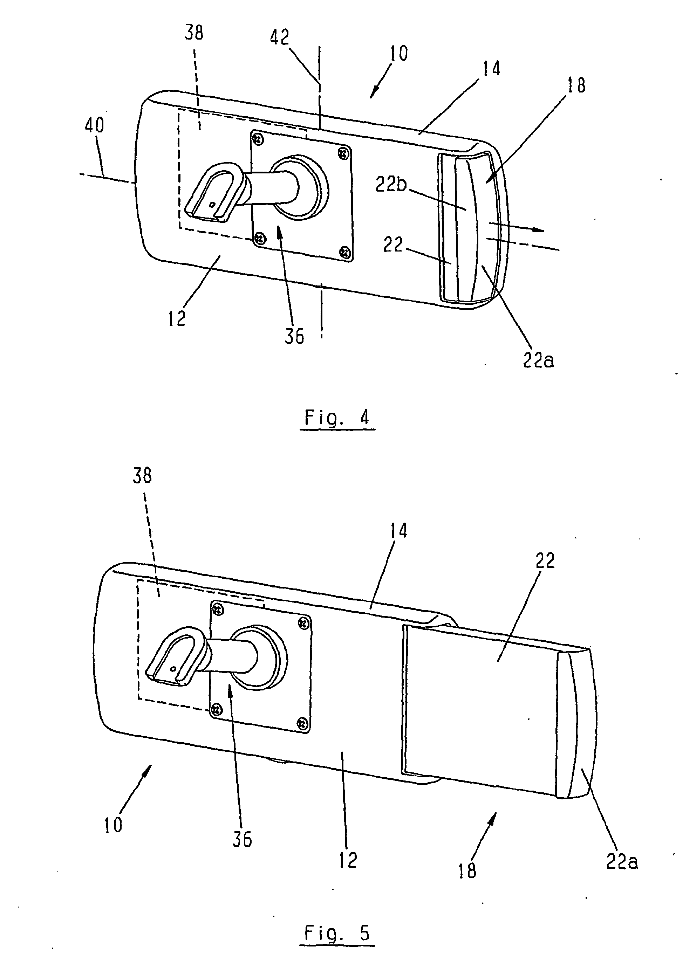

As can be seen in FIGS. 2, 3, 5, 7, 10 and 11, casing 12 of mirror assembly 10 is wide enough to allow frame 22 and video display screen 20 to slide therewithin and generally along and parallel to and behind the reflective element 16, such that the video display screen 20 is slidable in a direction generally transverse to the longitudinal direction of the vehicle when the mirror assembly is mounted to the vehicle. As shown in FIG. 4, mirror reflective element 16 consists of a length dimension along its length axis 40 and a width dimension along its width axis 42. The length dimension is typically at least approximately 5.5 inches, more preferably at least approximately 7.5 inches, and most preferably at least approximately 9.5 inches, while the width dimension is preferably at least approximately two inches, more preferably at least approximately 2.5 inches, and most preferably at least approximately three inches, and is selected to allow sufficient clearance for lateral movement of the video display screen therewithin. Preferably, the ratio of the length dimension to the width dimension is at least two, and more preferably at least three.

Because the video display screen is positioned within the mirror casing and is slidable along the length axis and outward from a side of the mirror casing, the video display screen may comprise a large, rectangular-shaped video display screen to enhance viewing of the video display screen by the driver or occupant of the vehicle. The mirror casing is formed to be at least as wide or tall as the height dimension of the video display screen. The width of the video display screen may be selected depending on the desired size of the viewing area and on the lateral space within the associated mirror casing. Preferably, the video display screen is a least approximately two inches wide, more preferably at least approximately 2.5 inches wide, and most preferably at least approximately three inches wide. The video display screen thus may fit or slide laterally within the mirror casing and may provide an increased viewing area without requiring a substantial increase to the size of the mirror casing.

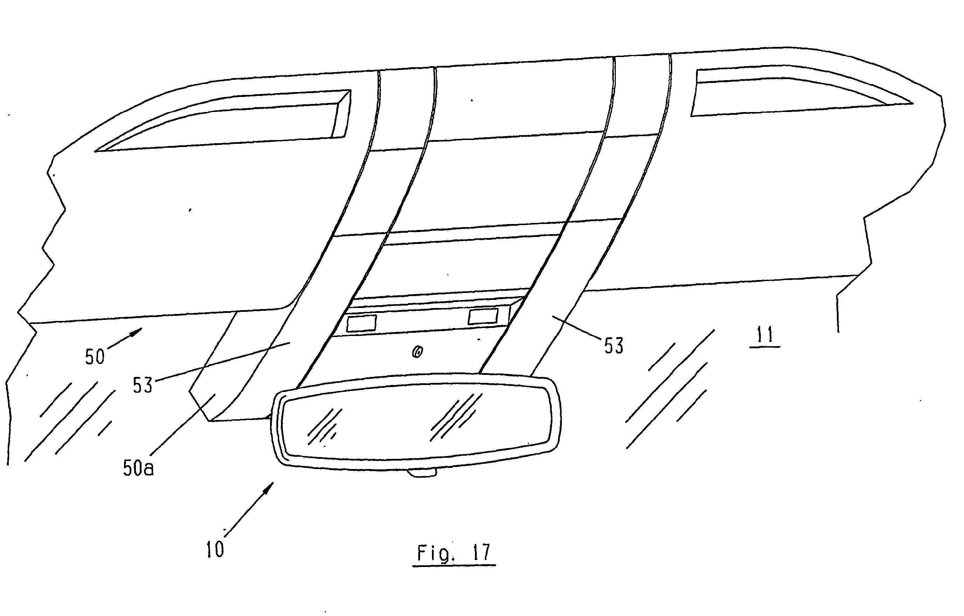

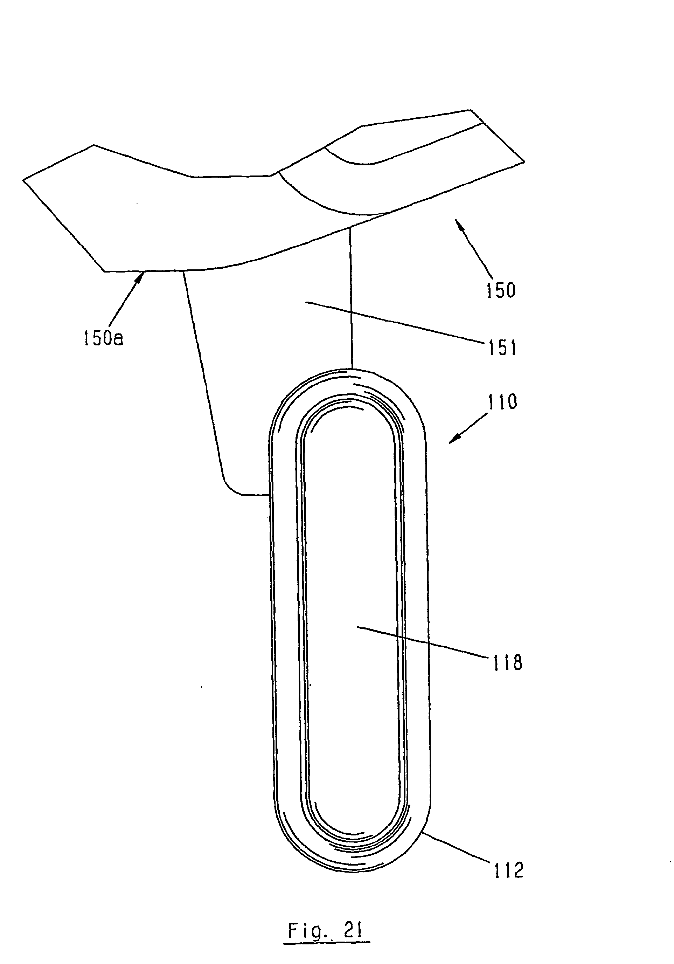

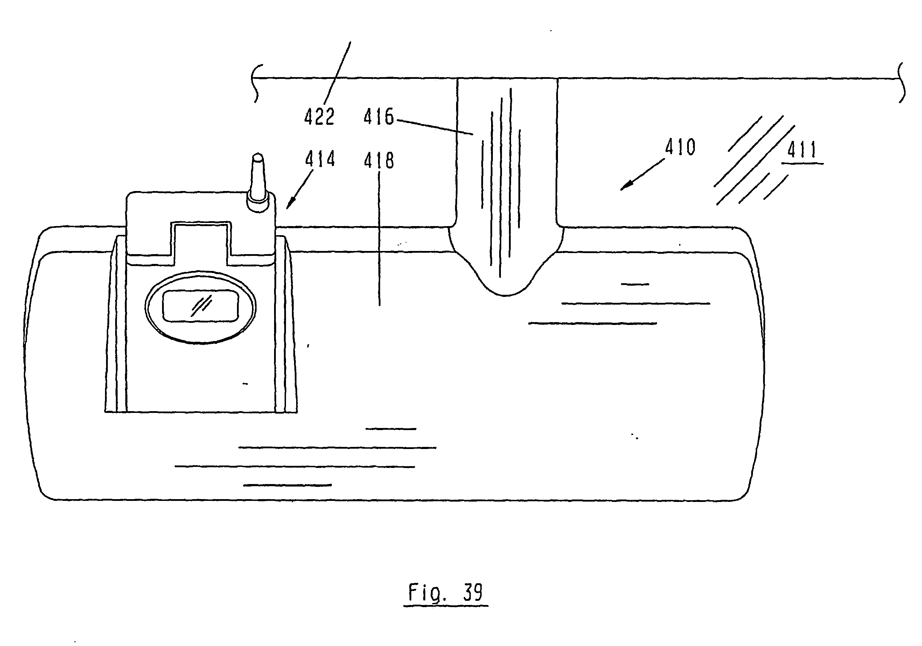

Although shown and described as slidably extending from a side or portion of an interior rearview mirror assembly, the display screen of the present invention may extend from a portion of the mirror assembly elsewhere at or on the mirror assembly, or from a portion of the support structure of the mirror assembly (such as in a single ball mounting member arrangement), such as a support structure of the types described in U.S. Pat. No. 6,087,953, which is hereby incorporated herein by reference. Optionally, the display screen device of the present invention may be positioned at or at least partially within a casing or housing of a windshield electronics module or accessory module, such as those described in U.S. pat. applications, Ser. No. 10/355,454, filed Jan. 31, 2003 by Schofield et al. for VEHICLE ACCESSORY MODULE; and/or Ser. No. 09/793,002, filed Feb. 26, 2001, entitled VIDEO MIRROR SYSTEMS INCORPORATING AN ACCESSORY MODULE, or an overhead console or module or the like, such as those described below with respect to FIGS. 17-41. The display screen may extend from a portion or side of the accessory module or the like, or may extend from another portion of the accessory module or the like, or from a support structure of the accessory module or the like, without affecting the scope of the present invention.

Frame 22 of video display screen device 18 substantially surrounds and encases video display screen 20 and may include an outer grasping portion or end portion 22a. End portion 22a and casing 12 may be correspondingly formed such that end portion 22a generally nests partially within casing 12 when video display screen device 18 is in its retracted position. Also, end portion 22a may be formed to generally correspond with the exterior surface of casing 12, such that end portion 22a may provide a generally flush, uniform appearance to the side of the mirror casing when the device is fully retracted. As best seen in FIGS. 4, 5, 8 and 9, end portion 22a may include a grasping portion or lip 22b which extends rearward from video display screen device 18 to provide a handle or grasping surface for a user of video display screen device 18 to grasp and pull to manually pull frame 22 and video display screen 20 outward from casing 12 to the extended position. Optionally, casing 12 may further include a recessed or cut away area 12a (FIG. 1) at the side of the casing to facilitate grasping of the end portion 22a of frame 22, without affecting the scope of the present invention.

Video display screen 20 may be slidable or extendable / retractable via sliding movement of a rail or guide or track or the like relative to a receiving block or guide or the like that slidably receives or guides the rail or guide or track or the like as the display screen extends and retracts relative to the mirror casing. In the illustrated embodiment of FIGS. 10 and 11, video display screen device 18 includes a sliding block 26 positioned within casing 12 to facilitate sliding movement of frame 22 and video display screen 20 relative to casing 12. Sliding block 26 may comprise a plastic or polymeric material and is configured to slidably or movably receive one or more slide members or rails or guides or tracks 24 therethrough. As can be seen with reference to FIGS. 10 and 11, the sliding members 24 may comprise generally cylindrical bars or rods which are fixedly secured to frame or support 22 and are slidable relative to sliding block 26 to facilitate sliding movement of frame 22 and video display screen 20 relative to sliding block 26 and casing 12. The sliding members 24 are positioned generally parallel to the reflective element 16 of the mirror assembly 10 for sliding or conduiting or conveying the video display screen 20 and frame 22 generally parallel to the reflective element and, thus, generally transverse to the longitudinal axis or direction of the vehicle when the mirror assembly 10 is mounted to the vehicle. Although shown and described as being fixedly mounted to one or more sliding rods or members, the frame or support of the video display screen device may alternately be slidably mounted to one or more rods or members or rails or tracks or the like which are generally fixedly positioned along the mirror-casing, without affecting the scope of the present invention. The display screen and frame may be manually movable along the rods or members or may be electronically driven or moved via a drive motor or the like, as discussed below. Optionally, the display screen and frame may be movable or slidable or extendable / retractable via a moving mechanism or drive mechanism utilizing aspects disclosed in U.S. Pat. No. 6,325,518 and U.S. pat. application, Ser. No. 09/968,523, filed Oct. 1, 2001 by Whitehead et al. for EXTENDABLE EXTERIOR REARVIEW MIRROR ASSEMBLY. The cable or wire that feeds the display screen, such as to provide power and/or control to the display screen, may be guided to provide corresponding extension and retraction of the cable / wire or the like in tandem with the display screen, or the electrical connection may be made via sliding electrical contact between the rails or guides or the like of the sliding or moving mechanism, without affecting the scope of the present invention.

Optionally, as shown in phantom in FIG. 9, frame 22 may be pivotable about a generally vertical pivot axis or knuckle joint 28 or the like when video display screen device 18 is in its fully extended position (such as shown in FIGS. 2, 3 and 7). The frame 22 may be pivoted or canted about the pivot axis in either direction to adjust a viewing angle of the video display screen 20 to provide optimal viewing of the screen by the driver or other occupant of the vehicle. As can be seen with reference to FIG. 9, the casing 12 may limit or substantially preclude pivotal movement of frame 22 and video display screen 20 until frame 22 and video display screen 20 are in their fully extended position with the pivot joint 28 being positioned outward or at the exterior of casing 12. Alternately, frame 22 may be non-pivotable or fixed, without affecting the scope of the present invention.

Video display screen 20 may comprise any type of video screen and is operable to display images in response to an input or signal from a control or imaging system. For example, the video display screen may comprise a multi-pixel liquid crystal display (LCD), preferably a thin film transistor multi-pixel liquid crystal display, or the screen may comprise a multi-pixel organic electroluminescent display or a multi-pixel light emitting diode (LED), such as an organic light emitting diode (OLED) or inorganic light emitting diode display or the like, or a passive reflective and/or backlit pixelated display, or an electroluminescent (EL) display, or a vacuum fluorescent (VF) display or the like. For example, video display screen 20 may comprise a video screen of the types disclosed in U.S. Pat. Nos. 6,428,172 and 6,420,975, and/or U.S. pat. applications, Ser. No. 09/585,379, filed June 1, 2000 by Hutzel et al. for REARVIEW MIRROR ASSEMBLY WITH UTILITY FUNCTIONS; Ser. No. 10/207,291, filed Jul. 29,2002 by Hutzel et al. for REARVIEW MIRROR ASSEMBLY WITH UTILITY FUNCTIONS; Ser. No. 10/307,929, filed Dec. 2, 2002 by Hutzel et al. for AN INTERIOR REARVIEW MIRROR SYSTEM INCLUDING A PENDENT ACCESSORY; and/or Ser. No. 09/793,002, filed Feb. 26, 2001, entitled VIDEO MIRROR SYSTEMS INCORPORATING AN ACCESSORY MODULE. Optionally, the display screen device may provide a three dimensional aspect to the information being displayed.

Video display screen device 18 may be in communication with or may receive an input or signal from a corresponding imaging sensor or camera or imaging system and may display the image or images provided by the input or signal on the video display screen 20. As shown in FIG. 11, video display screen device 18 or an imaging or vision system of the vehicle may include a control 30, which is in communication with video display screen 20 via an electrical connector or wiring or cable 32, such as a ribbon cable, a coiled or spiral cord, a sliding electrical contact or the like, which preferably is extendable and retractable or bendable or foldable or slidable to allow for extension and retraction of the video display screen relative to the control.

Control 30 is operable to control video display screen 20 in response to an input or signal, such as a signal received from one or more cameras or image sensors of the vehicle, such as a video camera or sensor, such as a CMOS imaging array sensor, a CCD sensor or the like, such as the types disclosed in commonly assigned, U.S. Pat. Nos. 5,550,677; 5,760,962; 6,097,023 and 5,796,094, or from one or more imaging systems of the vehicle, such as a reverse or backup aid system, such as a rearwardly directed vehicle vision system utilizing principles disclosed in U.S. Pat. Nos. 5,550,677; 5,760,962; 5,670,935; 6,201,642; 6,396,397; and/or 6,498,620, and/or in U.S. pat. applications, Ser. No. 09/199,907, filed Nov. 25, 1998 by Bos et al. for WIDE ANGLE IMAGE CAPTURE SYSTEM FOR VEHICLE; and Ser. No. 10/010,862, filed Dec. 6, 2001 by Bos for PLASTIC LENS SYSTEM FOR VEHICLE IMAGING SYSTEM, a trailer hitching aid or tow check system, such as the type disclosed in U.S. pat. application, Ser. No. 10/418,486, filed Apr. 18,2003 by McMahon et al. for VEHICLE IMAGING SYSTEM, a cabin viewing device or system, such as a baby viewing or rear seat viewing camera or device or system or the like, such as disclosed in U.S. Pat. No. 5,877,897 and/or U.S. pat. application, Ser. No. 09/793,002, filed Feb. 26, 2001, entitled VIDEO MIRROR SYSTEMS INCORPORATING AN ACCESSORY MODULE, a video communication device or system, such as disclosed in U.S. pat. application, Ser. No. 09/793,002, filed Feb. 26, 2001, entitled VIDEO MIRROR SYSTEMS INCORPORATING AN ACCESSORY MODULE. Optionally, the video display screen may also or otherwise serve as a screen for a navigation system of the vehicle or the like, such as a GPS navigation system, such as a known navigation system or such as a navigations system of the type discussed below. The display screen may be operable to display video images and/or may display icons, characters, letters, text or other indicia, and may provide a menu driven display and control for the navigation system or the like (as discussed below), without affecting the scope of the present invention.

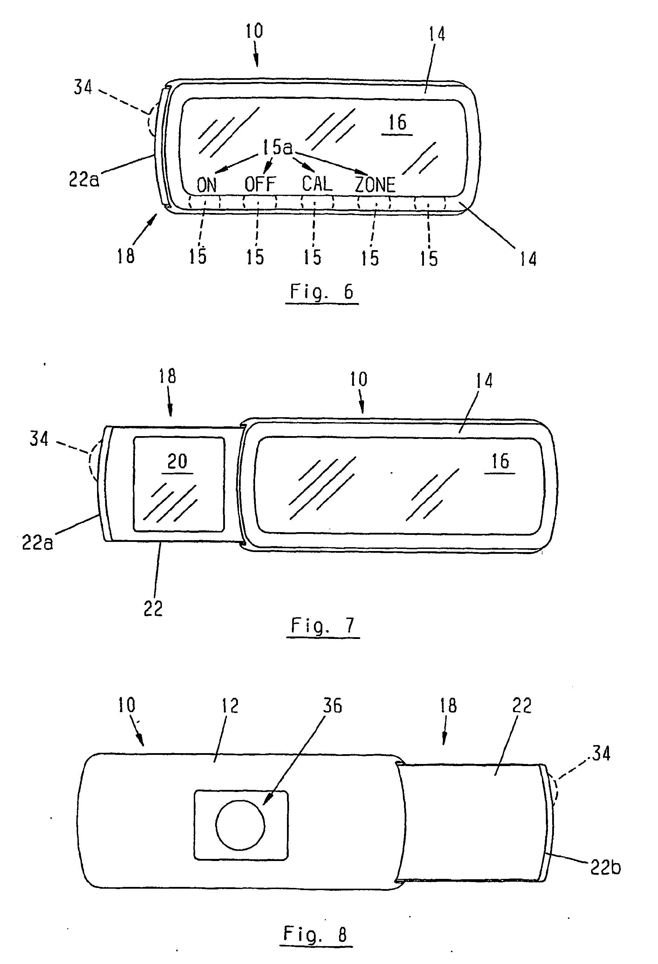

As shown in FIGS. 6-8, video display screen device 18 may include an adjustment mechanism or dial 34 to adjust the intensity or brightness of the video display screen 20. Optionally, the intensity or brightness of the video display screen may be automatically adjusted in response to an ambient light sensor or glare detector, such as a sensor of the display screen device, or of the interior rearview mirror assembly or vehicle or of a console or module or the like, such as the types disclosed in U.S. Pat. Nos. 4,793,690 and/or 5,193,029. In applications where the display screen device is implemented with an electro-optic or electrochromic mirror reflective element assembly, the display screen device may be automatically adjusted in response to the ambient light sensor or glare detector associated with the electro-optic or electrochromic circuitry or system. The display intensity of the display screen may be adjusted in response to the photo sensor or light sensor, and may be increased during daytime lighting conditions and reduced at dusk or during nighttime lighting conditions. The intensity of the display may be substantially continuously adjusted or may be adjusted intermittently or in steps in response to the light sensor or sensors, such as by utilizing aspects of the displays described in U.S. Pat. Nos. 5,416,313 and 5,285,060, or may be adjusted when the display screen is activated or extended.

Optionally, the display screen may include contrast enhancement or anti-glare coating or means, such as described in U.S. pat. application, Ser. No. 09/793,002, filed Feb. 26, 2001, entitled VIDEO MIRROR SYSTEMS INCORPORATING AN ACCESSORY MODULE. For example, the display screen may include polarization means or filters or coatings, such as known in the art, to enhance visibility of the display during high ambient light levels, such as may be encountered on a sunny day. Optionally, the display screen may include other anti-glare coating or other anti-glare means, without affecting the scope of the present invention.

Because the video display screen 20 may be pulled or moved near or into the driver's forward field of view (if it extends toward the driver's side of the vehicle), and thus may interfere with the driver's forward vision, when the display screen is in the extended position, video display screen device 18 is preferably occasionally extended and/or activated for viewing, and retracted to the non-use position when not in use. Frame 22 and video display screen 20 may be manually pulled to the extended, use position by the driver or occupant of the vehicle, and may be manually pushed back into the retracted, non-use position when the desired viewing is completed. The video display screen and/or associated imaging device or system may be actuated in response to the frame and video display screen being moved to the extended position or may be actuated via one or more user actuatable controls or buttons or the like on the frame of the video display screen device or elsewhere on the mirror assembly or vehicle, or in response to other types of activating events, such as discussed below.

Optionally, the frame and video display screen may be spring-loaded or biased or spring actuated, whereby a spring or other biasing member may function to bias or urge or assist the frame and screen toward the extended position. In such an application, the spring or biasing member may be overcome by pushing the frame into the mirror casing to the non-use position, whereby a latch mechanism or the like may retain the frame in the non-use position. The frame may then be pressed inward to release the latch and to allow the biasing member or spring to move or urge or assist the frame and video display screen to the extended position. Such mechanisms are conventional and well known.

Optionally, frame 22 and video display screen 20 may be extended electronically, such as via a driving device or mechanism (not shown), such as via a linear actuator, a solenoid device, a rack and pinion device, an electrical drive motor or actuator, such as the types disclosed in U.S. Pat. Nos. 6,116,743 and/or 6,390,635, a non-armature electrical motor, a shape memory alloy (SMA) device, a NanoMuscle^{™} device, an electrically induced stress-strain device or actuator, a bio-material and/or the like.

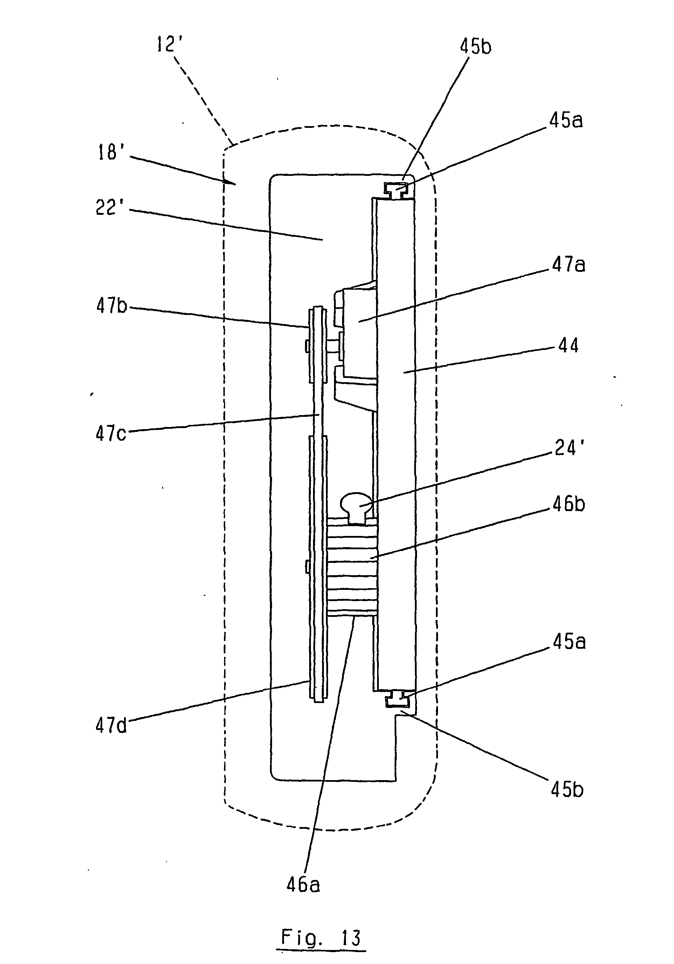

For example, and as shown in FIGS. 12 and 13, a video display screen device 18' may include a frame 22' that is extendable and retractable from a base portion 44. Base portion 44 may be mountable inside a mirror housing or casing 12', such that extension and retraction of display screen frame 22' relative to base portion 44 causes extension and retraction of the frame 22' and the display screen (not shown in FIGS. 12 and 13) relative to mirror casing 12', as discussed above. Base portion 44 may be fixedly secured within the mirror assembly and may have upper and lower track portions 45a, which slidably engage corresponding upper and lower track portions 45b of frame 22', such that Frame 22' may slide along the track portions 45a to extend and retract relative to base portion 44. The track portions 45a, 45b function to maintain alignment of the frame and display screen as it moves relative to the base portion and to maintain proper alignment and engagement of the rack and pinion mechanism 46, discussed below.

In the illustrated embodiment of FIGS. 12 and 13, video display screen device 18' includes a belt drive mechanism 47 that is operable to move the frame 22' relative to base portion 44 via a rack and pinion mechanism 46. Rack and pinion mechanism 46 includes a rod or member 24' extending from frame 22' and generally along base portion 44. Rod 24' includes a plurality of notches or teeth 24a' for engaging corresponding teeth 46b of a sprocket or gear member or pinion 46a. Pinion 46a is rotatably mounted to base portion 44, such that rotation of pinion 46a causes a corresponding translational movement of rod 24' relative to pinion 46a and base portion 44. The rack and pinion mechanism 46 thus provides translational movement of frame 22' as the rod 24' is moved or as pinion 46a is rotated.

The belt drive mechanism 47 includes a drive motor 47a that is mounted to base portion 44 and that is operable to rotatably drive a pulley 47b, which in turn drives a belt or band 47c to rotate a second pulley 47d. Second pulley 47d is mounted to or secured to pinion 46a, such that rotational driving by motor 47a causes rotation of pinion 46a, which in turn causes translational movement of rod 24' and frame 22' and the display screen relative to base portion 44. The display screen device and/or mirror assembly may include or utilize mechanical movement means and/or sound dampening means to ensure quiet, preferably near silent or silent, extension / retraction of the display screen. Optionally, the drive mechanism may deliver a slight sound to provide the driver with a cognizant awareness (in addition to the visible cue or prompt) of the extension / retraction of the display screen.

The frame and the video display screen thus may be extended and retracted via belt drive mechanism 47 and rack and pinion mechanism 46. The belt drive mechanism provides a smooth drive movement and may provide reduced noise to the drive mechanism. The rack and pinion arrangement or mechanism enables the powered or driven mechanism to be manually overridden by pulling or pushing the display screen in the desired direction (which may cause the belt to slip on the pulleys if the motor is not operating). Such a manual override may be desired to allow the display screen to be operated without the electric drive in case of failure of the drive motor. Optionally, the drive system may include sensors for sensing initial movement of the video display screen in either direction, whereby the drive motor may be actuated to move the display screen in response to detection of such initial movement. For example, a sensor may detect an initial inward movement of the display screen, such that a small push of the extended display screen toward the mirror assembly may turn on the electric drive which then may retract the display screen.

As can be seen with reference to FIG. 12, the frame and the video display screen may extend toward the passenger side of the vehicle. Because the mirror assembly is typically angled or canted toward the driver of the vehicle (such as at an angle of approximately 22 degrees from a line parallel to the longitudinal axis of the vehicle) to provide the driver with the appropriate or desired rearward field of view, it is desirable and preferable to have the video display screen slide outward toward the passenger side of the vehicle as shown in FIG. 12. The display screen thus may extend toward the passenger side of the mirror and laterally therefrom in a motion, such as a sliding motion, that is parallel to the length axis of the reflective element. Because the mirror assembly is angled toward the driver of the vehicle, the passenger side video display screen may be readily viewable by the driver of the vehicle when it is extended from the mirror assembly. Optionally, the passenger side video display screen may be pivotable relative to the mirror casing when it is fully extended to further angle the video display screen toward the driver to enhance the viewing of the video display screen.

Optionally, and alternately, for example, a conventional solenoid may be used for a drive motor. Preferably, however, particularly for substantially silent operation, a shape memory alloy device or electrically induced stress-strain actuator or the like may be implemented, such as a NanoMuscle™ actuator, such as a 70 gram High Speed/High Efficiency Linear Actuator, a 125 gram High Speed/High Efficiency Linear Actuator, or a 195 gram High Speed/High Efficiency Linear Actuator, all of which are commercially available from NanoMuscle, Inc. of Antioch, Cal. Such electrically induced stress-strain linear actuators comprise a selection and/or combination of metallic elements, typically bimetallic elements, such as bimetallic alloys, which may contract in response to electrical actuation and may extend or return to their original state when the electrical actuation is removed. More particularly, such electrically induced stress-strain actuator, such as the NanoMuscle™ actuator or the like, contracts in response to one or more electrically resistive shape memory alloy wires contracting as they are heated with application of a suitable voltage. Often such linear actuators may incorporate a spring or other biasing member or return force device or mechanism to urge or assist the actuator to its original, non-contracted state when the electrical actuation is removed. The actuator may be mounted at the mirror assembly such that contraction of the actuator results in a corresponding retraction of the frame and video display screen to the retracted, non-use position or a corresponding extension of the frame and video display screen to the extended, use position, depending on the application of the actuator. Other such contracting or extending devices may be implemented, and may comprise metallic or polymeric components, without affecting the scope of the present invention. Such shape memory alloy devices thus provide substantially silent operation, since there is substantially no parts or gears or the like moving relative to one another during operation. It is further envisioned that pivotal movement of the video display screen about a pivot axis or joint, as discussed above, may be selectably electronically controlled via a rotational drive motor or the like, without affecting the scope of the present invention.

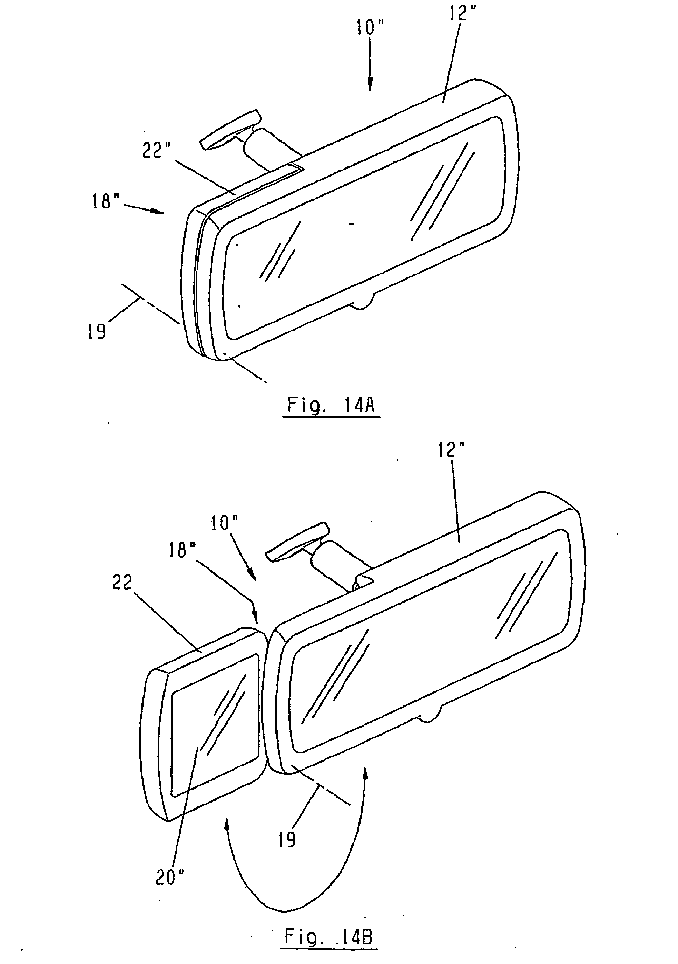

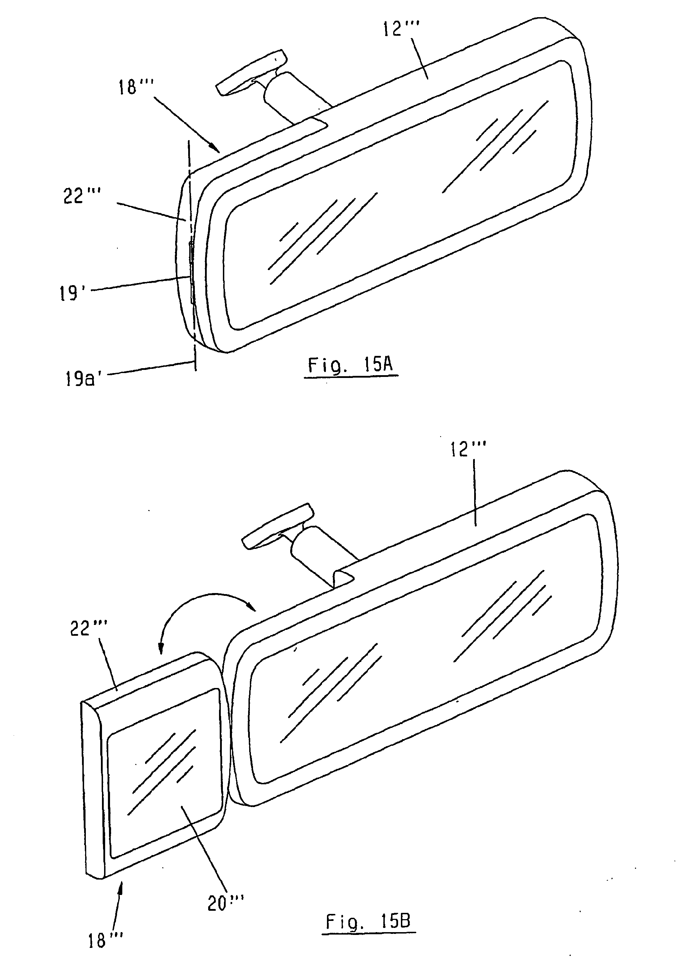

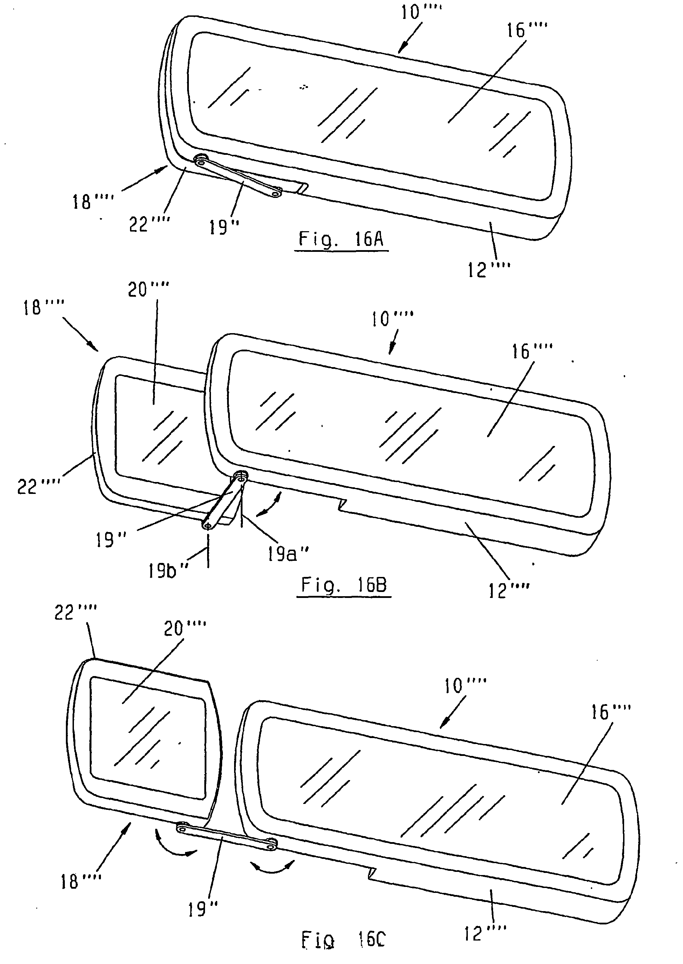

Optionally, and with reference to FIGS. 14-16 not forming part of the invention a video display screen may be movable or pivotable between a stored or non-use position at or within the mirror casing and an extended or use position where the video display screen is moved to a viewable position for viewing by the driver of occupant of the vehicle. For example, and as shown in FIGS. 14A and 14B, a video display screen device 18" may include a frame 22" and a display screen 20" that are pivotally mounted to the casing 12" of a mirror assembly 10". Frame 22" and display screen 20" may be pivotable about a pivot axis 19 between a stored or non-use position, where the display screen is at or within the mirror casing 12" (as shown in FIG. 14A), and a use position, where display screen 20" is moved outward from mirror casing 12" and is viewable by the driver or occupant of the vehicle (as shown in FIG. 14B). As can be seen in FIG. 14A, frame 22" may be formed to define an exterior corner or rear portion of casing 12", such that mirror assembly 10" provides a generally uniform exterior casing when display screen 20" is pivoted to its non-use position. Alternately, and as shown in FIGS. 15A and 15B, a video display screen device 18"' may include a frame 22'" and display screen 20'" that are pivotally mounted to casing 12"' at a hinge 19" and pivotable about a generally vertical pivot axis 19a" between the non-use position (FIG. 15A) and the use position (FIG. 15B). In such an embodiment, display screen 20'" may be positioned at the rear of casing 12"' when display screen 20'" and frame 22'" are pivoted to their non-use position (FIG. 15A). Alternately, a video display screen device 18"" may include a frame 22"" and display screen 20"" that are pivotally mounted to casing 12"" of mirror assembly 10"" via a pivot arm or member 19". Pivot arm 19" may be pivotally mounted to casing 12"" and may be pivotable relative to casing 12"" about a first generally vertical pivot axis 19a", while frame 22"" of display screen device 18"" may be pivotally mounted to pivot arm 19" and may be pivotable relative to pivot arm 19" about a second generally vertical pivot axis 19b". Display screen 20"" and frame 22"" thus may be pivoted about a pair of axes 19a", 19b" between the non-use position (FIG. 16A) and the use position (FIG. 16C). As can be seen with reference to FIG. 16B, frame 22"" and display screen 20"" may be pivoted about pivot axis 19b", while pivot arm 19" is pivoted a similar or same amount about pivot axis 19a", such that display screen 20"" may remain facing in generally the same direction as the mirror reflective element 16"" throughout the range of pivotal movement or adjustment. Also, the pivot arm may allow the display screen to be adjusted relative to the pivot arm to provide any desired viewing angle of the display screen when the display screen is extended or moved to its use position. The pivot arm may comprise an upper and/or lower pivot arm or may comprise a pair of upper and/or lower pivot arms or other pivot arm arrangements to facilitate pivotal movement or adjustment of the video display screen relative to the mirror casing. The frames and display screens may be manually pivoted or automatically or electronically pivoted between the use and non-use positions. Video display screen devices 18", 18"', 18"" and mirror assembly 10", 10"', 10"" may otherwise be substantially similar to the video display screen devices and mirror assemblies discussed above with respect to FIGS. 1-13, such that a detailed discussion of the display screen devices and mirror assemblies will not be repeated herein. The display screen devices may be positioned at the driver or passenger side of the mirror assembly, without affecting the scope of the present invention. However, it is preferable to have the display screen positioned at, and to extend outward when extended from the passenger side of the rearview mirror assembly when the rearview mirror assembly is installed in the vehicle.

The display screen extends automatically in response to a activating event or triggering event. For example, the display screen may be automatically extended and activated in response to an engagement of the reverse gear of the vehicle or actuation of a backup aid or other reverse viewing system, such as a reverse viewing system utilizing principles disclosed in U.S. Pat. Nos. 5,550,677; 5,760,962; 5,670,935; 6,201,642; 6,396,397; and/or 6,498,620, and/or U.S. pat. applications, Ser. No. 09/199,907, filed Nov. 25, 1998 by Bos et al. for WIDE ANGLE IMAGE CAPTURE SYSTEM FOR VEHICLE ; and/or Ser. No. 10/010,862, filed Dec. 6, 2001 by Bos for PLASTIC LENS SYSTEM FOR VEHICLE IMAGING SYSTEM, and/or U.S. pat. application, Ser. No. 10/418,486, filed Apr. 18, 2003 by McMahon et al. for VEHICLE IMAGING SYSTEM (Attorney Docket DON01 1 P-1070), actuation of a cabin viewing device or system, such as a baby viewing or rear seat viewing device or system or the like, such as the types disclosed in U.S. Pat. No. 5,877,897 and/or U.S. pat. application, Ser. No. 09/793,002, filed Feb. 26, 2001, entitled VIDEO MIRROR SYSTEMS INCORPORATING AN ACCESSORY MODULE, actuation of a video communication device or system, such as a video communication device of the types disclosed in U.S. pat. application, Ser. No. 09/793,002, filed Feb. 26, 2001, entitled VIDEO MIRROR SYSTEMS INCORPORATING AN ACCESSORY MODULE, actuation of other telephone or communication systems (where the display screen may extend to display telephone numbers or recently called numbers or other information or the like), actuation of a navigation system of the vehicle, such as a navigation system of the types described in U.S. Pat. No. 6,477,464, and U.S. pat. applications, Ser. No. 10/456,599, filed Jun. 6,2003 by Weller et al. for INTERIOR REARVIEW MIRROR SYSTEM WITH COMPASS ; Ser. No. 10/287,178, filed Nov. 4, 2002 by McCarthy et al. for NAVIGATION SYSTEM FOR A VEHICLE ; Ser. No. 10/645,762, filed Aug. 20, 2003 by Taylor et al. for VEHICLE NAVIGATION SYSTEM FOR USE WITH A TELEMATICS SYSTEM; and Ser. No. 10/422,378, filed Apr. 24,2003, and such as discussed below, a vehicle system or device status or warning system (where the display screen may be automatically extended to display a warning or alert to the driver in response to a condition being detected, such as the driver's seatbelt being unfastened (and optionally with the vehicle being in gear or moving or the like), a high oil temperature or pressure, a low tire pressure (such as in response to a tire pressure management system (TPMS), such as the types described in U.S. Pat. Nos. 6,294,989; 6,445,287; and/or 6,472,979, and/or in U.S. pat. applications, Ser. No. 10/232,122, filed Aug. 30, 2002 ; and Ser. No. 10/279,059, filed Oct. 23, 2002, a low fuel level and/or the like), or any other activating event or triggering event or condition or detection or dynamic event and/or the like, without affecting the scope of the present invention. The outward movement or extension of the display screen not only provides the display of information at a position that is readily viewable by the driver of the vehicle, but the outward movement of the display screen also provides a visual cue or prompt, and optionally an audible sound associatable with a sliding motion, to catch the driver's attention and reinforce viewing of the display screen so that the driver can readily view the information being displayed at the display screen. Similarly, the video display screen may be automatically retracted to the non-use position in response to a manual or user input, or in response to completion of or curing of the activating or triggering event or deactivation of the system or device associated with the activating or triggering event, such as shifting of the vehicle out of reverse, deactivation of a rearward viewing device or system, deactivation of a cabin viewing device or system, deactivation of a video communication device or system or disconnection of the telephone connection or conversation, deactivation of a navigation system of the vehicle or arrival at a particular waypoint or destination (as discussed below), or a correction or curing of the system condition, such as fastening of the seatbelt, and/or the like.

The display screen may be manually moved to its retracted position when the driver no longer wants to view the screen, even if the activating event has not yet completed. This allows the driver to override the automatic extension and retraction, such as when the driver no longer wants to view the information relating to the activating event, without disturbing or adversely affecting the automatic extension controls and components. For example, if the driver chooses to ignore a warning that the tire pressure is low (or other warning or information display or the like), the driver may manually move the display screen to its retracted position. The manual movement may be accomplished via pushing the display screen into the mirror assembly, or pressing or actuating a user input or button or the like to cause the retraction of the display screen, or providing a voice command to the system to cause the retraction / override of the display screen device. Optionally, the drive system of the display screen device may include sensors for sensing initial movement of the display screen in either direction, whereby the drive motor or the like may be actuated to move the display screen in response to detection of such initial movement. For example, a sensor may detect an initial inward or outward movement of the display screen, such that a small push or pull of the display screen may activate the electronic drive motor or system which then retracts or extends the display screen.

Optionally, the display screen may be manually extended by the driver or occupant of the vehicle even if a dynamic or activating or triggering event has not occurred. The driver may then select a desired function of the display screen when it is extended. Optionally, the display screen may display a menu for the driver to select from when the display screen is extended manually. The menu or menus may be in the form of text displays, graphic displays, video displays, iconistic displays, indicia displays and/or the like. The driver may then select from the menu by touching or actuating a user input or by providing a voice command or the like to cause the display screen to display information or video or the like pertaining to the selected function or system or accessory. For example, the driver may cause the display screen to display the rear vision system video or images even though the vehicle is not in reverse by manually extending the display screen and manually selecting the rear image display function. The manual extension and activation may be accomplished by manually pulling or moving the display screen or by actuating a user input or by providing a voice command (such as "open" or "extend") or the like.

The video display screen thus is operable to automatically extend to display information or video pertaining to a selected or triggering event or function. For example, video display screen 20 may be in communication with a camera or imaging sensor or system operable to capture images of an area rearward of the vehicle. Video display screen 20 may then be extended in response to engagement of the reverse gear of the vehicle or activation of the rearward viewing device or system, where the video display screen 20 may be operable to display images representative of the scene and events occurring rearward of the vehicle, such that the driver may view the video display screen as the vehicle is reversed. When the vehicle is shifted out of reverse, the video display screen may be automatically retracted to its non-use position. As discussed above, frame 22 and video display screen 20 may be extended and retracted via a linear actuator, a solenoid device, a rack and pinion device, an electrical drive motor, a non-armature electrical motor, a shape memory alloy device, a NanoMuscle™ device, an electrically induced stress-strain device, a bio-material and/or the like, without affecting the scope of the present invention. Optionally, the video display screen and frame may be manually pulled from the mirror casing, but the video display screen device may limit or substantially preclude sliding movement of the frame toward the extended position unless the vehicle is shifted into the reverse gear or some other activating event occurs, such as actuation of a rearward viewing device or system, actuation of a cabin viewing device or system, such as a baby viewing or rear seat viewing device or system or the like, actuation of a video communication device or system, actuation of a navigation system of the vehicle and/or the like, without affecting the scope of the present invention. The manual operation of the video display screen device may override the automatic extension and retraction of the display screen without adversely affecting the automatic or electronic controls or devices or systems.

It is further envisioned that the control system of the display device may extend and retract the display screen in response to multiple activating or triggering events or a hierarchy of events, and may operate in a hierarchical manner where certain events control or override other events. The display screen device may be linked to the triggering event and thus may be operable to display information or video images or the like pertaining to the system or device or function associated with the activating or triggering event. For example, when the reverse gear is engaged, the display screen may extend automatically and display the captured images or video of the scene rearward of the vehicle (as captured by a video camera or imaging sensor or the like at the rear portion of the vehicle). If, on the other hand, a user activates a phone system or communication system, such as by pressing a button or actuating an input or providing a voice command or the like, the display screen may extend and may display useful information, such as menus to select from or telephone numbers (such as a directory or a list or recently called numbers) or the like, to the user of the communication system. Optionally, if a telephone call is received by the telephone or communication system, the display screen may extend to display a caller identification function or other pertinent information or the like or video images of the caller (if associated with a video communication system) or the like to the driver or user.

In situations where the display screen is already extended and displaying information to the driver pertaining to an activating event, such as, for example, displaying the rear seat area of the vehicle when a cabin monitor is activated, the display screen may change or adjust or reconfigure the display to correspond to another activating event, such as, for example, a warning or alert that the vehicle is low on fuel or the like. The hierarchy of activating events may determine which events may override other events, such that an important event, such as a rear vision system display while the vehicle is in reverse, is not overridden by an event that can wait until after the first event (backing up the vehicle) is completed, such as a navigational instruction pertaining to the vehicle navigation system or other information or video. The display screen device thus may comprise a dynamic extension system that automatically extends the display screen in response to dynamic events or functions. However, the driver or occupant of the vehicle may override the event hierarchy at any time by manually activating another one of the triggering events or systems or functions. For example, if the driver is backing up the vehicle, but is not using the rear vision system display, the driver or another occupant may manually activate the navigation system or telephone system or cabin monitoring system or the like to change the display to correspond to the newly activated system. The manual override may be accomplished via manual actuation of a user input or the like or via a voice command or the like.

As described above, the display screen may be extended in response to an activating event associated with a vehicle navigation system and/or a point of interest compass system, such as navigation systems / compass systems of the types described in U.S. Pat. No. 6,477,464, and U.S. pat. applications, Ser. No. 10/456,599, filed Jun. 6, 2003 by Weller et al. for INTERIOR REARVIEW MIRROR SYSTEM WITH COMPASS; Ser. No. 10/287,178, filed Nov. 4, 2002 by McCarthy et al. for NAVIGATION SYSTEM FOR A VEHICLE; Ser. No. 10/645,762, filed Aug. 20, 2003 by Taylor et al. for VEHICLE NAVIGATION SYSTEM FOR USE WITH A TELEMATICS SYSTEM ; and Ser. No. 10/422,375, filed Apr. 24, 2003. In such applications, the display screen may be extended to display navigational information, such as driving instructions or compass heading or a map or the like, to the driver of the vehicle as the driver negotiates a programmed or desired route. The display screen may be extended and activated to display the instructions and/or compass heading and/or map in accordance with the geographical position of the vehicle, such as detected by an in-vehicle or vehicle-based navigation system detector, such as a global positioning system (GPS) or circuitry and/or the like. The vehicular global positioning system may comprise an in-vehicle GPS antenna and a GPS receiver / signal processor that receives a satellite communication to determine the geographic location of the vehicle, as is known in the art. Such global positioning system receivers / processors, sometimes referred to as a GPS chip set, are available from various suppliers, such as, for example, Motorola of Schaumburg, I11. and Trimble Navigation of Sunnyvale, CA. The display screen thus may be extended and activated as the vehicle approaches a waypoint or milestone in the programmed route of the vehicle navigation system. The display screen thus not only provides the instructions and/or map to the driver, but the extension of the display screen provides a visual cue or prompt to alert the driver or catch the driver's attention so that the driver knows to look at the screen to get the next instruction at an appropriate time before the vehicle arrives at the waypoint or milestone. The display screen may then retract to its retracted position after the vehicle arrives at the next waypoint or milestone. The global positioning system thus may determine when the geographic position of the vehicle approaches a waypoint and may then trigger extension of the display in conjunction with the vehicle navigation system or in conjunction with a vehicle database or navigation system database.

For example, a user or driver may enter a desired destination into the navigational system and the navigational system may determine an appropriate route for the vehicle to travel from its initial or current location until it arrives at the desired destination. As is known in the art, the route may be determined to provide a shortest distance route or quickest route or may be determined in accordance with other parameters as may be selected by the user. When the vehicle begins the journey, the display screen may extend and activate to display a first instruction or set of instructions or map, such as "Take Oak Road West and turn right at Maple Street and head North on Maple Street". The display screen may remain extended until the driver of the vehicle has carried out the instructions and passed the first waypoint or milestone (for example, the intersection of Oak Road and Maple Street). The display screen may then display the next instruction (such as, for example, "Take Maple Street North to Interstate 96") and may then retract until the vehicle approaches the next waypoint. As the vehicle approaches the next waypoint, such as about one or two miles before the next waypoint (or any other distance as may be desired), the display screen may again extend and be activated to display or re-display the next instruction or set of instructions and/or map to the driver. For example, the display screen may extend (which, as discussed above, provides a visual cue to the driver that he or she is approaching the next waypoint or milestone of the journey) and may be activated to display a second instruction or set of instructions and/or map to the driver, such as "Enter Interstate 96 and take Interstate 96 East to Exit 43". While the vehicle is on the on-ramp or thereabouts, the display screen may display the next set of instructions or map (for example, "Take Interstate 96 East to Exit 43"), and then may retract to its retracted position as the vehicle is driven onto Interstate 96 and heading east on Interstate 96. The display screen thus only extends and is activated when the instructions are desired, and is retracted between waypoints so as not to be a bother or nuisance to the driver in situations where no further instructions are necessary. The extension of the display screen provides a visual cue to the driver to look at the screen for the next instruction at a particular time when the next instruction may be highly desirable or necessary to the driver.

The time or distance before the next waypoint that the display screen extends may be selected or pre-set by the manufacturer of the vehicle or mirror assembly or navigational system or the like. Optionally, the time or distance before the next waypoint that the display screen extends may vary depending on the vehicle speed or the particular road or highway on which the vehicle is traveling. For example, if the vehicle is traveling on a highway at about 70 mph, the display screen may extend and activate approximately two miles before the next waypoint to allow the driver sufficient time to get into the appropriate lane for exiting the highway. However, if the vehicle is traveling on a road at about 30 mph, the display screen may extend and activate approximately 0.5 to 1 miles before the waypoint, because at the slower speed, such a distance provides ample time for the driver to prepare to execute the next driving instruction. The vehicle speed may be determined by wheel sensors or speed sensors of the vehicle or by the global positioning system or the like, or the speed may be estimated based on the known speed limit for the particular road that the vehicle is traveling on (where the particular speed limit may be extracted from a database of such speed limits). It is further envisioned that the display screen may extend and activate at different locations or distances relative to the approaching waypoint in response to the driving conditions (as may be detected by a rain sensor or other vision system or as may be provided by the global positioning system or the like), traffic conditions (as may be provided by a vehicle vision system or object detection system or headlamp control system or the like), and/or hazardous conditions (as may be provided by vehicle vision systems or vehicle status systems or collision avoidance systems, such as the types disclosed in U.S. Pat. No. 6,411,204) and/or the like, in order to provide sufficient time to the driver to prepare to execute the next set of instructions.

Optionally, the display screen may extend when the vehicle is not moving or stopped (as determined by a vehicle speed sensor or by a global positioning system or the like), such as at a stop light or the like, and may display information to the driver at a time when the driver is able to fully focus on the information being displayed. For example, the display screen may display driving instructions or location information or the like pertaining to the programmed route or next waypoint, or the display screen may display trip statistics or the like, such as time traveled, distance traveled, estimated arrival time, and/or the like. Optionally, the display screen may display other information that may be of interest to the driver, such as information pertaining to the geographic position of the vehicle (such as, for example, if the vehicle is stopped by a particular store or restaurant, the display may display an advertisement of the store or restaurant) as may be provided via the global positioning system database or concierge service or the like, or may display any other type of information to the driver at a time when the driver has time to look at and read / understand the information while the vehicle is stopped. The display screen may be manually retracted when the driver is finished viewing the information being displayed or may be automatically retracted upon movement of the vehicle or a period of time after onset of movement of the vehicle. The extension of the display screen when the vehicle is stopped may be manually overridden to avoid extension if such extension is not desired.

Optionally, the navigational system may be programmable or selectable or operable to allow the driver to select at which waypoint or milestone along the journey that the display screen will be extended and be visible and readable by the driver to provide instructions such as those set forth above. For example, the driver of the vehicle may be well aware of how to get onto Interstate 96 and to head east on Interstate 96 to head toward the desired destination, but may not know where to exit and where to go after exiting the interstate. The driver thus may not want the display screen to extend and provide the initial instructions that are already known to the driver while the driver is driving the vehicle toward and onto and along Interstate 96. At the onset of the journey or while the driver is setting the navigation system, the navigation system may receive inputs from the driver that are indicative of a desired start point or waypoint for the instructions to begin, and the display screen may remain retracted and deactivated until the geographical position of the vehicle (as detected by the navigational system detector) approaches the selected waypoint or milestone at which the display of the instructions or maps will begin (or unless the display screen is extended and activated in accordance with a different activating or triggering event). As the vehicle approaches the selected waypoint or milestone, the display screen may extend and may be activated to display the appropriate instructions and/or map. For example, the display screen may remain retracted while the vehicle travels toward and onto and along Interstate 96. When the vehicle is approximately one to two miles (or other distance, as desired or depending on other parameters as discussed above) from exit 43, the display screen may extend to alert the driver, and may display the instruction: "Take Exit 43 and turn left Pine Street. Take Pine Street North to Elm Street." After the vehicle has turned onto Pine Street, and the system has detected that the waypoint has been reached, the display screen may again retract (and optionally may briefly display the next driving instructions or compass heading or map before it retracts) until the vehicle approaches the next waypoint, for example, the intersection of Pine Street and Elm Street. As the vehicle approaches the next waypoint, the display screen may again extend and display the next instruction or set of instructions and/or map at the appropriate time or location before the next waypoint. The display screen thus may remain retracted throughout the known or familiar part of the journey, and then may extend to alert the driver or catch the driver's attention and to provide the appropriate instructions and/or compass heading and/or map to the driver at the appropriate time as the vehicle approaches the next waypoint or milestone in the journey or trip.

Optionally, if the driver is familiar with the route beyond what was initially thought when programming or setting or selecting the route, the driver may at any time manually override the system to retract the display screen when it extends to provide the next instructions or map. For example, the driver may actuate an input or control at the display screen or at the steering wheel or at the mirror assembly or elsewhere in the vehicle (such as may be provided at a keypad or touch pad interface, preferably menu driven as described herein) or may provide a vocal message or voice command to cause the display screen to retract and deactivate if it is not desired or needed. The driver may actuate or provide such inputs to select the destination or initial waypoint or to override the navigation system or the like or to enter telephone numbers (for a communication system) or street addresses or the like. The navigation system thus may retract the display screen when it is not needed or desired by the driver. As the vehicle approaches the next waypoint or milestone in the journey, the display screen may again extend and provide the next appropriate instruction and/or map to the driver of the vehicle. Likewise, if the driver is less familiar with the route, or merely wants to check the location or progress or the like, the driver may override the system to cause the display screen to extend and activate to show the next instructions or directional heading or a map or any trip statistics that the driver may want to review. For example, the driver may actuate an input or control at the display screen or at the steering wheel or at the mirror assembly or elsewhere in the vehicle or may provide a vocal message to cause the display screen to extend and activate to display such instructions, heading, maps or information or the like.

If a particular waypoint is passed or missed, such that the vehicle is no longer on or following the programmed route, the system may extend the display screen to alert the driver and may display a warning that a turn or exit or the like was missed, and may provide instructions as to how to get back on the programmed route, such as described in U.S. pat. application, Ser. No. 10/645,762, filed Aug. 20, 2003 by Taylor et al. for VEHICLE NAVIGATION SYSTEM FOR USE WITH A TELEMATICS SYSTEM. The display screen may be extended in this manner even during the initial or familiar part of the route to alert the driver that he or she has departed from the desired route.

The display screen thus may extend to alert the driver that information or video pertaining to one of the activating or triggering events or waypoints is being displayed. The driver's attention is thus drawn to the display screen when such information is being displayed, such that the driver is not likely to miss or overlook or ignore such information. The display screen thus provides a driver prompt that prompts the driver to look at the display screen for new information that is being displayed thereon. Optionally, an audible prompt may be provided to alert the driver to look at the display screen for the instructions. Optionally, the navigation system and/or display screen device may be operable to turn down the volume of other vehicle systems, such as a radio or communication system or the like, when the display screen is extended, such that the driver may focus on the display screen or so that the driver may readily hear and recognize the audible prompt or voice command or alert signal.

Optionally, the driver prompt or alert may be provided via an audio signal or a tactile signal at the steering wheel or the like (such as a vibration of the steering wheel to alert the driver to view the display screen), and may be provided in addition to the automatic extension of the display screen or as a separate or secondary prompt. Such a secondary prompt may be particularly useful when the driver passes a waypoint or milestone in a journey. In such a situation, the display screen may already be extended to display the next waypoint / instructions, so the secondary prompt may alert the driver to check or view the display screen to notify the driver that he or she has passed the waypoint. Also, such a secondary prompt or audio or tactile signal may be particularly useful when the display screen is already extended for one function or system and another dynamic activating or triggering event occurs that has a higher priority than the first function or system. Because the display screen is already extended, the driver may not be prompted by the extension of the screen to view the new information. Therefore, the secondary prompt or signal may be provided to alert the driver to again look at the display screen. For example, if the driver or occupant of the vehicle is using a telephone system and the display screen is already extended to show telephone numbers or the like as the vehicle approaches a waypoint, the display screen may be adjusted or reconfigured to display the next set of instructions and/or compass heading and/or map associated with the approaching waypoint and the secondary prompt may be provided to alert the driver to look at the display screen. It is further envisioned that the display of the navigation instructions may be provided on the screen in addition to the telephone numbers (or other information or video being displayed on the display screen), such as in a picture-in-picture type format (such as is known in the television art) or the like. Optionally, the secondary prompt may only be provided in such situations where the display screen is already extended for a first activating event when a second activating event occurs.

Optionally, the navigation system and display screen may be provided as a self contained module or the like at the windshield area of the vehicle. For example, the navigation system, including the global positioning system antenna and control circuitry and the like, may be provided with a windshield electronics module or accessory module or the like or with the mirror assembly or overhead console, and may be in electrical connection or communication with the display screen device, such as via a wire connection or a wireless communication or the like. The complete navigation system and display thus may lend itself to aftermarket applications and may be installed in an existing vehicle.

For example, a stand alone navigation system may include a slide out or extendable / retractable display screen and a windshield electronics module. The windshield electronics module may include the antenna (such as a global positioning system antenna), controls and circuitry for the navigation system. The controls may be operable to receive manual inputs to set a desired route and may be operable to control or extend / retract the display screen and to activate the display screen to display the appropriate information to the driver, based on or in response to the geographical location of the vehicle along the selected or desired route, such as described above. The stand alone navigation system may include a user interface device, such as a keypad or manual inputs or the like, and one or more displays, such as icons, letters, characters, and/or indicia or the like. The user interface device may receive manual inputs that select the desired route (such as by entering a desired destination or address or the like), and the navigation system may determine the appropriate route and the appropriate waypoints at which the display screen may extend and activate to display the appropriate information to the driver of the vehicle.

Optionally, the user interface device may comprise a menu driven device that may display a plurality of functions in response to particular entries or key selections or inputs by the user of the navigation system. For example, the user interface device may include a display screen (and may be at or incorporated into the extendable / retractable display screen) and may include a plurality of inputs or buttons or sensors or the like positioned at or around the display screen. Optionally, the inputs may be positioned at and at least partially around the rim of the mirror, and the display may be provided as a display on demand transflective display at the mirror reflective element, such as a display of the types described in U.S. Pat. Nos. 5,668,663 and/or 5,724,187, and/or in U.S. pat. applications, Ser. No. 10/054,633, filed Jan. 22, 2002 by Lynam et al. for VEHICULAR LIGHTING SYSTEM; and/or Ser. No. 09/793,002, filed Feb. 26, 2001, entitled VIDEO MIRROR SYSTEMS INCORPORATING AN ACCESSORY MODULE, and/or PCT Application No. PCT/US03/29776, filed Sep. 9, 2003 by Donnelly Corp. et al. for MIRROR REFLECTIVE ELEMENT ASSEMBLY. Optionally, the inputs may be positioned around the rim of the display screen and the display on demand transflective displays may be provided at the display screen.

The inputs may be actuated to select particular functions displayed on the screen or may be held in or continuously or repeatedly actuated to scroll through functions or selections displayed on the screen. For example, the destination or address may be keyed into the navigation system by selecting and actuating an input that corresponds to the "destination entry" function shown on the display, where the user may then be prompted to key in the address or street name. The user then may actuate a first input and may continue to actuate the input (such as repeatedly actuating the input or holding the input down to continuously actuate the input) to scroll through the alphabet (such as with the scrolling letter being shown on the display on demand transflective display at the display screen or mirror reflective element) to set the first letter of the street name. Once the first letter is set, the user may do the same with a second input or button or sensor to set the second letter of the street name and so on. After a sufficient amount of letters have been selected (such as the first three or four letters of the street name), the display screen may display multiple street names in the targeted area (which may be input at the onset of the programming of the navigation system) that start with the same letters keyed in by the user. The user then may actuate another input to scroll through the listed street names to find and select the desired street name. For example, the user may key in the first letter, such as "M" for Maple Street by holding down the first button or input until "M" is shown at the first space of the street name. The second letter "a" may be selected in a similar manner. After the first few letters are entered, the user may then scroll through the list of street names that begin, for example, with the letters "M - a - p", and may then scroll down until Maple Street is located, whereby the user may select "Maple Street" to enter the destination. The address and/or city and/or region and/or the like may be entered in a similar manner to input the destination for the vehicle. The navigation system may then program or select the appropriate route and may begin to extend the display screen and activate the display screen to provide the appropriate instructions and/or compass headings and/or maps to the driver of the vehicle as the vehicle travels along the programmed route and approaches the waypoints.

The display screen of the present invention thus may be operable in conjunction with one or more systems of the mirror assembly or accessory module or console or of the vehicle, and may be linked to such systems to display information or video or the like pertaining to the particular system when that system is activated or selected. The display screen may automatically extend and activate to display such information or video when a particular system is activated, or when a particular condition or location of the vehicle is detected, and may automatically retract when the particular system is deactivated or when the particular condition or location of the vehicle is passed. The display screen thus may extend to alert the driver that there is pertinent information or video being displayed at the display screen, and may be retracted when such information or video is not necessary or desired. The driver may override the display screen function to manually retract / deactivate the display screen when it is not desired, or to manually extend / activate the display screen when it is desired. The display system thus provides a dynamic extension system that responds dynamically to driving conditions and/or traffic conditions and/or vehicle conditions and/or hazardous conditions and/or selected systems or accessories.

Optionally, the video display screen device of the present invention may comprise a video display screen module, which may include the video display screen and the control and/or associated circuitry on the frame or support, such that the module is extendable and retractable relative to the mirror casing. Such a video display screen module may be purchased from a video display screen module source or supplier and assembled or installed into the mirror product at the mirror assembly plant. For example, the module may be slidably installed as a single unit on or along one or more slide members at the mirror casing and electrically connected to a lead or wire or connector at the mirror assembly, thereby easing the manufacturing processes of the mirror assembly and video display screen assembly. Although the addition of the control and associated components and circuitry to the extendable frame may add weight to the extended portion of the video display screen module, this is of minimal concern since any additional vibration of the mirror assembly which may occur due to the additional weight extended outward from the mirror casing may occur when the video display screen is in its extended position, which, as discussed above, is preferably occasional or temporary, and typically when the video display screen is in use.

It is further envisioned that the frame of the video display screen device of the present invention may support or include or contain one or more other accessories or controls. For example, one or more user actuatable controls or buttons may be included on the frame and may be operable to actuate or control the video display screen and/or one or more other accessories, such as a rearward viewing device or system, a cabin viewing device or system or a video communication device or system, or other accessories of the mirror assembly or of an accessory module or of the vehicle. Optionally, the frame may include or support other accessories, such as one or more microphones or speakers or the like, which may be associated with a video communication device or system in communication with the video display screen or may be associated with other audio devices or systems of the vehicle. Optionally, the frame may support or include a camera or video or imaging device or sensor, which may be directable toward the driver of the vehicle when the frame is extended toward the driver side of the vehicle. For example, the camera, video display screen and a microphone or microphones may all be included on the support frame of the video display screen device and may function in connection with a video and audio communication device or system or the like, such as a system utilizing principles disclosed in U.S. Pat. Nos. 6,243,003; 6,278,377; and/or 6,420,975; and/or PCT Application No. PCT/US03/30877, filed Oct. 1,2003. Other controls and/or accessories, such as discussed below with respect to the mirror assembly, may also or otherwise be included in or incorporated into the frame of the video display screen device, without affecting the scope of the present invention.

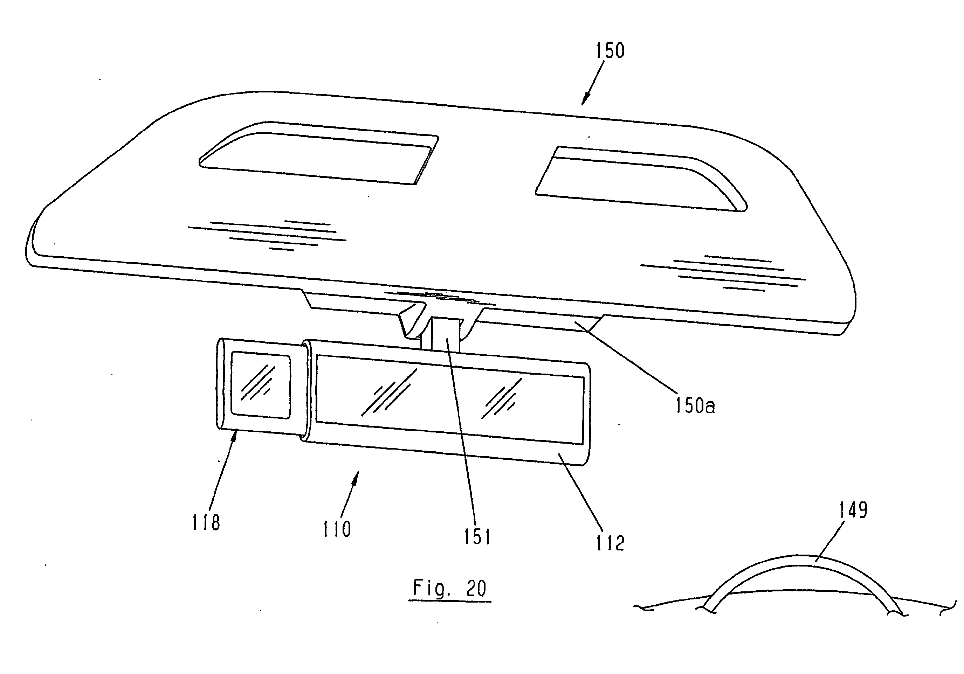

Although shown and described as being positioned on a driver side of the mirror assembly when the mirror assembly is installed in a vehicle, a video display screen device in accordance with the present invention may alternately or additionally or preferably be positioned on the passenger side of the mirror assembly to provide an extendable and retractable video display screen for viewing by a passenger of the vehicle, without affecting the scope of the present invention. Because the mirror assembly is typically angled toward the driver of the vehicle to provide the driver with the appropriate or desired rearward field of view, the driver side video display screen device of the present invention may, in its extended position, interfere with or contact the windshield when the mirror assembly is angled toward the driver. In such applications where there may be insufficient clearance on the driver's side, it is desirable and preferable to have the video display screen slide outward toward the passenger side of the vehicle (as shown in FIGS. 12 and 20). Because the mirror assembly is angled toward the driver of the vehicle, the passenger side video display screen may be readily viewable by the driver of the vehicle when it is extended from the mirror assembly. Optionally, the passenger side video display screen may be pivotable relative to the mirror casing to further angle the video display screen toward the driver to enhance the viewing of the video display screen. Thus, compared to mirror assemblies that have a display screen extend, such as from the bottom of the mirror casing when the mirror is mounted to the windshield, the display screen of the present invention provides an improved display by having the display unit slide or extend laterally out from the mirror casing to reduce potential interference with the forward field of view of the driver of the vehicle. In the former situations with the display screen extending from the bottom of the mirror casing, the display screen may interfere with the forward field of view of the driver of the vehicle, whereas in applications of the present invention such as shown in FIGS. 12 and 20, the display screen may extend to a region at the passenger side of the vehicle and thus is not typically within the forward field of view of the driver during normal driving conditions.

Interior rearview mirror assembly 10 includes a mounting portion 36 (FIGS. 3 and 4), which may be mounted to the vehicle to provide pivotal movement of the mirror casing and reflective element relative to the vehicle. The mounting portion may be mounted to the vehicle, such as to an interior surface of the vehicle windshield or to a header portion of the vehicle or the like, via any mounting arm or mounting arrangement, such as the types disclosed in U.S. Pat. Nos. 5,671,996; 5,813,745; 5,673,994; 5,820,097; 5,708,410; 5,576,687; 5,521,760; 5,330,149; 5,100,095; 5,058,851; 4,930,742; 4,936,533; 4,436,371; 4,524,941; 4,435,042; and/or 4,646,210.

Interior rearview mirror assembly 10 may include bezel portion 14 and casing 12, such as described above, or the mirror assembly may comprise other types of casings or bezel portions or the like, such as described in U.S. Pat. Nos. 6,439,755; 4,826,289; and 6,501,387; and/or U.S. provisional applications, Ser. No. 60/500,858, filed Sep. 5, 2003 by Kulas et al. for INTERIOR REARVIEW MIRROR ASSEMBLY; Ser. No. 60/471,546, filed May 19, 2003 by Uken et al. for MIRROR ASSEMBLY FOR VEHICLE; Ser. No. 60/525,537, filed Nov. 26, 2003 by Uken et al. for MIRROR ASSEMBLY FOR VEHICLE; and Ser. No. 60/525,952, filed Nov. 26, 2003 by Lynam for MIRROR REFLECTIVE ELEMENT FOR A VEHICLE.

Interior rearview mirror assembly 10 may comprise a prismatic mirror assembly or an electrochromic mirror assembly. For example, interior rearview mirror assembly 10 may comprise a prismatic mirror assembly, such as the types described in U.S. Pat. Nos. 6,318,870; 5,327,288; 4,948,242; 4,826,289; 4,436,371; and 4,435,042. Optionally, the prismatic reflective element may comprise a conventional prismatic reflective element or prism or may comprise a prismatic reflective element of the types described in PCT Application No. PCT/US03/29776, filed Sep. 19, 2003 by Donnelly Corp. et al. for MIRROR REFLECTIVE ELEMENT ASSEMBLY ; and U.S. provisional applications, Ser. No. 60/525,952, filed Nov. 26, 2003 by Lynam for MIRROR REFLECTIVE ELEMENT FOR A VEHICLE; and Ser. No. 60/471,872, filed May 20, 2003 by Lynam for MIRROR REFLECTIVE ELEMENT.

Optionally, the mirror assembly may comprise an electro-optic or electrochromic mirror assembly and may include an electro-optic or electrochromic reflective element. The electrochromic mirror element of the electrochromic mirror assembly may utilize the principles disclosed in commonly assigned U.S. Pat. Nos. 5,140,455; 5,151,816; 6,178,034; 6,154,306; 6,002,544; 5,567,360; 5,525,264; 5,610,756; 5,406,414; 5,253,109; 5,076,673; 5,073,012; 5,117,346; 5,724,187; 5,668,663; 5,910,854; 5,142,407 and/or 4,712,879 and/or as disclosed in the following publications: N. R. Lynam, "Electrochromic Automotive Day/Night Mirrors", SAE Technical Paper Series 870636 (1987); N. R. Lynam, "Smart Windows for Automobiles", SAE Technical Paper Series 900419 (1990); N. R. Lynam and A. Agrawal, "Automotive Applications of Chromogenic Materials", Large Area Chromogenics: Materials and Devices for Transmittance Control, C.M. Lampert and C.G. Grandquist, EDS., Optical Engineering Press, Wash. (1990), and/or as described in U.S. pat. applications, Ser. No. 10/054,633, filed Jan. 22, 2002 by Lynam et al. for VEHICULAR LIGHTING SYSTEM ; and/or Ser. No. 09/793,002, filed Feb. 26, 2001, entitled VIDEO MIRROR SYSTEMS INCORPORATING AN ACCESSORY MODULE. The mirror assembly may include one or more other displays, such as the types disclosed in U.S. Pat. Nos. 5,530,240 and/or 6,329,925, and/or display-on-demand transflective type displays, such as the types disclosed in U.S. Pat. Nos. 5,668,663 and/or 5,724,187, and/or in U.S. pat. applications, Ser. No. 10/054,633, filed Jan. 22, 2002 by Lynam et al. for VEHICULAR LIGHTING SYSTEM ; and/or Ser. No. 09/793,002, filed Feb. 26, 2001, entitled VIDEO MIRROR SYSTEMS INCORPORATING AN ACCESSORY MODULE, and/or PCT Application No. PCT/US03/29776, filed Sep. 9, 2003 by Donnelly Corp. et al. for MIRROR REFLECTIVE ELEMENT ASSEMBLY. The thicknesses and materials of the coatings on the substrates, such as on the third surface of the reflective element assembly, may be selected to provide a desired color or tint to the mirror reflective element, such as a blue colored reflector, such as is known in the art and such as described in U.S. Pat. Nos. 5,910,854 and 6,420,036, and in PCT Application No. PCT/US03/29776, filed Sep. 9, 2003 by Donnelly Corp. et al. for MIRROR REFLECTIVE ELEMENT ASSEMBLY.

Optionally, and with reference to FIG. 6, the mirror assembly may include a user actuatable input or inputs 15 to activate or deactivate or adjust one or more accessories of the mirror assembly or accessory module or console or of the vehicle. The inputs 15 may be positioned at the mirror casing 12 or bezel portion 14 of the mirror assembly where they may be readily accessible by the driver or occupant of the vehicle. The inputs may comprise push buttons or the like or touch sensitive elements or sensors or proximity sensors or the like that may be selectably touched or depressed or approached to activate/deactivate/adjust the accessory or accessories, as discussed below.

Optionally, and desirably, the user inputs 15 may comprise one or more touch sensitive elements or touch sensors or proximity sensors positioned along the plastic mirror portion, such as the plastic casing or plastic bezel portion of the mirror assembly. The touch sensors or proximity sensors may be molded into the plastic mirror portion when the plastic mirror portion is formed or may be positioned in pockets within the plastic casing or plastic bezel portion, such that touching or approaching the plastic mirror portion with a finger or the like in the region where the touch sensor is positioned will actuate the touch sensor to provide the desired control function. The touch sensor thus may provide control or adjustment of one or more accessories, without the mechanical components and costs associated with known mechanical buttons and switches and the like. The touch sensors may be associated with or electrically connected to circuitry or a printed circuit board of the mirror assembly or of the vehicle or of an accessory module or console or the like of the vehicle or mirror assembly, whereby actuation of the touch sensor or sensors causes a corresponding activation or deactivation or adjustment or control of a desired or associated accessory or function, as also discussed below.

The touch sensitive elements or touch sensors or proximity sensors may utilize aspects of touch sensitive elements of the types described in U.S. Pat. Nos. 6,001,486; 6,310,611; 6,320,282; and 6,627,918, and U.S. pat. application, Ser. No. 09/817,874, filed Mar. 26, 2001 by Quist et al. for INTERACTIVE AUTOMOTIVE REARVISION SYSTEM. For example, the proximity sensor may comprise a capacitive proximity sensor that is operable to detect a capacitive disturbance or electric field detection or disturbance at or near the sensor when an object, such as a person's finger or the like, enters the electric field at the sensor. The proximity sensor may detect such a presence without requiring actual contact with the person's finger, and may detect the presence of the person's finger when the person's finger is within a few millimeters of the sensor, such as within approximately 3 mm or about 1 mm or closer. Optionally, the touch sensitive element may comprise a sensor of the types commercially available from TouchSensor Technologies, LLC of Wheaton, IL. For example, the sensor may be operable to generate an electric field and to detect the presence of a conductive mass entering the field. When a voltage is applied to the sensor, the sensor generates the electric field, which emanates through any dielectric material, such as glass or plastic or the like (such as through the plastic bezel portion or the plastic casing of the mirror assembly or through the reflective element), at the sensor. When a conductive mass (such as a person's finger or the like, or metal or the like) enters the electric field, the sensor may detect a change in the field and may indicate such a detection.

The sensor may be implemented at the mirror assembly without requiring any new interface designs and with no need for electronic modification of a mirror assembly designed for conventional electromechanical buttons or switches. Because the touch sensitive elements or sensors have no moving parts to wear out, such touch sensitive elements may provide enhanced durability and longer life cycles over conventional mechanical switches.

As shown in FIG. 6, the touch sensors or proximity sensors may be positioned along, such as by being embedded in the bezel material and/or being positioned behind the bezel portion of the mirror assembly, where a user may touch or approach the sensor or sensors to activate / deactivate or control or adjust the associated accessory or function. By having the touch sensors or proximity sensors in and/or physically behind the plastic material of the mirror portion, the presence of the sensor need not necessarily be readily visible to or discernable to the driver and/or occupant of the vehicle. Optionally, the sensors may include demarcations or printing or the like to be visible or discernible to a user, or the sensors may be positioned within or behind the bezel portion (or elsewhere at the mirror assembly or display screen or accessory module or console or the like) with no readily visible or discernible demarcations to indicate their presence. For example, the bezel portion at the proximity / touch sensors may be color coded or may have icons or indicia or text or the like printed or screened thereon, or the sensors may be positioned at raised moldings or the like at the bezel or may be at respective illumination sources or the like to make the location of the sensors known to a user. Alternately, the location of the sensors may be substantially not readily visible or discernible at the mirror assembly, without affecting the scope of the present invention. In such applications where the locations of the proximity / touch sensors are not readily known or observed or discerned, it may be desirable to provide a display or displays along the reflective element at or above the sensors to indicate to the user the location and function of the proximity / touch sensors, as discussed below.

Likewise, in order to provide feedback to the user to indicate that the user successfully actuated the touch sensor or proximity sensor, it is envisioned that an illumination source, such as a light emitting diode (LED) or the like, may be positioned at or adjacent to a respective touch sensor, and may be energized or may glow when the touch sensor is actuated. The illumination source may be molded into the plastic mirror portion (such as the plastic bezel portion or the plastic casing at which the touch sensor is positioned) or may be embedded or positioned in a pocket formed in the plastic mirror portion. The plastic mirror portion may have a thin plastic wall at the region of the illumination source, such that the glowing illumination source may be visible through the thin plastic wall when the touch sensor is successfully actuated.

Optionally, one or more touch sensors or proximity sensors may be positioned along the bezel portion of the mirror assembly, and the mirror assembly may include one or more displays 15a, such as display on demand transflective type of displays, at the reflective element generally at or near or above the touch sensors. The display or displays may be operable to display an icon or character or text or indicia or the like that is associated with the function of the respective touch sensor when the touch sensor is actuated. The display thus may,provide an indication of the function of the touch sensor and/or may provide an indication that the user successfully actuated the touch sensor. For example, if a touch sensor functions to activate and deactivate an accessory, such as, for example, a passenger side inflatable restraint (PSIR), an icon such as "PSIR on" may be energized or backlit or the like when the touch sensor is actuated to indicate that the PSIR is activated, and an icon such as "PSIR off' may be energized or backlit or the like when the touch sensor is actuated a second time to indicate that the PSIR is deactivated. The display icons or indicia may be energized or backlit for a period of time following the actuation of the touch sensor and then may be deactivated. If the touch sensors provide a specific function or control, the plastic mirror portion may have an icon or indicia or the like printed thereon that corresponds to the function of the respective touch sensor, and the display may then be activated to provide confirmation of a successful actuation of the touch sensor.

Optionally, and desirably, multiple touch sensors or proximity sensors may be positioned along the bezel portion of the mirror assembly, and the mirror assembly may include one or more displays, such as display on demand transflective types of displays, at the reflective element generally at or near or above the touch sensors (or elsewhere at the reflective element). The touch sensors may control one or more accessories or functions and the function of the touch sensors may change in response to user selections based on a menu driven display. For example, the display or displays may initially be operable to display icons or characters or text or indicia that are associated with initial or selected functions of the touch sensors, and then may be operable to display a second level or set of icons or characters or text or indicia that are associated with a selected second level or set of functions of the touch sensors. The mirror assembly thus may provide a menu driven control system, whereby the function or functions of the touch sensors may change or may be reconfigured depending on what initial function is selected or is displayed on the reflective element.

For example, the touch sensors may initially correspond to a particular or respective accessory or control function and a user may first actuate one of the touch sensors to cause a display to show a selectable function or functions associated with the particular accessory, such as multiple functions pertaining to the particular accessory. For example, one of the touch sensors may be actuatable to control or adjust a compass system and display, whereby the display may show functions or controls for the compass system at respective ones of the touch sensors, such as "on" at one of the touch sensors, "off' at another one of the touch sensors, "cal" at another touch sensor (for calibrating the compass system or manually activating a calibration mode of the compass system), "zone" at another touch sensor (for changing the zone of the compass system), and/or the like. After touching the "compass" touch sensor to actuate the compass menu, the user may then actuate an appropriate touch sensor associated with the desired function. The user actuatable control or input thus provides two or more levels of controls, where the first level (or first actuation of one of the touch sensors) causes the display to show the second level of associated control functions and causes the function of the touch sensors to change corresponding to what is displayed at the reflective element. The touch sensors may then toggle the desired function or may adjust the desired function or may select a third level of menus or functions for the touch sensors to control or adjust.

Optionally, an initial actuation of any one of the touch sensors or proximity sensors causes the display to display or indicate the initial or default function of the touch sensors, such as "compass", "temperature", "PSIR", "clock", "lights", and/or the like for the user to select to switch the display and touch sensors to the desired control level. For example, a user may initially actuate any of the touch sensors to view a display of their initial or default functions and then may selectably actuate the touch sensor at the "lights" icon, whereby the display may display different lights to activate / deactivate, such as, for example, "map" (for activating / deactivating map reading lights of the mirror assembly or of an accessory console or overhead system or console or of the vehicle), "ceiling" or "console" (for activating / deactivating ceiling lights of the vehicle or of an accessory console or overhead system or console), "rear seat" (for activating / deactivating lights that illuminate the rear seat of the vehicle, such as for a baby view camera or the like, such as described in U.S. Pat. No. 5,877,897 and/or U.S. pat. application, Ser. No. 09/793,002, filed Feb. 26, 2001, entitled VIDEO MIRROR SYSTEMS INCORPORATING AN ACCESSORY MODULE), "door" (for activating / deactivating lights in the vehicle doors), and/or other lights of the mirror assembly or an accessory module or an accessory console or overhead system or console or of the vehicle.

Optionally, the intensity or brightness of the display or displays may be automatically adjusted in response to an ambient light sensor or glare detector, such as a sensor of the interior rearview mirror assembly or vehicle or of a console or module or the like, such as the types disclosed in U.S. Pat. Nos. 4,793,690 and/or 5,193,029. In applications where the mirror reflective element assembly comprises an electro-optic or electrochromic mirror reflective element assembly, the displays may be automatically adjusted in response to the ambient light sensor or glare detector associated with the electro-optic or electrochromic circuitry or system. The display intensity of the displays may be adjusted in response to the photo sensor or light sensor, and may be increased during daytime lighting conditions and reduced at dusk or during nighttime lighting conditions. The intensity of the displays may be substantially continuously adjusted or may be adjusted in steps in response to the light sensor or sensors, such as by utilizing aspects of the displays described in U.S. Pat. Nos. 5,416,313 and 5,285,060, or may be adjusted when the touch sensors are actuated.

Although shown and described as being positioned at the bezel or casing portion of the mirror assembly, it is envisioned that the touch sensors or proximity sensors or elements may be positioned elsewhere at or on the mirror assembly and may be positioned at the reflective element of the mirror assembly, such as behind the reflective element (where the presence of a person's finger at or near the reflective element may actuate the touch sensor or proximity sensor), without affecting the scope of the present invention. The reflective element assembly may comprises a display on demand transflective display and may include such proximity sensors to function as a touch screen (or proximity screen) for selecting or inputting the desired functions or inputs. It is also envisioned that the touch sensors or proximity sensors and displays of the types described above may optionally be provided at the display screen device of the present invention, such as at or within the frame of the display screen device or behind the display screen such that the display screen may provide a touch screen to provide menu driven controls or selections, or the touch sensors may be provided at an overhead console or accessory system or module or the like (such as at the overhead accessory system or module discussed below), without affecting the scope of the present invention. Also, although described as capacitive or electric field disturbance sensors that are actuatable by the user touching or approaching the plastic mirror portion or the reflective element or other mirror portion or module portion at the region corresponding to the touch sensor, it is envisioned that the proximity sensors or elements may comprise other touchless sensors or elements, such as antennae or antenna segments or the like that detect the presence of a person's finger at or near the region corresponding to the antenna segments, such as described in U.S. provisional application, Ser. No. 60/508,086, filed Oct. 2, 2003 by Schofield for MIRROR REFLECTIVE ELEMENT ASSEMBLY INCLUDING ELECTRONIC COMPONENT.

Optionally, the mirror assembly may include one or more other accessories at or within the mirror casing, such as one or more electrical or electronic devices or accessories, such as antennas, including global positioning system (GPS) or cellular phone antennas, such as disclosed in U.S. Pat. No. 5,971,552, a communication module, such as disclosed in U.S. Pat. No. 5,798,688, a blind spot detection system, such as disclosed in U.S. Pat. Nos. 5,929,786 and/or 5,786,772, transmitters and/or receivers, such as a garage door opener or the like, a digital network, such as described in U.S. Pat. No. 5,798,575, a high/low headlamp controller, such as disclosed in U.S. Pat. Nos. 5,796,094 and/or 5,715,093, a memory mirror system, such as disclosed in U.S. Pat. No. 5,796,176, a hands-free phone attachment, a video device for internal cabin surveillance and/or video telephone function, such as disclosed in U.S. Pat. Nos. 5,760,962 and/or 5,877,897, a remote keyless entry receiver, lights, such as map reading lights or one or more other lights or illumination sources, such as disclosed in U.S. Pat. Nos. 5,938,321; 5,813,745; 5,820,245; 5,673,994; 5,649,756; 5,178,448; 5,671,996; 4,646,210; 4,733,336; 4,807,096; 6,042,253; and/or 5,669,698, and/or U.S. pat. applications, Ser. No. 10/054,633, filed Jan. 22, 2002 by Lynam et al. for VEHICULAR LIGHTING SYSTEM ; and/or Ser. No. 09/793,002, filed Feb. 26, 2001 microphones, such as disclosed in U.S. Pat. Nos. 6,243,003; 6,278,377; and/or 6,420,975; and/or PCT Application No. PCT/US03/30877, filed Oct. 1, 2003, speakers, a compass, such as disclosed in U.S. Pat. Nos. 5,924,212; 4,862,594; 4,937,945; 5,131,154; 5,255,442; and/or 5,632,092, a tire pressure monitoring system, such as the types disclosed in U.S. Pat. Nos. 6,294,989; 6,445,287; and/or 6,472,979, a seat occupancy detector, a trip computer, an ONSTAR^{®} system and/or the like (with all of the above-referenced patents and patent applications being commonly assigned to Donnelly Corporation. The accessory or accessories may be positioned at or within the mirror casing and may be included on or integrated in a printed circuit board 38 (FIGS. 4 and 5) positioned within the mirror casing, such as along a rear surface of the reflective element or elsewhere within a cavity defined by the casing, without affecting the scope of the present invention. The user actuatable inputs and/or touch sensors and/or proximity sensors and displays described above may be actuatable to control and/or adjust the accessories of the mirror assembly / system and/or overhead console and/or accessory module and/or vehicle. The connection or link between the controls and the display screen device and/or the navigation system and/or other systems and accessories of the mirror system may be provided via vehicle electronic or communication systems and the like, and may be connected via various protocols or nodes, such as Bluetooth^{™}, SCP, UBP, J1850, CAN J2284, Fire Wire 1394, MOST, LIN and/or the like, or other vehicle-based or in-vehicle communication links or systems (such as WIFI and/or IRDA) and/or the like, depending on the particular application of the mirror / accessory system and the vehicle. Optionally, the connections or links may be provided via wireless connectivity or links, without affecting the scope of the present invention.

Therefore, the present invention provides a mirror assembly that includes a video display screen which is laterally extendable from a side of a mirror casing for viewing by an occupant of a vehicle. The video display screen may be selectably or automatically slidably movable via one or more rails or slide members laterally within the mirror casing. The video display screen may be positioned substantially within the mirror casing when not in use, and may extend substantially outward from the mirror casing toward the driver or passenger side of the vehicle when viewing of the video display screen is desired. By having extension of the video display screen occurring occasionally and in response to one or more activating events or stimuli, such as discussed above, the temporary extension or presence of the video display screen, even when in or partially in the forward field of view of driver, is not unacceptable or hazardous. The extension and retraction mechanism allows for occasional use of the video display screen and allows the video display screen to be stowed when not in use. By slidably positioning the video display screen within the mirror casing, the present invention provides for a large video display screen to enhance viewing of the images displayed thereon by the driver or other occupant of the vehicle, while having a minimal affect on the size of the mirror casing. The mirror casing is formed to be wide enough to receive the video display screen therein, with the mirror casing being at least as wide as the height dimension of the video display screen. Although shown and described as being preferably incorporated into an interior rearview mirror assembly mounted at an interior surface of the windshield or alternatively at an interior rearview mirror assembly mounted at a header portion of the vehicle or the like, embodiments of the present invention may be of benefit and may be used in other regions of the vehicle, such as in windshield electronic modules or accessory modules or overhead systems or overhead consoles or the like, or into an instrument panel portion of the vehicle, or elsewhere in the vehicle.

Referring now to FIGS. 17-19, interior rearview mirror assembly 10 may be mounted to a forward portion 50a of an overhead accessory system or module 50 via the mounting portion 36. The forward portion 50a of overhead accessory module 50 may extend downward and forwardly, such as along an interior surface of the windshield 11, such that mirror assembly 10 is positioned generally along the interior portion of the windshield and below the overhead accessory module 50. Accessory module 50 may include one or more accessories, systems, user interface controls, light sources, storage compartments, visors, antenna, and/or the like, as discussed below. The overhead accessory system or module 50 provides an integrated overhead system which may extend substantially across the width of the vehicle, as can be seen in FIGS. 17-19. The overhead accessory system extends laterally or in a direction generally transverse to the direction of travel of the vehicle to define a cross-car overhead accessory module or system.

Overhead accessory system 50 may be suitable for a subsystem supplier or system integrator to provide the integrated overhead accessory system or module to the vehicle assembly line. The integrated overhead accessory system may thus provide substantial subsystems of the vehicle in a form that allows the vehicle assembler to readily install the subsystems as a single unit, thereby substantially reducing assembly and manufacturing processes for the vehicle assembly plant. The overhead accessory system may be shipped as a fully integrated unit, whereby the operator may make the mechanical attachments of the accessory module to the vehicle body and the minimum required electrical connections to connect electrical power and/or cables and/or the like (such as for communication with other controls or systems of the vehicle) to the accessory system. The electrical connections may be made to vehicle wiring harnesses or cables or systems or circuitry or controls the like, such as to vehicle electronic or communication systems and the like, and may be connected via various protocols or nodes, such as Bluetooth^{™}, SCP, UBP, J1850, CAN J2284, Fire Wire 1394, MOST, LIN and/or the like, depending on the particular application of the overhead accessory system and the vehicle.

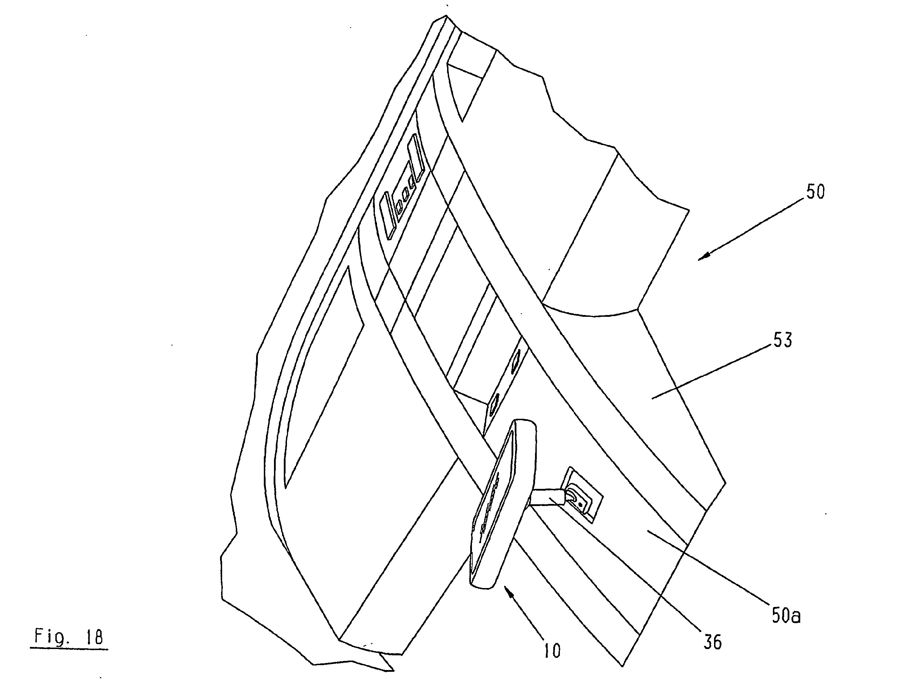

As shown in FIGS. 17 and 18, the overhead accessory system or module 50 may include decorative trim portions or the like 53, which may extend downward to decorate or finish the forward extending portion 50a of the overhead accessory system. Optionally, the overhead accessory system may be provided to a vehicle assembly plant as a chassis or skeleton of the overhead system (and may include the accessories and wiring), whereby the vehicle manufacturer (or optionally the supplier of the overhead accessory system) may attach different types of caps or skin portions or the like to the skeletal accessory module, whereby the manufacturer may customize the overhead accessory system for the desired appearance or function.

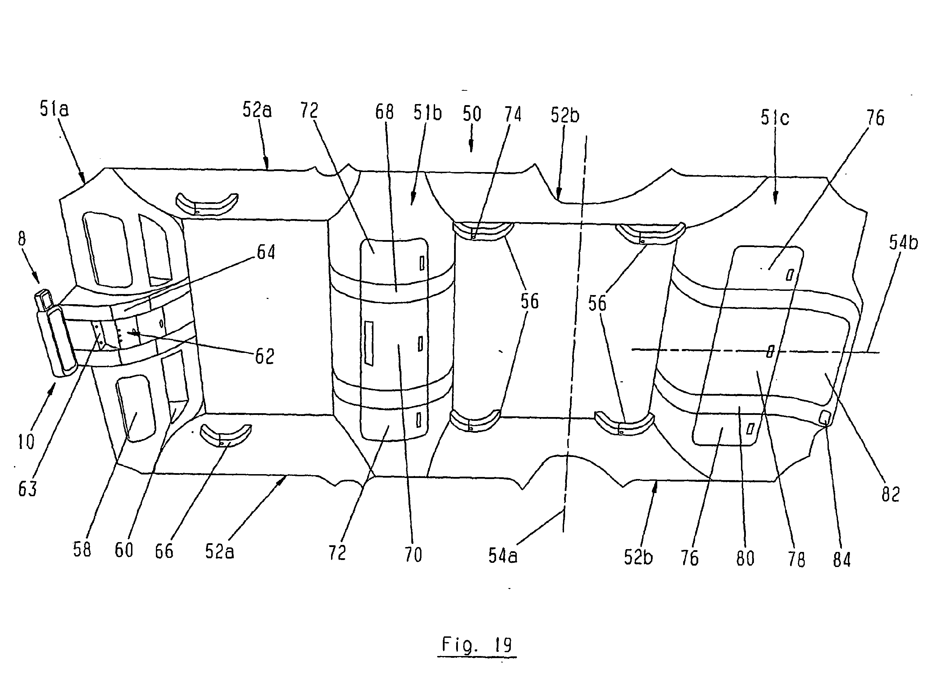

As can be seen with reference to FIG. 19, the overhead accessory module or system 50 may comprise multiple cross car consoles or modules 51 a, 51b and 51c. The individual cross car consoles or modules 51 a, 51 b, 51 c may be integrated with one another and may include bracing elements 52a, 52b extending longitudinally along the vehicle (such as along the side portions of the vehicle as shown in FIG. 19 or along a center line or elsewhere along the upper portion of the vehicle) between the spaced apart cross car consoles or modules. The overhead accessory system 50 thus may include a forward or header cross module 51a, a center or middle cross car module 51b and/or a rear cross car module 51c, each of which extends generally transverse to the direction of travel of the vehicle, such as along or generally parallel to the transverse line 54a shown in FIG. 19. The bracing elements 52a, 52b may extend generally between the cross car modules and generally along or generally parallel to a longitudinal line 54b (FIG. 19) along the vehicle. The bracing elements may provide an electrical connection between the modules for communication between accessories or wires or systems in one of the modules or consoles to another, depending on the accessories or systems incorporated into the modules and the intended application of the overhead accessory system. Optionally, the cross car modules may be configured to extend longitudinally along the car from front to rear, with the bracing or connecting elements extending laterally across the car or side to side between the longitudinal modules.

Because the rear cross car console or module 51 c may include electronic accessories, such as a rear vision assist camera or lights or a center high mounted stop lamp or the like, and because the front console 51a may also include electronic accessories, the front and rear consoles (and middle console, if applicable) may be electrically interconnected, such that the electrical connection to the vehicle may be performed at only one location as the overhead accessory system is mounted to the vehicle. For example, the vehicle manufacturer may bring utilities or electrical connections through the front upper portion of the vehicle, whereby the front accessory console 51a may connect to the utilities or wires or cables or the like at the front of the vehicle cabin. If the overhead accessory system includes a middle console and/or rear console, which further includes an electronic accessory, such as a stop lamp or other light source or camera or the like, the overhead accessory system may have the appropriate connection for the electronic accessory of the middle console and/or rear console at the front console, such that a single electrical connection or connections may be made at the front console during installation of the overhead accessory system to minimize the electrical connections for the overhead accessory system during installation of the accessory system to the vehicle at the vehicle assembly plant. The overhead accessory system thus may provide an integrated accessory system which may provide electrical accessories at both the front and rear of the vehicle and may provide electrical connection to such accessories via a single electrical connection with the vehicle wiring or wire harness or controls or power source or the like. The device thus may be readily installed into the vehicle as an integrated unit to minimize the assembly processes at the vehicle assembly plant.

The multiple modules or consoles and bracing elements may be provided to the vehicle assembly plant as an assembled unit or may be provided as separate components. The operator or operators at the vehicle assembly plant may install the individual modules or consoles and then may install the connecting or bracing elements between the modules. In applications where the modules or consoles include electronic accessories, the bracing elements may include wiring and may electrically connect to each of the adjacent modules as the bracing elements are installed to the vehicle or mechanically attached to the modules. For example, the bracing members or elements and the modules may include corresponding electrical connectors, such as plug and socket type electrical connectors or snap together type electrical connectors, such that as the bracing members and/or the modules are installed, the electrical connection between the components are made.

The overhead accessory system 50 may be modified depending on the vehicle or desired application of the accessory system. For example, in some vehicles, only the front or header cross module 51a may be installed, while others may include a front console 51a and a rear console 51c, or a front console 51a and a middle console 51 b, or a front console 51a, a middle console 51 b and a rear console 51 c, or only a middle or island console 51 b, or only a rear console 51 c, or any desired combination of consoles and connectors or bracing elements. For example, for a larger vehicle (such as a Suburban or other sport utility vehicle, van or like), the overhead accessory system may include three overhead accessory consoles (or more consoles if desired), such as shown in FIG. 19. Optionally, the center or middle cross car console 51b may be separately implemented or mounted to the vehicle as an island and thus may not be connected to either a front console or a rear console (any electrical connection to the vehicle wiring would thus preferably be made at the center portion of the vehicle cabin). Likewise, the rear cross car module may be independently implemented at the rear portion of the vehicle and thus, may not be connected to a forward or middle console (with any electrical connection to the vehicle wiring preferably being made at the rear portion of the vehicle cabin). The overhead accessory system thus provides a modular overhead accessory system which may be selected or mixed and matched for the particular application of the overhead accessory system.

The overhead accessory system may be mounted to the existing headliner or roof of the cabin of the vehicle or to a glass panel or glazing at the roof of the cabin of the vehicle. Optionally, the accessory system may include one or more glass panels or may include openings which correspond or generally align with glass panels or windows in the roof of the cabin of the vehicle. In the illustrated embodiment of FIG. 19, overhead accessory module 50 includes glass mounted grab handles 56, which are mounted to the glass window or glazing 57 at the roof of the cabin of the vehicle, such as by utilizing the principles disclosed in U.S. Pat. Nos. 6,490,788; 6,231,111; 6,019,411; and 5,667,896.

As shown in FIG. 19, the overhead accessory system 50 may include visors 58, open storage areas or compartments 60, user interface controls 62 (such as for a telematics system, compass/temperature display, trip computer, lights, garage door opening system, moon roof and/or the like), one or more displays 63 (such as a compass display, a temperature display, an accessory status display, and/or any other information display or vehicle status display or the like), lights 64, grab handles 66, storage lights 68, a video display 70 (such as for a DVD player or the like), storage compartments 72 (such as for headphone storage or the like), grab handles 56 (which may include lights 74), rear storage compartments 76 (such as for storage of tools or the like or for any other items which may desirably stored at the rear portion of the cabin of the vehicle), a first aid kit storage compartment 78, lights 80, a center high mounted stop lamp 82, a rear vision or backup assist camera or imaging device 84, and/or any other accessories or compartments or systems (such as, for example, rain sensor systems, automatic headlamp control systems, antenna for various communication systems or the like) which may be desired for the particular application of the overhead accessory system.

Optionally, for example, one or more of the accessory modules of the overhead accessory system may include one or more electrical or electronic devices or accessories, such as antennas, including global positioning system (GPS) or cellular phone antennas, such as disclosed in U.S. Pat. No. 5,971,552, a communication module, such as disclosed in U.S. Pat. No. 5,798,688, a blind spot detection system, such as disclosed in U.S. Pat. Nos. 5,929,786 and/or 5,786,772, transmitters and/or receivers, such as a garage door opener or the like, a digital network, such as described in U.S. Pat. No. 5,798,575, a high/low headlamp controller, such as disclosed in U.S. Pat. Nos. 5,796,094 and/or 5,715,093, a memory mirror system, such as disclosed in U.S. Pat. No. 5,796,176, a hands-free phone attachment, a video device for internal cabin surveillance and/or video telephone function, such as disclosed in U.S. Pat. Nos. 5,760,962 and/or 5,877,897, a remote keyless entry receiver, lights, such as map reading lights or one or more other lights or illumination sources, such as disclosed in U.S. Pat. Nos. 5,938,321; 5,813,745; 5,820,245; 5,673,994; 5,649,756; 5,178,448; 5,671,996; 4,646,210; 4,733,336; 4,807,096; 6,042,253; and/or 5,669,698, and/or U.S. pat. applications, Ser. No. 10/054,633, filed Jan. 22, 2002 by Lynam et al. for VEHICULAR LIGHTING SYSTEM; and/or Ser. No. 09/793,002, filed Feb. 26, 2001, microphones, such as disclosed in U.S. Pat. Nos. 6,243,003; 6,278,377; and/or 6,420,975, and/or PCT Application No. PCT/US03/30877, filed Oct. 1, 2003 , speakers, a compass or compass system, such as disclosed in U.S. Pat. Nos. 5,924,212; 4,862,594; 4,937,945; 5,131,154; 5,255,442; and/or 5,632,092, and/or U.S. pat. application, Ser. No. 10/456,599, filed Jun. 6, 2003 by Weller et al. for INTERIOR REARVIEW MIRROR SYSTEM WITH COMPASS, a navigation system, such as described in U.S. Pat. No. 6,477,464, and U.S. pat. applications, Ser. No. 10/456,599, filed Jun. 6, 2003 by Weller et al. for INTERIOR REARVIEW MIRROR SYSTEM WITH COMPASS; Ser. No. 10/287,178, filed Nov. 4, 2002 by McCarthy et al. for NAVIGATION SYSTEM FOR A VEHICLE; Ser. No. 10/645,762, filed Aug. 20, 2003 by Taylor et al. for VEHICLE NAVIGATION SYSTEM FOR USE WITH A TELEMATICS SYSTEM and Ser. No. 10/422,378, filed Apr. 24, 2003 a tire pressure monitoring system, such as the types disclosed in U.S. Pat. Nos. 6,294,989; 6,445,287; and/or 6,472,979, a seat occupancy detector, a trip computer, a telematics system, such as an ONSTAR^{®} system or the like, and/or any other desired accessory or system or the like.

The accessory or accessories may be positioned at or within an appropriate or desired one or more of the overhead cross car modules or consoles and may be connected or integrated via one or more connecting wires or cables or the like connecting between the modules or consoles, such as along or within the bracing members or the like. The accessories may all be connected to the vehicle wiring or power source or controls or the like at a connector or multiple connectors provided at one of the cross car consoles or modules, such that the integrated overhead accessory system and all of the electrical accessories associated therewith or incorporated therein may be readily connected to the vehicle wiring or controls or the like to reduce assembly processes within the vehicle assembly plant.

With reference to FIGS. 20-23, an interior rearview mirror assembly 110 may be mounted to or integrated with an overhead accessory system or module 150. Mirror assembly 110 may be substantially similar to mirror assembly 10, discussed above, and may include a video display screen device 118, which is slidably mounted at least partially within a mirror casing 112 and slidable between a retracted or stored or non-use position (not shown in FIGS. 20-23) and an extended or use position (as shown in FIGS. 20, 22 and 23). Because mirror assembly 110 may be substantially similar to mirror assembly 10, discussed above, a detailed discussion of the mirror assembly and video display screen device will not be repeated herein. As shown in FIG. 20, the mirror assembly is installed in a right hand drive vehicle, such that the video display screen device 118 extends toward the left or passenger side of the vehicle and opposite from the steering wheel 149 of the vehicle. As discussed above, such an arrangement may provide enhanced viewing of the video display screen when the mirror assembly is angled or canted toward the driver of the vehicle.

Mirror assembly 110 is mounted at a forward portion 150a of overhead accessory system or module 150. As discussed above with respect to overhead accessory system 50, overhead accessory system 150 may be mounted or secured to the roof or ceiling or headliner of the cabin or vehicle and may extend substantially across the upper portion of the vehicle. The overhead accessory module or system 150 may include a mounting portion 151 at the forward portion of the system for mounting or integrating the interior rearview mirror assembly 110 with the accessory system 150. Optionally, the overhead accessory system may include one or more other accessory modules or cross car consoles an connecting or bracing elements or members, such as discussed above.

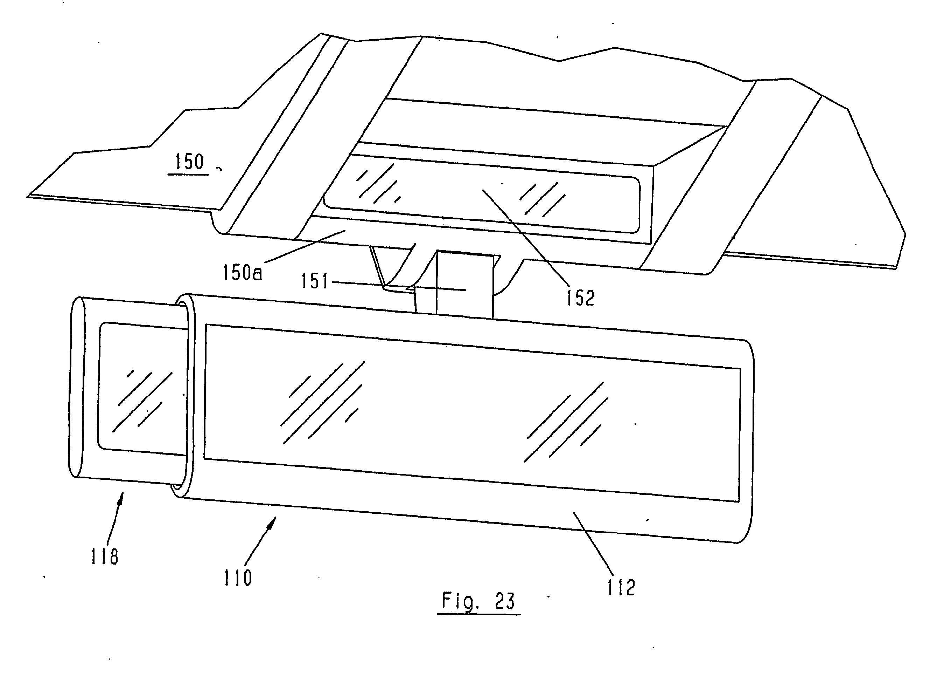

As can be seen in FIGS. 20-23, mirror assembly 110 may be integrated with accessory system 150 via a generally downwardly extending mounting arm 151 mounted to or otherwise secured to the forward portion 150a of overhead accessory system 150. The mirror assembly and integrated overhead accessory system may thus be provided to the vehicle assembly plant as an integrated unit for installation as a unit to the vehicle. Overhead accessory system 150 may include other accessories, systems, displays 152 (such as shown in FIG. 23) and/or the like. Optionally, overhead accessory system 150 may further include user interface controls, storage compartments, grab handles and/or the like, such as discussed above.

Although shown and described as having an interior rearview mirror assembly with a video display screen incorporated therein, the overhead accessory system may include or may receive or incorporate other types of interior rearview mirror assemblies, such as known or conventional prismatic or electrochromic interior rearview mirror assemblies or the like. The interior rearview mirror assembly may also or otherwise include one or more electronic accessories and may connect to an electrical wiring or system of the overhead accessory system. Optionally, the overhead accessory module or system may include controls or circuitry for controlling the accessories or displays at the mirror assembly, such that the mirror assembly may not include the circuitry and controls within the casing of the mirror assembly. For example, the overhead accessory system may include compass sensors, circuitry or the like, and the mirror assembly may provide a directional heading display, whereby the display may be controlled by the circuitry of the overhead accessory system, such as via the principles disclosed in U.S. pat. application, Ser. No. 10/456,599, filed Jun. 6, 2003 by Weller et al. for INTERIOR REARVIEW MIRROR SYSTEM WITH COMPASS. The mirror assembly may be mounted to the overhead accessory system via known or conventional mounting arrangements (such as shown in FIG. 17) or may be integrated with the overhead accessory system (such as shown in FIGS. 20-23).

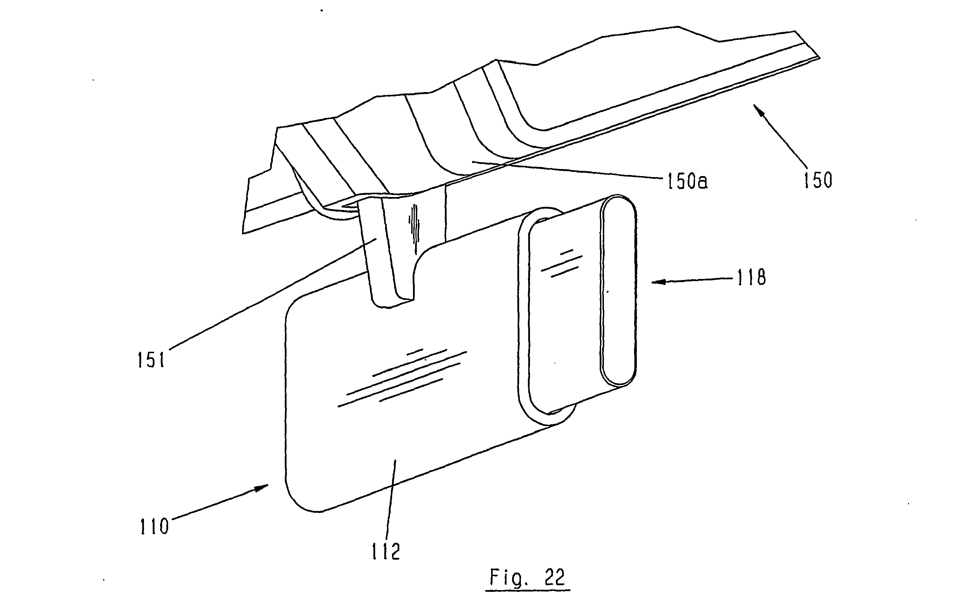

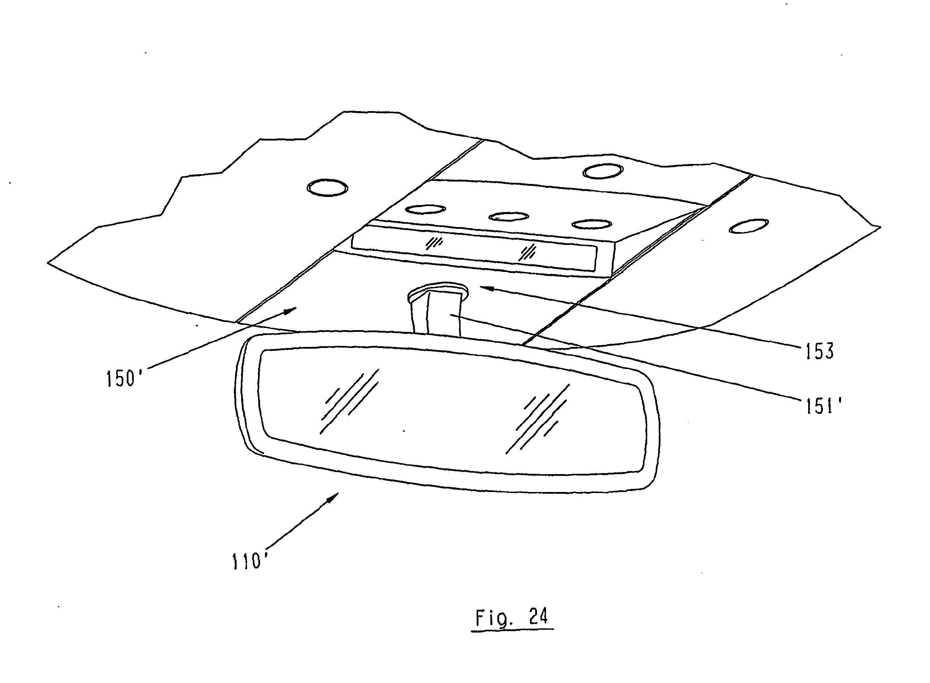

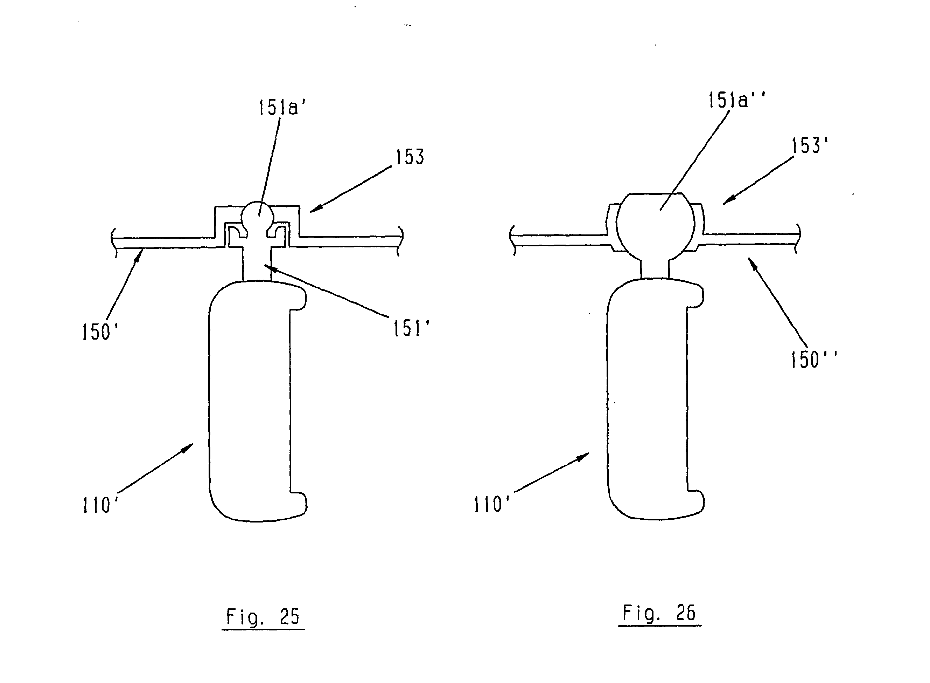

Optionally, and with reference to FIGS. 24-26, an interior rearview mirror assembly 110' may be pivotally mounted to an overhead console or accessory system 150'. Interior rearview mirror assembly 110' may be secured to or attached to a mounting member 151' that is pivotally mounted to overhead console 150'. Mounting member 151' may be fixedly secured to mirror assembly 110' and may extend generally upwardly from an upper or rearward portion or casing of the mirror assembly. Mounting member 151' includes a ball member 151a' at an upper end of mounting member 151'. As shown in FIG. 22, ball member 151a' is pivotally received in a socket or receiving portion 153 of overhead console 150', such that the reflective element 116' of mirror assembly 110' may be adjusted relative to the driver of the vehicle by pivoting the entire mirror assembly 110' and mounting member 151' relative to the overhead console 150'. Optionally, and as shown in FIG. 26, a mounting member 151" may be provided with a larger ball member 151a" that is pivotally received in a socket or receiving portion 153', such as may be desired for heavier mirror assemblies, such as a mirror assembly that may have additional electronic content or accessories, such as, for example, a display screen or the like as described above. The mounting arrangement thus may provide for pivotal adjustment within the overhead console or accessory system or the like and thus may facilitate removal of the known pivotal mounting members from the mirror assembly. The mounting member may be fixedly attached to the mirror casing or may be pivotally attached to the mirror casing to allow pivotal movement or adjustment of the mirror casing relative to the mounting member.

Interior rearview mirror assembly 110' may be similar to the interior rearview mirror assemblies 10, 110, discussed above, or may be any other type of prismatic or electro-optic or electrochromic mirror assembly, such as those described above. In applications where the mirror assembly comprises a prismatic mirror assembly, the mirror assembly or the console may include the toggle mechanism to flip or adjust the mirror assembly and reflective element between daytime and nighttime viewing positions. Also, the accessory console 150', 150" may comprise an overhead accessory system of the types described above and below, or may comprise other types of consoles or the like.

The mounting member may provide a passageway therethrough for routing of electrical wiring or connectors between the overhead console and the mirror assembly to provide electrical connection between the mirror assembly or accessories of the mirror assembly (or of an accessory module or pod or the like associated with the mirror assembly) and the console or the vehicle. Optionally, communication or control between the console and mirror assembly or between the mirror assembly and the vehicle or the like may be provided via a wireless communication network or system, such as described in U.S. pat. application, Ser. No. 10/456,599, filed June 6, 2003 by Weller et al. for INTERIOR REARVIEW MIRROR SYSTEM WITH COMPASS.

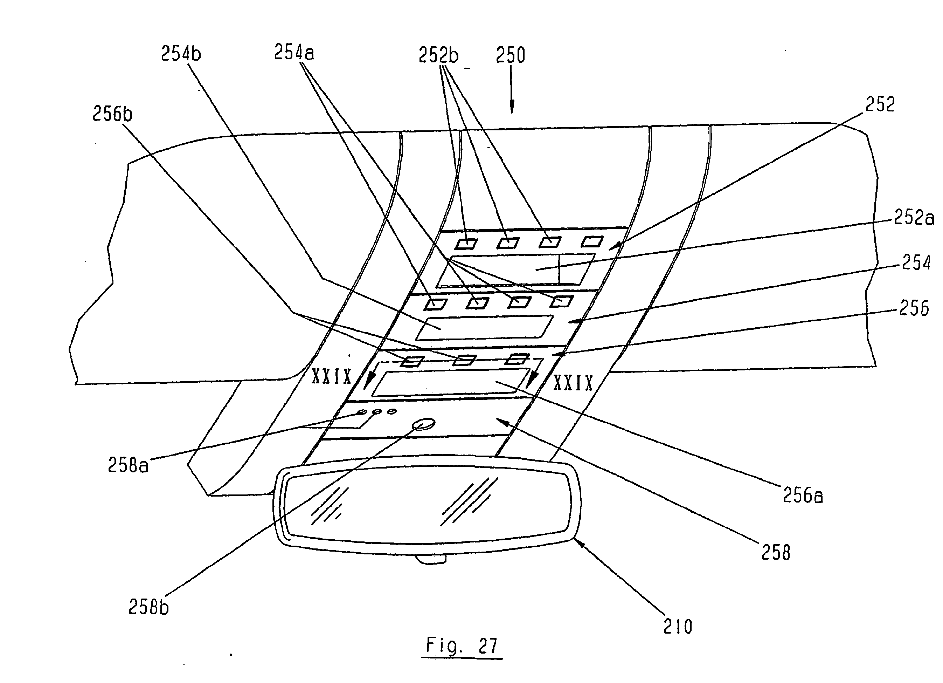

Optionally, and with reference to FIGS. 27-31, an overhead accessory system 250 may be positionable along a headliner portion of a vehicle and may include one or more sub-modules or sub-systems 252, 254, 256, 258 that are positionable at or mountable or connectable to the accessory system 250. The sub-modules 252, 254, 256, 258 may be selected and installed as options as selected by the customer ordering the vehicle, such that the accessory system 250 may provide a common overhead console or housing 251 with basic circuitry or a motherboard or wiring, while the sub-modules 252, 254, 256, 258 may provide the appropriate electronics and circuitry associated with the optional accessory incorporated into the sub-module. The accessory system 250 thus is configurable to receive or interconnect with various optional accessories and may reduce the costs for systems of vehicles where few or none of the optional electrical accessories are selected. For example, if none of the electrical accessories are selected, then the sub-modules may provide storage areas or the like or may provide a trim panel or the like, whereby the base electronics of the console does not include (and thus the consumer does not have to pay for) the intelligent circuitry associated with such optional electronic accessories. The accessory system 250 may include an enabler module 266, which may include a microprocessor or smart circuitry, that may interface with and control the accessories of the sub-modules, as discussed below.

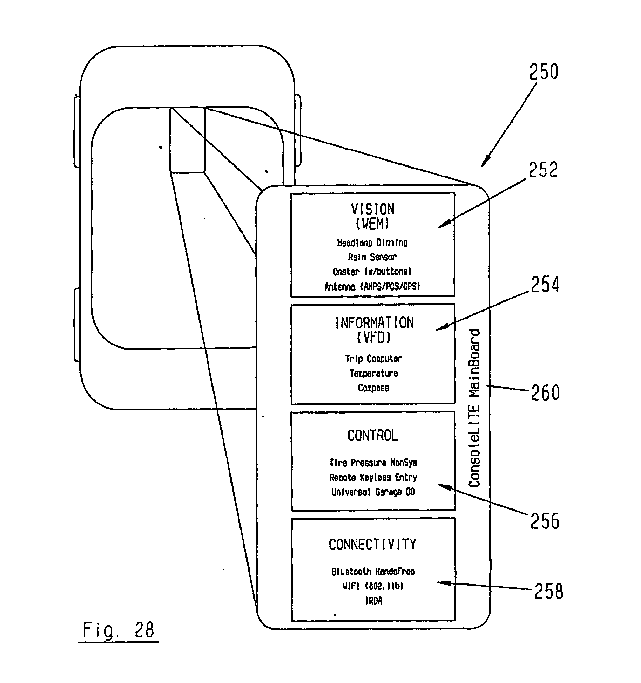

As can be seen with reference to FIGS. 27 and 28, at least some of the sub-modules 252, 254, 256, 258 may include an electronic accessory, and may also or otherwise include or provide an opening or storage compartment 252a or a movable panel / storage compartment 256a (such as for storing sunglasses or the like within a compartment). For example, and as shown in FIG. 28, sub-module 252 may comprise a "vision" sub-module and may include the intelligent or smart circuitry and components for an automatic headlamp control or headlamp dimming system (such as the types disclosed in U.S. Pat. Nos. 5,796,094 and/or 5,715,093, which are hereby incorporated herein by reference), a rain sensor (such as the types disclosed in commonly assigned U.S. Pat. Nos. 6,320,176; 6,353,392 and 6,313,454, a telematics or communication system (such as ONSTAR^{™} or the like) including user interface controls or buttons 252b, and/or one or more antennae (such as for cellular telephone system, a global positioning system (GPS), and/or a short-range communication system, such as is used for electronic toll collection and/or or the like). In the illustrated embodiment of FIG. 27, sub-module 252 also provides an open storage compartment 252a for receiving items placed there by a user or occupant of the vehicle. Similarly, sub-module 254 may comprise an "information" sub-module, and may include a trip computer, a temperature detection system or circuitry and/or a compass system or circuitry (such as the types disclosed in U.S. Pat. Nos. Nos. 5,924,212; 4,862,594; 4,937,945; 5,131,154; 5,255,442; and/or 5,632,092, and/or U.S. pat. application, Ser. No. 10/456,599, filed June 6, 2003 by Weller et al. for INTERIOR REARVIEW MIRROR SYSTEM WITH COMPASS and/or the like, and may include user interface controls or buttons 254a and/or a display 254b for displaying the trip computer output, temperature and/or compass heading and/or the like. In the illustrated embodiment, sub-module 256 may comprise a "control" sub-module, and may include a tire pressure monitoring system or circuitry (such as the types disclosed in U.S. Pat. Nos. 6,294,989; 6,445,287; and/or 6,472,979, and/or in U.S. pat. applications, Ser. No. 10/232,122, filed Aug. 30, 2002 ; and Ser. No. 10/279,059, filed Oct. 23, 2002), a remote keyless entry system or circuitry and/or a universal garage door opening system or circuitry (such as the types disclosed in U.S. Pat. Nos. 6,396,408; 6,362,771; 5,798,688 and 5,479,155) and/or the like, and may include user interface controls or buttons 256b and a storage container 256a with a closable panel. Also, sub-module 258 may comprise a "connectivity" sub-module that may include various interface systems or circuitry, such as a Bluetooth HandsFree^{™} system, a garage door opener system, or other vehicle-based or in-vehicle communication links or systems (such as WIFI and/or IRDA) and/or the like, and may include user interface controls or buttons 258a. In the illustrated embodiment, sub-module 258 is shown with a microphone 258b, such as for a communication system or the like (such as the types described in U.S. Pat. Nos. 6,243,003; 6,278,377; and/or 6,420,975, and/or as described in PCT Application No. PCT/US03/30877, filed Oct. 1,2003), positioned generally above the interior rearview mirror assembly 210. However, the microphone or any other accessory or feature or the like may be placed at one of the sub-modules. Also, although shown and described as having particular accessories or systems or circuitry and/or storage openings or compartments, clearly other accessories or circuitry or compartments or lights or the like may be provided at any of the sub-modules. Optionally, the interior rearview mirror assembly 210 may be selected to have various options, whereby the particular mirror assembly (and associated options or accessories, such as lights, video display, cameras and/or the like) may be connected to or plugged into the accessory console 250 in a similar manner.

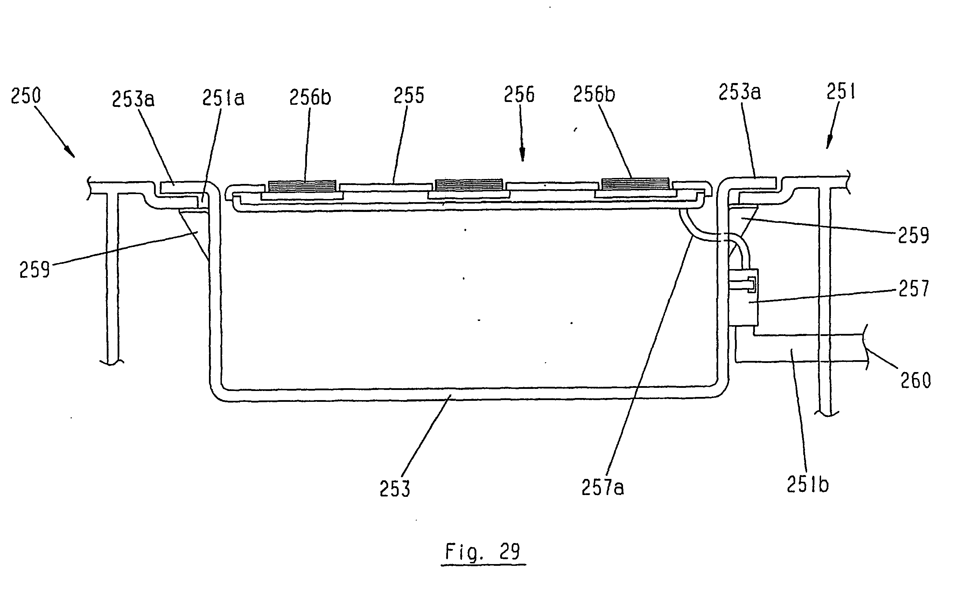

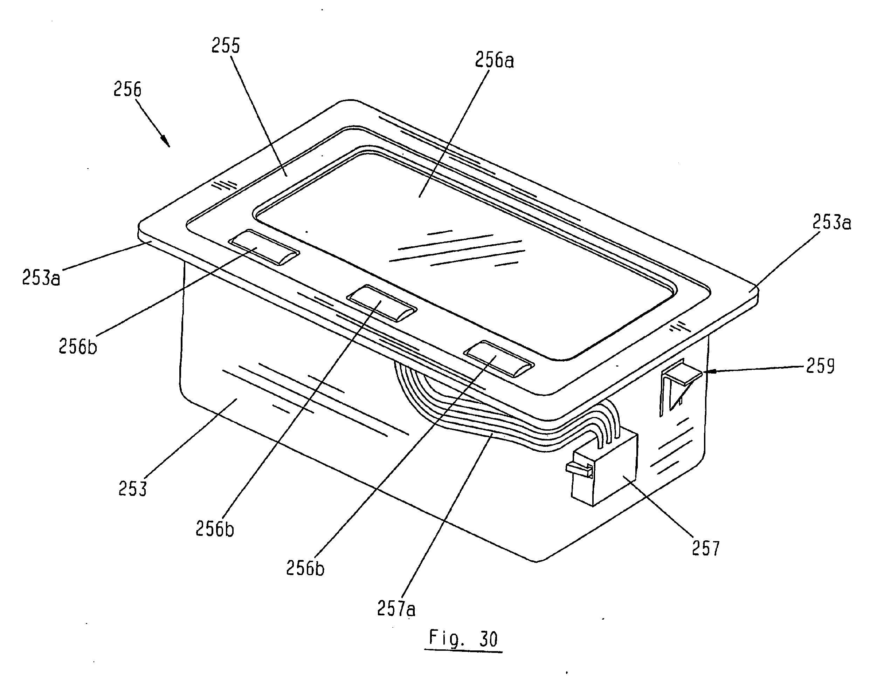

As shown in FIGS. 29 and 30, each of the sub-modules (such as sub-module 256 in FIGS. 29 and 30) may include a housing 253 and a cover plate 255. The cover plate or lid 255 may include the user interface controls or buttons 256b and the associated circuitry, while the housing 253 forms or defines or receives or contains a storage compartment or the like. The electronic features or accessories or circuitry of the sub-modules thus may be contained in the lid portion of the sub-module (or at a side or back or elsewhere on the sub-module), while the body of the sub-module may provide a storage feature or the like, if desired. Optionally, the sub-module or sub-modules may include additional electronic accessories and components and may or may not provide a storage compartment or the like within the housing. The sub-module includes an electrical connector 257 (electrically connected to the circuitry or accessory of the sub-module, such as via a flexible printed circuit cable or a ribbon cable or the like 257a) positioned at or mounted to a side of the housing 253 and generally fixedly positioned at the side of the housing. One or more sides of the housing 253 also includes a retention clip 259 for retaining the sub-module within or partially within the cavity or opening in the console or housing 251 of accessory system 250.

As shown in FIG. 29, the sub-module 256 may be inserted into an opening 251a of overhead accessory console 251 until the electrical connection is made between electrical connector 257 and a corresponding electrical connector 251b of console 251. When sufficiently inserted into the opening 251a, the retention clip 259 engages a lip 25 1 c of console 251 to retain the sub-module within the console. As shown in FIG. 29, the sub-module 256 may include an overlapping flange or lip 253a that may overlap the lip 251c of the console to prevent over-insertion of the sub-module and to provide a secure retention of the sub-module within the console (such as by clamping the lip 251c between the lip 253a and the retention clip 259). The overlapping lip 253a of the sub-module may also provide a finished and enhanced appearance to the accessory system 250. The other sub-modules may be inserted and connected and retained in a similar manner.

The electrical connectors 257, 251b may provide plug and socket type connectors to ease the assembly or insertion or installation of the sub-module into the console 251. Preferably, the connector 257 of the sub-module comprises a self-aligning connector to facilitate or enhance the connection to the connector 251b of console 251 (which may be a generally blind connection as the sub-module is inserted or plugged into the opening in the console). The connector 257 may "float" at the side of the sub-module housing 253 to further facilitate adjustment and alignment of connector 257 with connector 251b, such that connector 257 readily plugs into or receives or connects to connector 251b as the sub-module is inserted or plugged into the opening in the console. The sides of the housing 253 may assist in guiding the sub-module and electrical connector 257 into general alignment with the opening and electrical connector 251 b, such that the sub-module may be readily inserted or plugged into the opening in the console by an operator at the vehicle assembly plant or the like, whereby the mechanical retention connection and electrical connection are made by the same installation or insertion process. Although shown as having the connector on the side of the sub-module, clearly, the electrical connector may be positioned elsewhere on the sub-module (and correspondingly on the console), such as at a bottom or back portion of the sub-module housing or elsewhere to provide electrical connection of the sub-module to the console as the sub-module is inserted or plugged into the opening in the console.

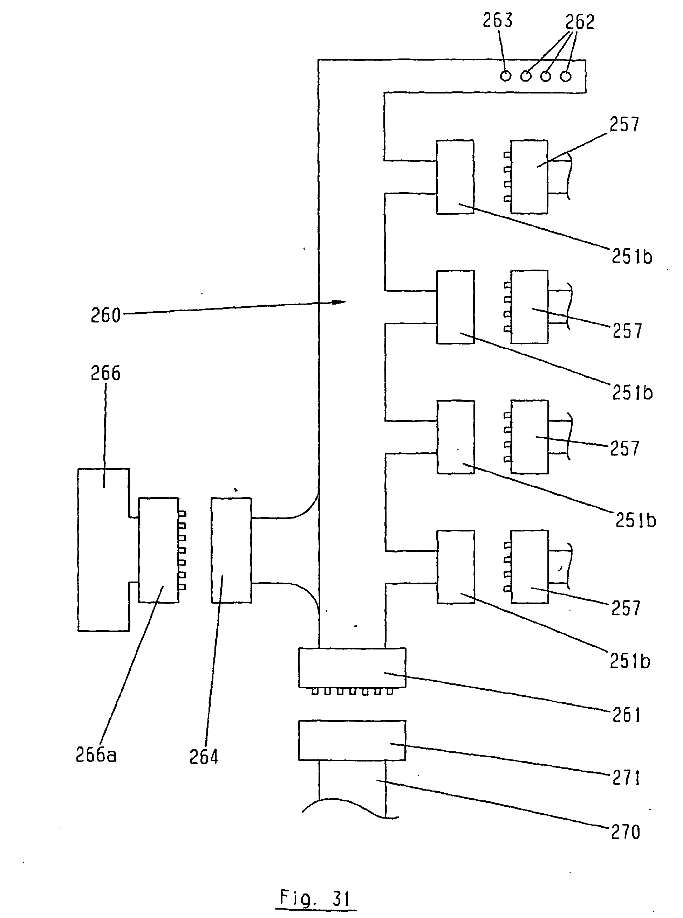

As shown in the schematic of FIG. 31, the accessory console 251 may include a motherboard 260, that may include a rigid or flexible printed circuit board (PCB), or a ribbon cable and/or hard wires or the like, or a light cable or conduit (such as fiber optic cable or the like) that may provide electrical communication to, from and between the sub-modules (and the accessories or circuitry of the sub-modules) and any associated components or accessories or systems of the accessory system 250 or the vehicle. The motherboard 260 may be operable to wirelessly communicate via infrared (IR) signals, radio frequency (RF) signals or the like with the sub-modules and/or the vehicles accessories or systems, such as utilizing the principles described in U.S. pat. application, Ser. No. 10/456,599, filed Jun. 6, 2003 by Weller et al. for INTERIOR REARVIEW MIRROR SYSTEM WITH COMPASS. The motherboard 260 may be connected to the vehicle wiring harness 270, such a via electrical connectors 261, 271 (which may be plug and socket type connectors or the like, or may provide a connection to a hard wire bus system of the vehicle, or the motherboard may communicate to the vehicle via radio frequency signals, infrared signals or the like). The connectors 261, 271 may be connected as the overhead accessory console or system is installed to the vehicle, such as described above with respect to accessory system 50. As shown in FIG. 31, the motherboard 260 may be connected to each of the connectors 251b and thus to each of the sub-modules (not shown in FIG. 31) via the corresponding sub-module connectors 257. The motherboard or console wiring 260 may also include one or more other accessories, such as lights or the like 262 (and may include user interface controls or buttons 263 for activating the lights or the like) that may be positioned at the console, such as for providing illumination of the cabin or of one or more of the accessories or the like of the accessory system.

In order to reduce the base cost and content of the overhead accessory system, the motherboard or wiring 260 of the accessory console 251 may provide only the base wiring (and optionally may only connect to power and ground at the vehicle wiring harness 270). Also, the sub-modules 252, 254, 256, 258 may only include the electrical content for the particular accessory or system or feature provided by the sub-module (and may not include the interface circuitry or other intelligent circuitry or "smarts" for controlling and interfacing the accessories with the vehicle systems). Therefore, the motherboard 260 may include another electrical connector 264 for connecting to an enabler module 266 via an electrical connector 266a of enabler module 266. The enabler module 266 may be inserted into or plugged into the console at a desired location, such as at or adjacent to or near the sub-modules or elsewhere on the console.

Enabler module 266 may comprise a microprocessor with software and memory for interfacing with and controlling the accessories of the sub-modules and processing information or data received from the sub-modules (and optionally the interior rearview mirror assembly). The enabler module 266 may provide the interface circuitry and other smart circuitry, such as bus interface circuitry and the like, and may function to recognize what modules or sub-modules are connected to the motherboard 260, and may control or interface with the sub-modules to facilitate operation of the sub-module accessories. The enabler module 266 may control the signal flow to and from and between the sub-modules and the accessory system and/or the vehicle, and may manage a bus interface or the like between the sub-modules and the accessory system and/or the vehicle. The enabler module 266 thus enables the accessory system to work with whichever sub-modules are selected and plugged into the console 251, without requiring interfacing circuitry and the like in each of the sub-modules.

The enabler module 266 may provide other smart controls for the sub-modules so that the sub-modules need not include such additional and often costly circuitry, thereby reducing the incremental cost for each of the sub-modules added to the accessory system. The enabler module 266 thus functions to effectively transform the motherboard 260 into a "smart" motherboard that is capable of controlling and communicating with the sub-modules connected thereto, and that may let the vehicle know what information or circuitry or accessories that the vehicle has installed or available in the accessory system. Optionally, the enabler module may control one or more accessories of the motherboard, such as the lights 262 or the like. For example, the enabler module may receive a signal from a bus interface of the vehicle and may activate, dim and deactivate the lights of the accessory system in response to a signal indicative of situations where activation, dimming and deactivation of the cabin interior lights of the vehicle is desired, such as when a door is opened and closed or the like (without the enabler module, such lights may be activated by the user interface controls or buttons). Although shown and described above as being associated with a forward overhead accessory system, the sub-modules and enabler module may be implemented at or in connection with the middle and/or rear accessory modules (such as the middle module 51 b and rear module 51 c discussed above).

Optionally, the enabler module 266 may use or share circuitry from the various sub-modules plugged into the motherboard 260, and may be able to use or share such common or compatible circuitry from one sub-module for an accessory of another sub-module if there is a failure in the circuitry of the other sub-module. For example, the enabler module 266 may allow a telematics system of one sub-module (such as sub-module 252 in FIG. 28) to utilize and interface with a microphone or receiver or antenna or the like at another sub-module (such as the microphone 258b of sub-module 258 in FIG. 27), or may facilitate sharing of other components and/or circuitry (such as displays, lights, sensors and/or the like) of the sub-modules or interior rearview mirror assembly and of the accessory system and/or vehicle.

Optionally, the enabler module circuitry may interface with other accessories of the vehicle (such as through a bus interface of the vehicle or the like, such as described in U.S. Pat. Nos. 6,291,905 and 6,472,773, which are hereby incorporated herein by reference) and may utilize circuitry or components of the other accessories in connection with the accessories of the sub-modules of the overhead accessory system. For example, the enabler module circuitry may facilitate the interface between the tire pressure monitoring system of sub-module 256 and the tire pressure sensors or the like at the tires of the vehicle, if applicable. Also, for example, the enabler module circuitry may utilize a sensor or camera for a vehicle vision system (such as a vision or camera system utilizing principles disclosed in U.S. Pat. Nos. 5,550,677; 5,760,962; 5,670,935; 6,201,642; 6,396,397; and/or 6,498,620) of the vehicle for use with other accessories or systems (such as an automatic headlamp control system or rain sensor or the like) that are incorporated into one or more of the sub-modules of the overhead accessory system.

Optionally, the enabler module 266 may have reconfigurable aspects for reprogramming the microprocessor or for upgrading the software or the like. For example, the enabler module may be set up to recognize and receive new software or to recognize and interface with other accessories that may be developed and implemented after manufacture of the enabler module. The enabler module may receive a software upgrade via an input device, such as via an input port at the enabler module or elsewhere on the console, or via a DVD or CD player in the overhead console or in the vehicle, or via a diagnostic connection or interface of the vehicle, or via any other means of providing the upgrade to the overhead system and enabler module. Optionally, the enabler module may be removed and replaced with a new enabler module to accommodate other later developed software or accessories or features of the accessory system.

The enabler module 266 may be a common module regardless of which sub-modules are selected and connected to the accessory system. Therefore, the enabler module 266 may only be provided in situations where at least one sub-module having electronic accessories or circuitry is selected. The additional incremental cost for having more sub-modules is then lower because the smart circuitry and controls are already provided by the enabler module that is required for the first sub-module. If no electronic accessories or electronic sub-modules are selected, then no enabler module is required, whereby the openings in the console may be filled with various base-line storage compartments or may be covered with a trim plate or the like. In such applications, the accessory system is substantially de-contented and only includes the motherboard or wiring and associated connectors and maybe lights or the like.

Optionally, a standard accessory sub-module that is standard for a particular car line (for example, a vehicle may have a trip computer as a standard item, whereby a trip computer sub-module may be provided in all of the vehicles of that car line) may include the enabler circuitry, whereby the accessory system would not require or include a separate enabler module. In such an application, any additional or optional sub-modules may be provided without such smart or control or interface circuitry and may connect and communicate with and be controlled by the enabler circuitry of the standard accessory sub-module. Optionally, the consumer may select from several "base" options, where each of the options includes a particular accessory sub-module that incorporates the enabler circuitry, such that additional optional sub-modules need not require such circuitry.

The accessory system thus provides for optional sub-modules that may be selected and plugged into a standard or common overhead console having a standard or common electronic motherboard. The smart circuitry and interface controls and circuitry and microprocessor may only be provided or added or connected to the console and motherboard (to make the motherboard function as a smart motherboard) if particular electronic accessory sub-modules are selected and plugged into the console. thus a distribution of the intelligence is provided for controlling and interfacing such accessories or circuitry and may provide for interconnectivity of the modules or sub-modules and accessories or circuitry or systems of the overhead accessory system, and may provide such interconnectivity of the sub-module accessories or circuitry to other accessories or circuitry or systems of the vehicle. The accessory system may reduce or minimize the content of the individual sub-modules to reduce their incremental cost and to allow the vehicle manufacturer to only provide the typically costly interface circuitry, microprocessor and the like when it is needed and to only provide one module with such circuitry and the like, whereby the one module (either the enabler module or a standard sub-module or the like) may interface with and enable the other optional accessories or sub-modules that may be added to the accessory system. The accessory system thus may provide accessories that have a reduced incremental cost once a first accessory or sub-module is selected.

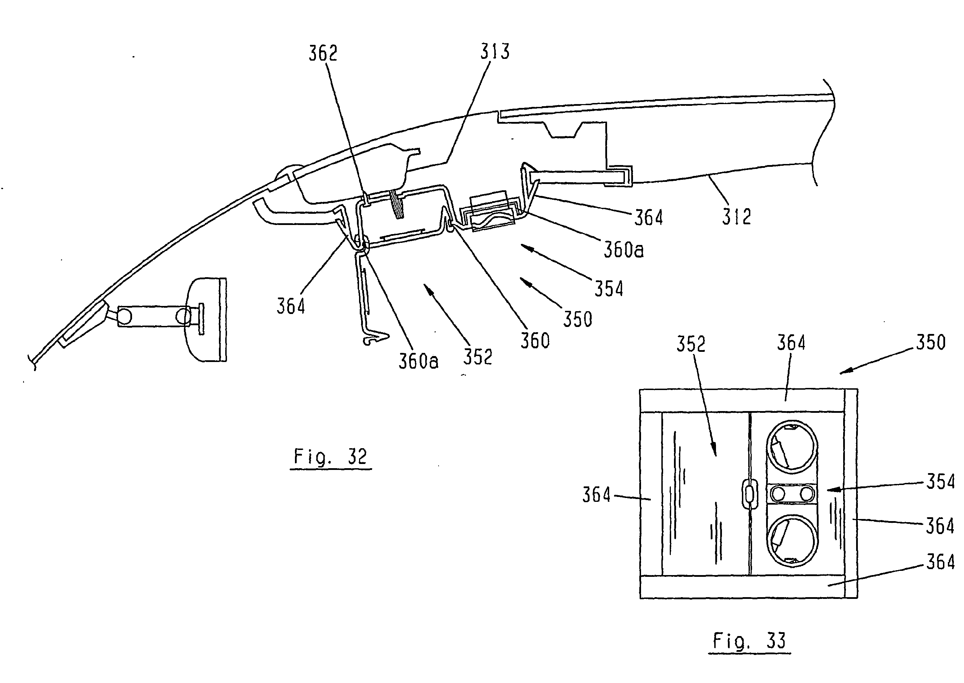

Referring now to FIGS. 32 and 33, an overhead accessory system or modular console 350 may be mountable to an interior portion of a vehicle, such as at the headliner 312 or at a frame portion or sheet metal portion 313 of the vehicle. Modular console 350 includes multiple modules or sub-modules 352, 354 that may be connected together via connecting portions or clips 360 to form the modular console 350. The connecting portions or clips 360 may provide a snap together assembly of the modules to form a desired modular console, as discussed below. The assembled modular console 350 may be mounted to the interior portion of the vehicle via fasteners 362 or the like, as shown in FIG. 32. Modular console 350 may include a trim strip or trim portion 364 that may be connected to the outer connecting portions 360a of the modules 352, 354 and that may connect or attach to the interior portion of the vehicle to provide an aesthetically pleasing trim portion around the modular console. The modular console thus may comprise various common modules or sub-modules or accessories or the like within various common modules or sub-modules, and may be adapted to be installed and finished in a particular vehicle via an appropriate or desired trim strip or trim portion that corresponds with the particular vehicle.

In the illustrated embodiment of FIGS. 32 and 33, module 352 includes a garage door opening system or accessory (such as a garage door opening device of the type disclosed in U.S. Pat. Nos. 6,396,408; 6,362,771; and 5,798,688, and/or U.S. provisional applications, Ser. No. 60/502,806, filed Sep. 12, 2003 by Taylor et al. for GARAGE DOOR OPENING SYSTEM FOR VEHICLE; and Ser. No. 60/444,726, filed Feb. 4, 2003 by Baumgardner et al. for GARAGE DOOR OPENING SYSTEM FOR VEHICLE), and may provide a storage compartment (such as for storing a hand held garage door opening device or transmitting device or the like), while module 354 provides lights, such as map reading lights or the like (such as lights or illumination sources of the types disclosed in U.S. Pat. Nos. 5,938,321; 5,813,745; 5,820,245; 5,673,994; 5,649,756; 5,178,448; 5,671,996; 4,646,210; 4,733,336; 4,807,096; 6,042,253; and/or 5,669,698, and/or U.S. pat. applications, Ser. No. 10/054,633, filed Jan. 22, 2002; and/or Ser. No. 09/793,002, filed Feb. 26,2001; and/or U.S. provisional application, Ser. No. 60/436,259, filed Dec. 23, 2003 by Lynam for LIGHT MODULE FOR INTERIOR REARVIEW MIRROR). However, other accessory or storage modules or sub-modules may be selected and assembled together to form the modular console, depending on the desired console content for the particular vehicle. For example, one or both of the modules or sub-modules may comprise rear climate controls, a moon roof control, a compass display (and optionally the corresponding circuitry and sensors), such as compass systems and/or displays of the types disclosed in U.S. Pat. Nos. 5,924,212; 4,862,594; 4,937,945; 5,131,154; 5,255,442; and/or 5,632,092; and/or U.S. pat. application, Ser. No. 10/456,599, filed Jun. 6, 2003 by Weller et al. for INTERIOR REARVIEW MIRROR SYSTEM WITH COMPASS, a navigation system, such as the types described in U.S. Pat. No. 6,477,464, and U.S. pat. applications, Ser. No. 10/456,599, filed Jun. 6, 2003 by Weller et al. for INTERIOR REARVIEW MIRROR SYSTEM WITH COMPASS; Ser. No. 10/287,178, filed Nov. 4, 2002 by McCarthy et al. for NAVIGATION SYSTEM FOR A VEHICLE; Ser. No. 10/645,762, filed Aug. 20, 2003 by Taylor et al. for VEHICLE NAVIGATION SYSTEM FOR USE WITH A TELEMATICS SYSTEM; and Ser. No. 10/422,378, filed Apr. 24, 2003, a message center, or any other types of accessories or displays or systems or the like that may be desired. Optionally, the particular modules or sub-modules may comprise any other accessory or combination of accessories, such as microphones, such as for interfacing with a vehicle telematics system or the like, such as microphones of the types disclosed in U.S. Pat. Nos. 6,243,003; 6,278,377; and/or 6,420,975, and/or in PCT Application No. PCT/US03/30877, filed Oct. 1, 2003 by Donnelly Corp. et al. for MICROPHONE SYSTEM FOR VEHICLE, speakers, antennas, including global positioning system (GPS) or cellular phone antennas, such as disclosed in U.S. Pat. No. 5,971,552, a communication module, such as disclosed in U.S. Pat. No. 5,798,688, a voice recorder, a blind spot detection system, such as disclosed in U.S. Pat. Nos. 5,929,786 and/or 5,786,772, a side object detection and warning system, such as disclosed in U.S. pat. applications, Ser. No. 10/427,051, filed Apr. 30, 2003 ; and Ser. No. 10/209,173, filed Jul. 31, 2002, transmitters and/or receivers, such as for a garage door opener or a vehicle door unlocking system or the like (such as a remote keyless entry system), a tire pressure monitoring system, such as the types disclosed in U.S. Pat. Nos. 6,294,989; 6,445,287; and/or 6,472,979, a digital network, such as described in U.S. Pat. No. 5,798,575, a high/low headlamp controller, such as disclosed in U.S. Pat. Nos. 5,796,094 and/or 5,715,093, a rain sensor, such as the types disclosed in U.S. Pat. Nos. 6,353,392; 6,320,176 and 6,313,454, and U.S. pat. application, Ser. No. 10/355,454, filed Jan. 31, 2003 by Schofield et al. for VEHICLE ACCESSORY MODULE, a memory mirror system, such as disclosed in U.S. Pat. No. 5,796,176, a hands-free phone attachment, a video device for internal cabin surveillance (such as for sleep detection or driver drowsiness detection or the like) and/or video telephone function, such as disclosed in U.S. Pat. Nos. 5,760,962 and/or 5,877,897, a remote keyless entry receiver, a seat occupancy detector, a remote starter control, a yaw sensor, a clock, a carbon monoxide detector, status displays, such as displays that display a status of a door of the vehicle, a transmission selection (4wd/2wd or traction control (TCS) or the like), an antilock braking system, a road condition (that may warn the driver of icy road conditions) and/or the like, a trip computer, an ONSTAR^{®} system and/or the like (with all of the above-referenced patents, PCT applications and U.S. patent applications referred to in this paragraph being commonly assigned to Donnelly Corporation). The selected modules thus may provide the desired electrical or mechanical or storage function and may be assembled together for installation in the particular vehicle at the vehicle assembly plant.

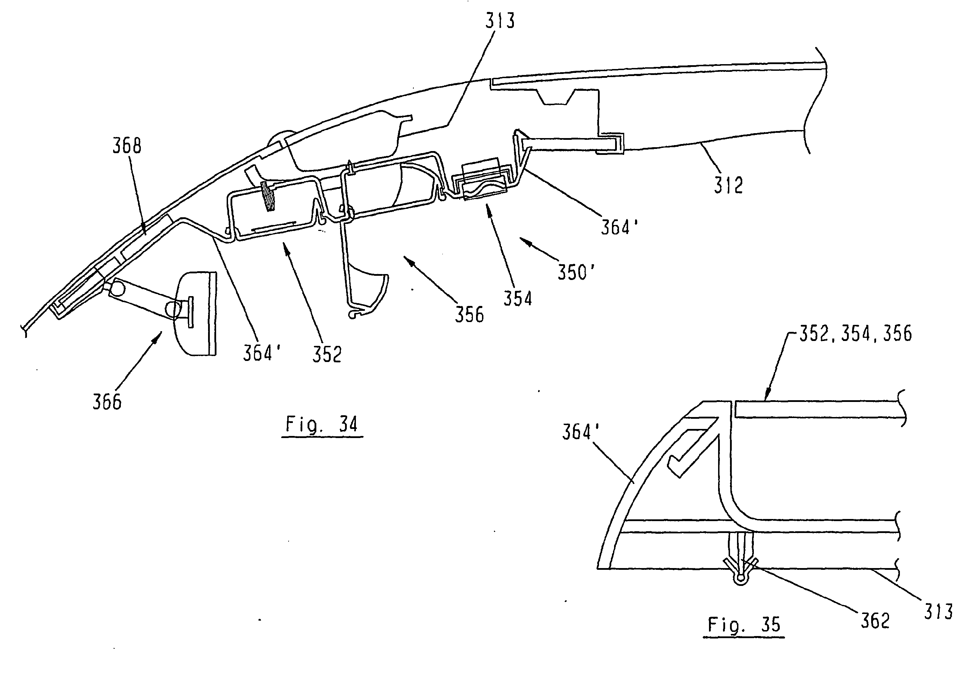

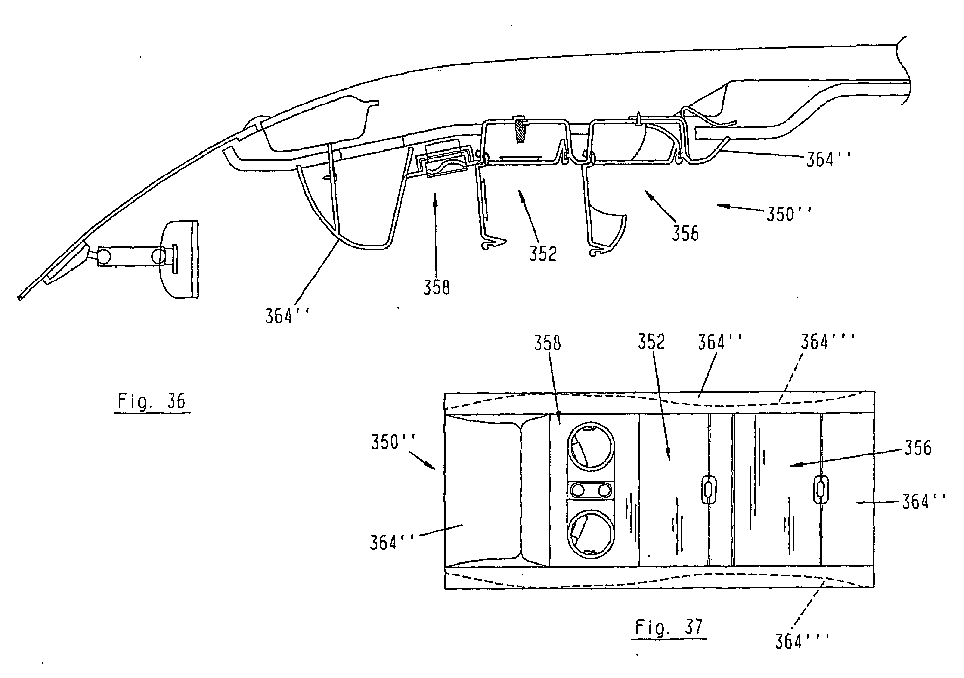

It is further envisioned that the modular console may comprise common modules or sub-modules that may be mountable in different vehicles or different vehicle lines, whereby the console and modules may be common across two or more vehicle lines, but the trim strips may be designed for adapting the outer trim of the console to a particular vehicle or vehicle line. As shown in FIG. 34, a modular console 350' may include three modules 352, 354 and 356, with the common modules being assembled or arranged in a desired manner to form the modular console. The modular console may be completed by installing or attaching the appropriate trim strip or member or portion 364' around the outer perimeter of the modular console, where the appropriate trim portion corresponds to the particular vehicle or vehicle line into which the modular console is to be installed. As shown in FIG. 34, modular console 350' may include an interior rearview mirror assembly 366 mounted on an extension 368 of the console or trim portion, depending on the particular application of the modular console. With reference to FIGS. 36 and 37, another modular console 350" may include common modules 352, 356, 358, similar to modular console 350', and may have particular trim strips or members or portions 364".

In each of the illustrated embodiments, the modular console may be formed or assembled using common accessory modules or sub-modules (containing various electrical or mechanical accessories or the like) to generally form the internal portion of the console, and then a particular trim portion may be attached to adapt the perimeter edges of the console for the particular vehicle or vehicle line that the module is to be installed into. As can be seen in FIG. 37, a trim portion 364" may be provided for one vehicle line to adapt modular console 350" to the vehicle, while a different trim portion 364"' (shown in phantom in FIG. 37) may be provided to adapt the common modular console for another vehicle or vehicle line. The particular trim portions may vary depending on the contours of the headliner or other interior portions of the vehicle, or depending on whether the consol includes or is associated with the rearview mirror assembly (such as shown in FIG. 34), or a sunroof or moonroof or the like, or other characteristics of the vehicle interior or the like.

Therefore, the modular console or system provides common accessory modules or storage modules or sub-modules or the like that may be assembled together to form the desired console. The common modules or sub-modules may be shipped to a vehicle assembly plant and assembled together in the plant to form the desired modular consoles for the particular vehicles or vehicle lines. The consoles may then be trimmed out or finished via a particular trim member or portion that fits along an exterior or perimeter portion of the console and that conforms to the interior portion of the particular vehicle or vehicle line.

The modular console may be particularly suited for applications in vehicle assembly plants that assemble different or multiple car lines. In such applications, the common modules or sub-modules may be assembled to form the desired modular consoles (containing the selected options for particular vehicles) and the appropriate trim portion may be installed to accommodate the interior contours or the like of the particular vehicle or vehicle line, and then the desired modular consoles may be installed into the particular vehicle or vehicle line. Optionally, the connected modules may be installed into the vehicle before the trim portions are attached or installed. Thus the number of different consoles is reduced that may be shipped to the vehicle assembly plant, since the desired console that has the various options selected for a particular vehicle may be assembled at the vehicle assembly plant using the common modules and the appropriate trim portions.

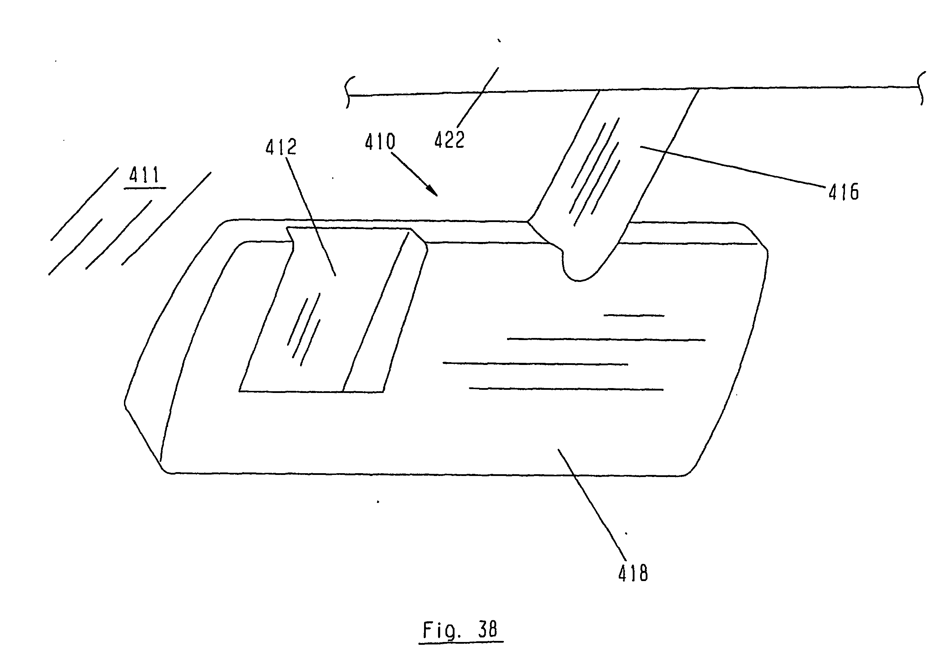

Referring now to FIGS. 38-41, an accessory module 410 may be positioned generally at a windshield 411 of a vehicle and may have or define a pocket or receiving portion 412 for connecting to or at least partially receiving a cellular telephone 414 or the like. Accessory module 410 may mount or oppose / engage the interior surface of the windshield and may include a connecting conduit or arm 416 that extends upward from a base region 418 to conceal and guide/route the connecting wires and the like between the receiving portion 412 and the vehicle wiring or the wiring of an overhead console or the like. Optionally, accessory module 410 may be connected to or may be incorporated into the overhead accessory system of the types discussed above with respect to FIGS. 17-37.

Receiving portion 412 of accessory module 410 is shaped or formed to at least partially receive the cellular telephone 414 or the like therein, whereby the phone may be stored in a location that may be readily accessible to the driver of the vehicle. Receiving portion 412 may include electrical contacts or connectors or the like for contacting corresponding contacts or connectors of the cellular telephone or the like that is to be placed into or connected to receiving portion 412. The electrical contacts or connectors of receiving portion 412 may be connected to the vehicle wiring or overhead accessory system wiring through connecting portion 416 of accessory module 410. Accessory module 410 thus may function to charge the battery of the cellular telephone when the telephone is plugged into or docked at the receiving portion 412.

Optionally, the electrical contacts of connectors of accessory module 410 may be connected to a vehicle-based or console-based or module-based audio communication device or system or microphone system, such as a system utilizing principles disclosed in U.S. Pat. Nos. 6,243,003; 6,278,377; and/or 6,420,975; and/or described in PCT Application No. PCT/US03/30877, filed Oct. 1,2003. The connection may allow the cellular telephone to cooperate with the speakers and/or microphones of the vehicle or overhead accessory system or interior rearview mirror assembly or system, such that the user of the accessory module may use the telephone while the telephone is docked at the accessory module. Optionally, the accessory module may incorporate or include such microphones or speakers, such as in the base portion. Optionally, the accessory module may incorporate or include user inputs or buttons or touch / proximity sensors to select / control the communication system or the like. The accessory module thus may connect a cellular telephone or the like to a communication system, such that the accessory module may provide a hands-free communication system for the driver of the vehicle. The cellular telephone, which may be carried into the vehicle by a user, may be coupled to and provide two way communication with the vehicle-based or in-vehicle communication system, preferably wirelessly, such as via a Bluetooth^{™} protocol or similar short / restricted range radio frequency (RF) or infrared (IR) communication protocol.

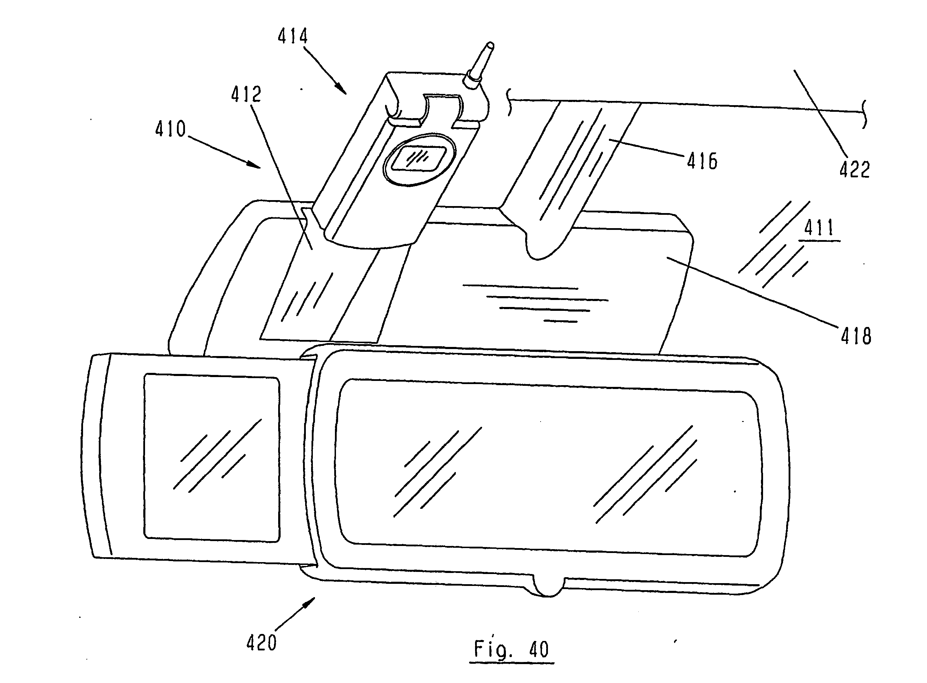

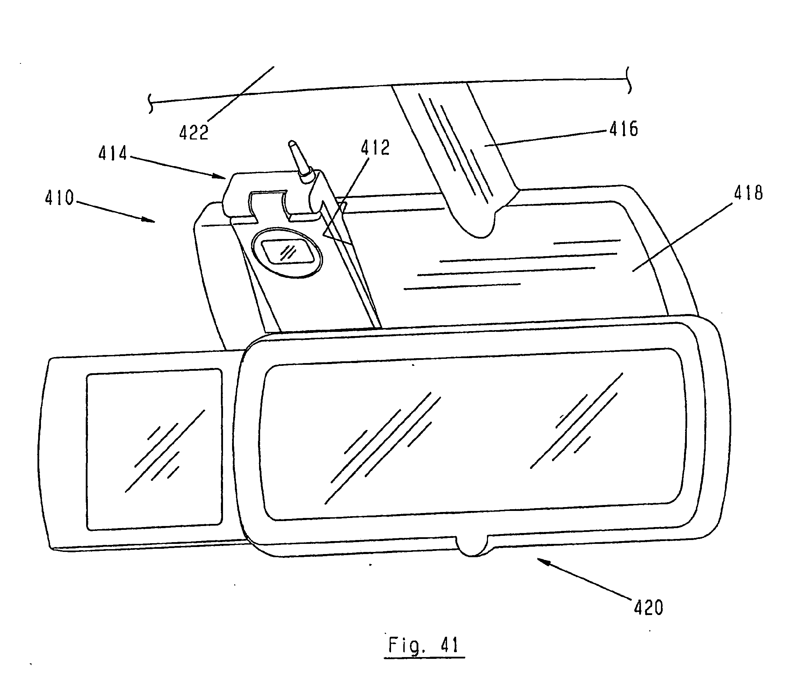

As shown in FIGS. 40 and 41, accessory module 410 may be positioned along the interior surface of the windshield 411 and generally above an interior rearview mirror assembly 420. Interior rearview mirror assembly 420 may comprise any interior rearview mirror assembly, such as an interior rearview mirror assembly (that may optionally include a video display screen as shown in FIGS. 40 and 41) of the types described above. As shown in FIG. 40, base portion 418 and receiving portion 412 of accessory module 410 may be spaced downward from the headliner 422 of the vehicle (or from an overhead console or overhead accessory system or the like) to allow clearance for the telephone 414 to be readily inserted and removed from the receiving portion 412. The telephone 414 thus may be positioned generally above the interior rearview mirror assembly 420 and viewable and readily accessible by a user of the telephone when the telephone is docked or received at accessory module 410.

Although shown as being positioned along the interior surface of the windshield and below a headliner or console of the vehicle, it is envisioned that the accessory module may be incorporated into an overhead accessory system of the types described above. For example, one of the compartments 60 or controls 62 of overhead accessory system 50, described above, may incorporate a receiving portion for receiving a cellular telephone in a similar manner as described above. The overhead accessory system may then include the circuitry and microphones and speakers to allow the telephone to be used as part of a hands free communication system.

The accessory module thus provides a receiving port or station for receiving or connecting to a telephone to charge the battery of the telephone and/or to connect the telephone to a hands free communication system. The accessory module may be positioned along the windshield of a vehicle and may be positioned generally at or above the interior rearview mirror assembly, or the accessory module may be positioned elsewhere in the vehicle, such as at or incorporated into an overhead accessory system of the vehicle.

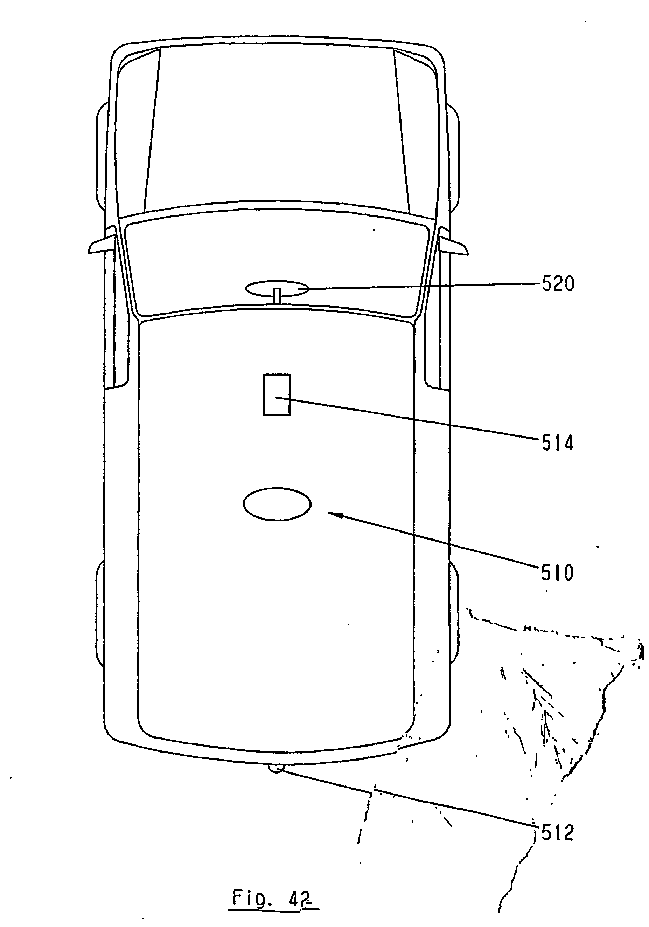

Referring now to FIGS. 42-44, the overhead accessory system may also receive or incorporate vision or image data from a rearward facing imaging system, such as a reverse aid or backup aid or parking system, such as the types described below or the like, with a display system or display module 510 of the vehicle, such as a display module having an entertainment video screen, such as are typically installed in mini-vans, vans, and SUVs and/or the like. The display module 510 may be adjusted or adapted for the driver to view the field of view rearward of the vehicle (as captured by the rearward facing imaging system) in the entertainment video screen or other screen of the display module, as discussed below.

The rearward facing imaging system may comprise any known rearward imaging system or back up aid system, or may be suitable for use with other imaging systems of the vehicle or may utilize principles or aspects of such systems, such as a video mirror system, such as disclosed in commonly assigned U.S. Pat. Nos. 6,428,172 and 6,420,975, and U.S. pat. applications, Ser. No. 09/793,002, filed Feb. 26, 2001 by Schofield et al., entitled VIDEO MIRROR SYSTEMS INCORPORATING AN ACCESSORY MODULE; and Ser. No. 09/585,379, filed Jun. 1, 2000 for REARVIEW MIRROR ASSEMBLY WITH UTILITY FUNCTIONS; and Ser. No. 10/307,929, filed Dec. 2, 2002 by Hutzel et al. for AN INTERIOR REARVIEW MIRROR SYSTEM INCLUDING A PENDENT ACCESSORY, or an exterior imaging system, such as a forwardly or sidewardly or rearwardly directed vehicle vision system utilizing a mirror mounted or vehicle mounted camera or sensor and utilizing the principles disclosed in U.S. Pat. Nos. 5,550,677; 5,670,935; 5,760,962; 5,786,772; 5,798,575; 5,914,815; 5,929,786; 5,949,331; 5,959,367; 6,175,164; 6,198,409; 6,201,642; 6,222,447; 6,396,397; and/or 6,498,620, and/or in commonly assigned U.S. pat. applications, Ser. No. 09/199,907, filed Nov. 25, 1998, entitled WIDE ANGLE IMAGE CAPTURE SYSTEM FOR VEHICLES; and/or Ser. No. 10/010,862, filed Dec. 6,2001, entitled PLASTIC LENS SYSTEM FOR VEHICLE IMAGING SYSTEM, or such as a rear vision system and/or camera implemented and operated in connection with other vehicular systems as well, or operable utilizing the principles of such other vehicular systems, such as a vehicle headlamp control system, such as the type disclosed in U.S. Pat. No. 5,796,094, rain sensor, such as the types disclosed in commonly assigned U.S. Pat. Nos. 6,353,392; 6,313,454; and/or 6,320,176, a traffic sign recognition system, a system for determining a distance to a leading vehicle or object, such as by utilizing the principles disclosed in U.S. Pat. No. 6,396,397, or other vehicle vision systems and/or the like.

The rearward facing imaging system may include a rearward facing camera or imaging sensor 512, such as an imaging array sensor, such as a CMOS sensor or CCD sensor, such as described in commonly assigned U.S. Pat. Nos. 5,550,677; 6,097,023 and 5,796,094, an extended dynamic range camera, such as the types disclosed in PCT Application No. PCT/US03/36177, filed Nov. 14, 2003 by Donnelly Corp. et al. for IMAGING SYSTEM FOR VEHICLE, or any known camera or image sensor or the like. The camera 512 may be positioned at a rearward portion of the vehicle and directed generally rearwardly to capture an image of the exterior scene within the field of view of the camera. The camera 512 may communicate a signal representative of a frame or frames of the captured image of the exterior and rearward scene to a control or control system 514. The control may process the signal or signals received from the camera and communicate image data to the video screen or display of the display module or video screen module 510 for displaying an image representative of the rearward field of view of the camera at the video screen. The display module 510 may be configured to extend downwardly from the overhead accessory system (or may extend downwardly from the ceiling or headliner or other headliner console of the vehicle) to facilitate viewing of the video screen by the driver of the vehicle, such as when the vehicle is being driven in reverse, such as for parking, connecting the vehicle to a trailer or otherwise backing up the vehicle.

In one form, a video screen or display module may comprise a single video screen at the display module or video screen module. The display module may be configured to rotate approximately 180 degrees between a rearward or entertainment position, where the screen is directed generally rearwardly and is thus viewable by a passenger or passengers in the rear seats of the vehicle, and a forward or backup aid position, where the screen is directed generally forwardly and is thus viewable by the driver of the vehicle, either by turning around to directly view the screen or by viewing a reflection of the screen via the reflective element of the interior rearview mirror assembly. The display module may also be pivoted or flipped, such as about a generally horizontal pivot axis, between a raised or storage position at the ceiling of the vehicle cabin and a lowered or in use position for viewing by the driver or rear passengers of the vehicle. Optionally, the display module may be tilted or angled downward to adjust a viewing angle of the display, and may be capable of such tilting or angling or adjusting at any rotational position as it is pivoted or rotated between the rearward position and forward position. The display module thus may pivot about a pair of axes to provide adjustment of the display for enhanced viewing.

When in the rearward orientation, the video screen may display movies, games, television shows, videos and the like (such as via a feed or input from an antenna, DVD player, video player, game system and/or the like) to the rear passengers, while the video screen may display images of the rearward exterior scene (such as via a feed or input from the rearward imaging system) to the driver of the vehicle when in the forward facing orientation. Other feeds or inputs to the display module may be provided to display other images or information or the like at the screen of the display module, and may be selectably displayed at the screen. Optionally, the display output of the video screen may be selectably controlled or adjusted, or may be automatically controlled in response to the orientation of the display module. For example, the back up aid display function may be automatically selected in response to the display module being adjusted to the forward orientation. Therefore, the driver and the rear passengers of the vehicle may selectably utilize and view the video screen or display of the display module.

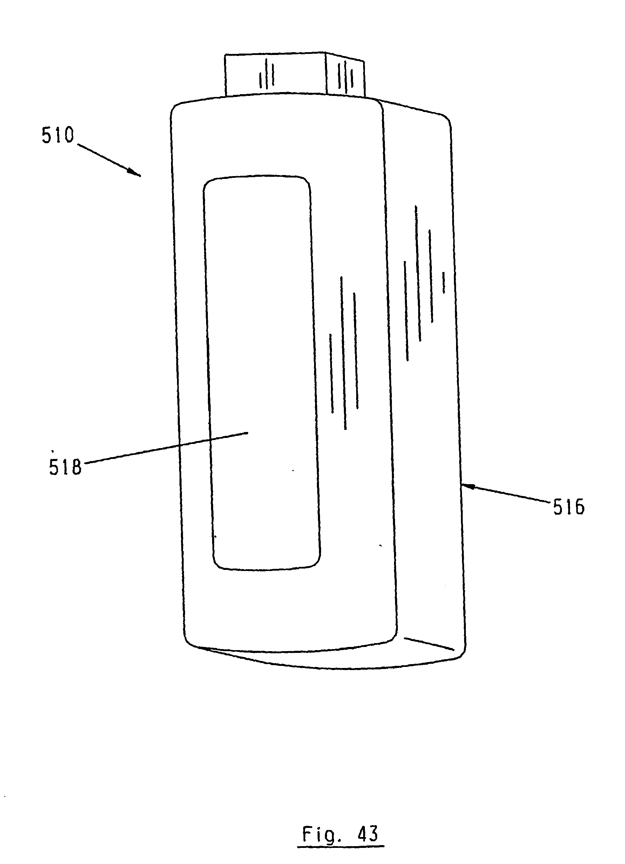

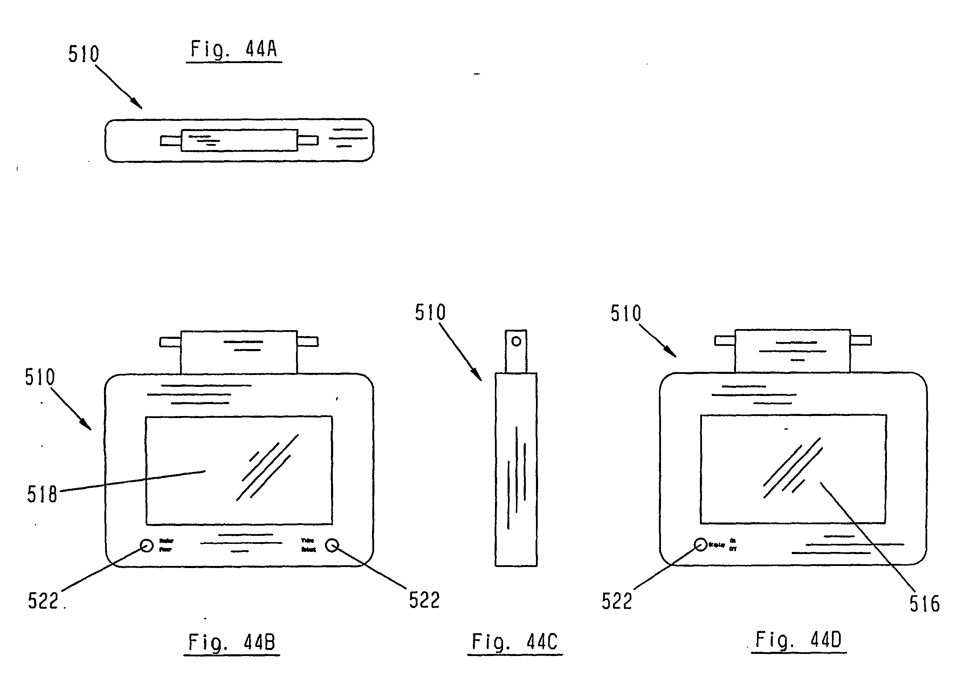

In another form, and as shown in FIGS. 43 and 44A-D, a video screen or display module 510 may comprise a pair of video screens 516, 518 packaged back-to-back in a single display module that may flip down from the headliner or ceiling or ceiling console of the vehicle cabin. When the display module 510 is flipped downward or lowered to an in use position, a rearward facing screen 516 of the module may be directed generally rearwardly for viewing by the rear passengers of the vehicle, such as for entertainment purposes, while a forward facing screen 518 may be directed generally forwardly for viewing by the driver of the vehicle for the backup or reverse aid function. The rearward facing screen 516 may display images of movies, games, television shows, videos and the like to the rear passengers (such as via a feed or input from an antenna, DVD player, video player, game system and/or the like), while the forward facing video screen 518 may display images of the rearward exterior scene (such as via a feed or input from the rearward imaging system) to the driver of the vehicle. Other feeds or inputs to the display module may be provided to display other images or information or the like at either or both of the screens of the display module, and may be selectably displayed at either or both of the screens.

Optionally, the driver of the vehicle may view the forward facing video screen 518 directly by turning and facing the screen, or the driver may view the forward facing video screen indirectly by viewing the screen's reflection at the reflective element of the interior rearview mirror assembly 520. It is further envisioned that the control 514 of the imaging system may adjust the display image according to the designed viewing approach for the driver, such as by providing a reverse image display for viewing at the reflective element of the interior rearview mirror assembly, such as by utilizing aspects of a reverse image information display of the type disclosed in U.S. Pat. No. 6,124,647. The display image on the screen may thus be displayed as a reversed or mirrored image so that a reflected image of the reversed display image may be properly viewable and readable by the driver at the reflective element of the rearview mirror. It is further envisioned that the display image may be selectably adjusted depending on the viewing approach preferred by the driver of the vehicle.

As can be seen with reference to FIGS. 44B and 44D, the display module may include one or more user interface controls or buttons 522 for activating or deactivating the video screen or screens, and/or for selecting the function of one or both of the video screens, such as between an entertainment or infotainment setting, such as for viewing programs, videos, movies, games and/or the like, and a reverse or backup aid or park aid function or setting, such as for viewing the image captured by the rearward facing camera or imaging sensor to assist the driver in backing up the vehicle. Optionally, the backup aid function of the display or video screen may be automatically selected in response to the vehicle being shifted into reverse or the like.

Therefore, a video screen or display module may be provided which is operable to selectably display entertainment images or the like to the rear passengers of the vehicle and rearward viewing images to the driver of the vehicle to assist the driver in driving the vehicle in reverse. The video screen module may comprise a single screen and may be flipped or rotated to adjust the screen between a rearward facing position for viewing by the rear passengers and a forward facing position for viewing by the driver. Optionally, the video screen module may comprise dual video screens or displays, where one screen is directed generally rearwardly for viewing by the rear passengers, while the other screen is directed generally forwardly for viewing by the driver of the vehicle. The operation of the video screen or screens may be selectably controlled by the driver or passenger of the vehicle or may be automatically controlled, such as in response to an orientation or adjustment of the display module or in response to the vehicle being shifted into reverse or the like.

Therefore, an overhead accessory system is provided which may comprise a modular system which allows the vehicle manufacturer to customize the accessory system for the desired application or vehicle. The overhead accessory system may comprise a single forward cross car console or module, and/or may comprise a middle or center cross car console or module positioned generally at a middle portion of the vehicle, and/or may comprise a rear cross car console or module positioned toward a rear portion of the vehicle. The modular and integrated overhead accessory system allows the vehicle manufacturer to implement one or more of the modules or console, which may be connected together via longitudinal extending bracing portions or connectors (and may be electrically connected together via wires or cables or the like extending along the bracing portions), depending on the desired application and/or the length of the vehicle and/or the like. The integrated overhead accessory system thus substantially reduces the manufacturing processes for connecting multiple accessories to the vehicle wiring because the multiple accessories of the overhead accessory system or module may be readily connected at one of the consoles or modules, while the accessory system provides electrical connection to the accessories or electrical components at the other consoles or modules of the accessory system. The overhead accessory system may be configured to receive selected ones of various sub-modules and may provide enabling circuitry or controls at a single module that is operable to interface with and control the accessories and/or circuitry of the sub-modules that are plugged into or connected to the accessory console. The accessory system thus may provide a common console and common enabling circuitry, whereby the sub-module or sub-modules having the desired accessories or circuitry may be plugged into the common console and recognized and controlled by the enabling circuitry.

The present invention also provides a display screen that is slidably or movably positioned at or within a casing and that may be extendable and operable in conjunction with one or more systems of the mirror assembly or accessory module or console or of the vehicle. The display screen may extend sidewardly or laterally toward the passenger side of the vehicle from the casing, such as a mirror casing or windshield electronics module casing or accessory module casing or the like. The display screen may be linked to such systems to extend and to display information or video or the like pertaining to the particular system when that system is activated or selected. The display screen may automatically extend and activate to display such information or video when a particular system is activated, or when a particular condition or location of the vehicle is detected, and may automatically retract when the particular system is deactivated or when the particular condition or location of the vehicle is cured or completed or passed. The display system thus provides a dynamic extension and/or retraction system that responds dynamically to driving conditions and/or traffic conditions and/or vehicle conditions and/or hazardous conditions and/or selected systems or accessories, and that may extend to alert the driver that there is pertinent information or video being displayed at the display screen, and retract when such information or video is not necessary or desired.

## Claims

1. An interior rearview mirror system (10) for a vehicle comprising:
a casing (12, 12');
a reflective element (16), said reflective element having a length axis (40) and a width axis (42); and
a video display screen slidably mounted at said casing and slidable in a direction generally parallel to said length axis of said reflective element between a non-use position, wherein said video display screen is stowed at said casing, and a use position, wherein said video display screen is substantially extended laterally from a side of said casing for viewing by an occupant of the vehicle, **characterized in that**:
said video display screen is slidable between said non-use and use positions by a motorized action; and
said video display screen being automatically extendable to said use position in response to a triggering event, said triggering event comprising at least one of (a) engagement of a reverse gear of the vehicle, (b) approach of a way point of a programmed route of a navigation system, and (c) a vehicle condition requiring that an alert be generated to the driver of the vehicle.

2. The interior rearview mirror system of claim 1, wherein said video display screen is mounted to at least one sliding member which is slidable relative to said casing.

3. The interior rearview mirror system of claim 2, wherein said at least one sliding member is slidable along or within a sliding block mounted within said casing.

4. The interior rearview mirror system of any preceding claim, wherein said video display screen is movable along at least one rail positioned within said casing.

5. The interior rearview mirror system of any preceding claim, wherein said video display screen is substantially extended toward the driver side of the vehicle in said use position.

6. The interior rearview mirror system of any preceding claim, wherein said video display screen is substantially extended toward the passenger side of the vehicle in said use position.

7. The interior rearview mirror system of any preceding claim, wherein said video display screen is pivotable about a pivot joint when extended to said use position.

8. The interior rearview mirror system of any preceding claim, wherein said video display screen can be manually moved to its stowed position even when said triggering event is not yet completed.

9. The interior rearview mirror system of claim 8, wherein said video display screen includes a grip or handle for manually grasping.

10. The interior rearview mirror system of any preceding claim, wherein said video display screen is biased toward one of said use position and said non-use position.

11. The interior rearview mirror system of any preceding claim, wherein said video display screen is extended and retracted in response to a motorized drive system.

12. The interior rearview mirror system of claim 11, wherein said motorized drive system comprises one of a linear actuator, a solenoid device, a rack and pinion device, an electrical drive motor, a non-armature electrical motor, a shape memory alloy device, an electrically induced stress-strain device and a bio-material.

13. The interior rearview mirror system of any preceding claim, wherein said video display screen is extended in response to a signal indicative of said triggering event.

14. The interior rearview mirror system of any preceding claim, wherein said triggering event is manually overridable in response to a manual input,

15. The interior rearview mirror system of any preceding claim, wherein said video display screen is retracted to said non-use position in response to a signal indicative of a deactivating event.

16. The interior rearview mirror system of claim 15, wherein said deactivating event comprises at least one of (a) disengagement of the reverse gear of the vehicle; (b) approach of a way point of a programmed route of the navigation system.

17. The interior rearview mirror system of claims 15 or 16, wherein at least one of said triggering event and said deactivating event is manually overridable in response to a manual input.

18. The interior rearview mirror system of any preceding claim including a mounting member for adjustably mounting said casing to an accessory console positioned within the vehicle, wherein said reflective element is positioned at said casing, said accessory console is configured to receive at least one electronic sub-module, said at least one electronic sub-module having electronic circuitry associated with at least one electronic accessory, said accessory module being configured to connect to enabling circuitry that interfaces with said electronic circuitry of said at least one sub-module.

## Patentansprüche

1. Innenrückspiegelsystem (10) für ein Fahrzeug, umfassend:
ein Gehäuse (12, 12');
ein Reflexionselement (16), wobei das Reflexionselement eine Längsachse (40) und eine Breitenachse (42) sowie
einen Videoanzeigebildschirm aufweist, der verschiebbar an dem Gehäuse angebracht ist und in einer Richtung allgemein parallel zu der Längsachse des Reflexionselements zwischen einer Position nicht in Gebrauch, in der der Videoanzeigebildschirm an dem Gehäuse verstaut ist, und einer Gebrauchsposition verschiebbar ist, in der der Videoanzeigebildschirm im Wesentlichen seitlich von einer Seite des Gehäuses zum Betrachten durch einen Insassen des Fahrzeugs ausgefahren ist,
**dadurch gekennzeichnet, dass**
der Videoanzeigebildschirm zwischen den Positionen nicht in Gebrauch und in Gebrauch durch eine motorisierte Aktion verschiebbar ist; und
der Videoanzeigebildschirm automatisch zu der Gebrauchposition als Reaktion auf ein Auslöseereignis ausfahrbar ist, wobei das Auslöseereignis mindestens eins aufweist von: (a) Einkuppeln eines Rückwärtsgangs des Fahrzeugs, (b) Annäherung eines Wegpunkts einer programmierten Route eines Navigationssystems, und (c) einen Fahrzeugzustand, der Erzeugung einer Warnung an den Fahrer des Fahrzeugs erfordert.

2. Innenrückspiegelsystem nach Anspruch 1, bei dem der Videoanzeigebildschirm an mindestens einem Schiebeelement angebracht ist, das in Bezug zu dem Gehäuse verschiebbar ist.

3. Innenrückspiegelsystem nach Anspruch 2, bei dem das mindestens eine Schiebeelement entlang oder innerhalb eines Schiebeblocks verschiebbar ist, der innerhalb des Gehäuses angebracht ist.

4. Innenrückspiegelsystem nach einem vorhergehenden Anspruch, bei dem der Videoanzeigebildschirm entlang mindestens einer innerhalb des Gehäuses positionierten Schiene angebracht ist.

5. Innenrückspiegelsystem nach einem vorhergehenden Anspruch, bei dem der Videoanzeigebildschirm im Wesentlichen in Richtung der Fahrerseite des Fahrzeugs in die Gebrauchsposition ausgefahren wird.

6. Innenrückspiegelsystem nach einem vorhergehenden Anspruch, bei dem der Videoanzeigebildschirm im Wesentlichen in Richtung der Beifahrerseite des Fahrzeugs in die Gebrauchposition ausgefahren wird.

7. Innenrückspiegelsystem nach einem vorhergehenden Anspruch, bei dem der Videoanzeigebildschirm um ein Zapfengelenk schwenkbar ist, wenn er in die Gebrauchsposition ausgefahren wird.

8. Innenrückspiegelsystem nach einem vorhergehenden Anspruch, bei dem der Videoanzeigebildschirm manuell in seine verstaute Position bewegt werden kann, selbst wenn das Auslöseereignis noch nicht abgeschlossen ist.

9. Innenrückspiegelsystem Anspruch 8, bei dem der Videoanzeigebildschirm einen Griff oder Handgriff zum manuellen Ergreifen einschließt.

10. Innenrückspiegelsystem nach einem vorhergehenden Anspruch, bei dem der Videoanzeigebildschirm in Richtung einer der Gebrauchsposition und der Position nicht in Gebrauch vorgespannt ist.

11. Innenrückspiegelsystem nach einem vorhergehenden Anspruch, bei dem der Videoanzeigebildschirm als Reaktion auf ein motorisiertes Antriebssystems ausgefahren und eingezogen wird.

12. Innenrückspiegelsystem nach Anspruch 11, bei dem das motorisierte Antriebssystem eins der Folgenden aufweist: einen linearen Stellantrieb, eine Solenoideinrichtung, eine Zahnstangeneinrichtung, einen elektrischen Antriebsmotor, einen Elektromotor ohne Anker, eine Formgedächtnislegierungseinrichtung, eine elektrisch induzierte Spannungsdehnungseinrichtung und ein Biomaterial.

13. Innenrückspiegelsystem nach einem vorhergehenden Anspruch, bei dem der Videoanzeigebildschirm als Reaktion auf ein das Auslöseereignis anzeigendes Signal ausgefahren wird.

14. Innenrückspiegelsystem nach einem vorhergehenden Anspruch, bei dem das Auslöseereignis manuell als Reaktion auf eine manuelle Eingabe außer Kraft gesetzt werden kann.

15. Innenrückspiegelsystem nach einem vorhergehenden Anspruch, bei dem der Videoanzeigebildschirm in die Position nicht in Gebrauch als Reaktion auf ein ein deaktivierendes Ereignis anzeigendes Signal eingezogen wird.

16. Innenrückspiegelsystem nach Anspruch 15, bei dem das deaktivierende Ereignis mindestens eins aufweist von: (a) Auskupplung des Rückwärtsgangs des Fahrzeugs; (b) Annäherung eines Wegpunkts einer programmierten Route eines Navigationssystems.

17. Innenrückspiegelsystem nach einem der Ansprüche 15 oder 16, bei dem mindestens eins des Auslöseereignisses und des deaktivierenden Ereignisses manuell als Reaktion auf eine manuelle Eingabe außer Kraft gesetzt werden kann.

18. Innenrückspiegelsystem nach einem vorhergehenden Anspruch, das ein Einbauelement zum anpassbaren Einbauen des Gehäuses in eine innerhalb des Fahrzeugs positionierte Zusatzkonsole einschließt, wobei das Reflexionselement an dem Gehäuse positioniert ist, die Zubehörkonsole zum Aufnehmen mindestens eines elektronischen Untermoduls konfiguriert ist, wobei das mindestens eine elektronische Untermodul einen elektronischen Schaltkomplex aufweist, der mit mindestens einem elektronischen Zubehörteil verknüpft ist, und das Zubehörmodul zum Anschließen an einen Freigabeschaltkomplex konfiguriert ist, der mit dem elektronischen Schaltkomplex des mindestens einen Untermoduls gekoppelt ist.

## Revendications

1. Système de rétroviseur intérieur (10) pour un véhicule comportant :
un boîtier (12, 12');
un élément réfléchissant (16), ledit élément réfléchissant ayant un axe en longueur (40) et un axe en largeur (42) ; et
un écran d'affichage vidéo monté de manière coulissante au niveau dudit boîtier et pouvant coulisser dans une direction généralement parallèle par rapport audit axe en longueur dudit élément réfléchissant entre une position de non-utilisation, dans laquelle ledit écran d'affichage vidéo est rentré au niveau dudit boîtier, et une position d'utilisation, dans laquelle ledit écran d'affichage vidéo est dans une large mesure sorti latéralement en provenance d'un côté dudit boîtier à des fins de visualisation par un occupant du véhicule, **caractérisé en ce que** :
ledit écran d'affichage vidéo peut coulisser entre ladite position de non-utilisation et ladite position d'utilisation par une action motorisée ; et
ledit écran d'affichage vidéo pouvant être sorti automatiquement sur ladite position d'utilisation en réaction à un événement de déclenchement, ledit événement de déclenchement comportant au moins un événement parmi (a) un embrayage d'une marche arrière du véhicule, (b) une approche d'un point de cheminement d'une trajectoire programmée d'un système de navigation, et (c) une condition de véhicule nécessitant la production d'un signal d'alerte à l'attention du conducteur du véhicule.

2. Système de rétroviseur intérieur selon la revendication 1, dans lequel ledit écran d'affichage vidéo est monté sur au moins un organe coulissant qui peut coulisser par rapport audit boîtier.

3. Système de rétroviseur intérieur selon la revendication 2, dans lequel ledit au moins un organe coulissant peut coulisser le long ou à l'intérieur d'un bloc coulissant monté à l'intérieur dudit boîtier.

4. Système de rétroviseur intérieur selon l'une quelconque des revendications précédentes, dans lequel ledit écran d'affichage vidéo peut se déplacer le long d'au moins un rail positionné à l'intérieur dudit boîtier.

5. Système de rétroviseur intérieur selon l'une quelconque des revendications précédentes, dans lequel ledit écran d'affichage vidéo est dans une large mesure sorti vers le côté conducteur du véhicule dans ladite position d'utilisation.

6. Système de rétroviseur intérieur selon l'une quelconque des revendications précédentes, dans lequel ledit écran d'affichage vidéo est dans une large mesure sorti vers le côté passager du véhicule dans ladite position d'utilisation.

7. Système de rétroviseur intérieur selon l'une quelconque des revendications précédentes, dans lequel ledit écran d'affichage vidéo peut être pivoté autour d'une articulation à pivot quand il est sorti jusque sur ladite position d'utilisation.

8. Système de rétroviseur intérieur selon l'une quelconque des revendications précédentes, dans lequel ledit écran d'affichage vidéo peut être déplacé manuellement jusque sur sa position rentrée même quand ledit événement de déclenchement n'est pas encore terminé.

9. Système de rétroviseur intérieur selon la revendication 8, dans lequel ledit écran d'affichage vidéo comprend une griffe ou une poignée permettant de le saisir manuellement.

10. Système de rétroviseur intérieur selon l'une quelconque des revendications précédentes, dans lequel ledit écran d'affichage vidéo est biaisé vers l'une quelconque de ladite position d'utilisation et de ladite position de non-utilisation.

11. Système de rétroviseur intérieur selon l'une quelconque des revendications précédentes, dans lequel ledit écran d'affichage vidéo est sorti et rentré en réaction à un système d'entraînement motorisé.

12. Système de rétroviseur intérieur selon la revendication 11, dans lequel ledit système d'entraînement motorisé comporte l'un quelconque parmi un actionneur linéaire, un dispositif à solénoïde, un dispositif à crémaillère, un moteur d'entraînement électrique, un moteur électrique sans induit, un dispositif à alliage à mémoire de forme, un dispositif de contraintes et de déformations induites électriquement et un biomatériau.

13. Système de rétroviseur intérieur selon l'une quelconque des revendications précédentes, dans lequel ledit écran d'affichage vidéo est sorti en réaction à un signal indiquant ledit événement de déclenchement.

14. Système de rétroviseur intérieur selon l'une quelconque des revendications précédentes, dans lequel ledit événement de déclenchement peut être annulé manuellement en réaction à une entrée manuelle.

15. Système de rétroviseur intérieur selon l'une quelconque des revendications précédentes, dans lequel ledit écran d'affichage vidéo est rentré jusque sur ladite position de non-utilisation en réaction à un signal indiquant un événement de désactivation.

16. Système de rétroviseur intérieur selon la revendication 15, dans lequel ledit événement de désactivation comporte au moins un événement parmi (a) un débrayage de la marche arrière du véhicule ; (b) une approche d'un point de cheminement d'une trajectoire programmée du système de navigation.

17. Système de rétroviseur intérieur selon la revendication 15 ou la revendication 16, dans lequel au moins l'un quelconque dudit événement de déclenchement et dudit événement de désactivation peut être annulé manuellement en réaction à une entrée manuelle.

18. Système de rétroviseur intérieur selon l'une quelconque des revendications précédentes comprenant un organe de montage permettant de monter par ajustement ledit boîtier sur une console d'accessoires se trouvant à l'intérieur du véhicule, dans lequel ledit élément réfléchissant est positionné au niveau dudit boîtier, ladite console d'accessoires est configurée pour recevoir au moins un sous-module électronique, ledit au moins un sous-module électronique ayant des circuits électroniques associés à au moins un accessoire électronique, ledit module d'accessoires étant configuré à des fins de connexion pour activer les circuits assurant l'interface avec lesdits circuits électroniques dudit au moins un sous-module.
